(19) Europäisches Patentamt

European Patent Office

Office européen des brevets

(11) **EP 4 671 732 A1**

(12) **EUROPEAN PATENT APPLICATION**

(43) Date of publication:
**31.12.2025 Bulletin 2026/01**

(21) Application number: 25185678.7

(22) Date of filing: **26.06.2025**

(51) International Patent Classification (IPC):
***G01N 15/1434*** *(2024.01)*

(52) Cooperative Patent Classification (CPC):
**G01N 15/1434; G01N 15/1433; G01N 15/147;**
G01N 15/00; G01N 2015/0003; G01N 2015/1006;
G01N 2015/1027; G01N 2015/1438;
G01N 2015/144

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024 US 202463665875 P**

(71) Applicant: **BECTON, DICKINSON AND COMPANY
Franklin Lakes NJ 07417-1880 (US)**

(72) Inventors:
• **Petersen, Timothy W.
Seattle, 98177 (US)**
• **Owsley, Keegan
Campbell, 95008 (US)**
• **Wei, Lingjie Li
Milpitas, 95035 (US)**
• **Dembski, Kyle Thomas
Scotts Valley, 95066 (US)**

(74) Representative: **Bals & Vogel Patentanwälte
PartGmbB
Konrad-Zuse-Str. 4
44801 Bochum (DE)**

(54) **METHODS FOR DETERMINING POSITIONAL FLOW STREAM VELOCITY AND SYSTEMS FOR SAME**

(57)     Aspects of the present disclosure include methods for determining positional velocity of a particle in a flow stream of a particle analyzer. Methods according to certain embodiments include irradiating a sample having a particle in a flow stream of a particle analyzer with a first laser in a first interrogation region and a second laser in a second interrogation region, detecting light from the irradiated particle by a first photodetector channel in the first interrogation region and by a second photodetector channel in the second interrogation region, calculating a velocity of the particle in the flow stream based on the light detected by the first photodetector and by the second photodetector, determining a parameter of the particle in the flow stream and calculating a positional velocity of the particle in the flow stream based on the calculated velocity and the parameter of the particle. Systems and non-transitory computer-readable storage media configured to carry out the subject methods are also provided.

FIG. 1A

EP 4 671 732 A1

FIG. 1B

FIG. 1C

**Description**

**CROSS-REFERENCE TO RELATED APPLICATION**

Pursuant to 35 U.S.C. § 119 (e), this application claims priority to the filing date of United States Provisional Patent Application Serial No. 63/665,875 filed on June 28, 2024, the disclosure of which application is incorporated herein by reference in its entirety.

**INTRODUCTION**

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

Isolation of biological particles has been achieved by adding a sorting or collection capability to flow cytometers. Particles in a segregated stream, detected as having one or more desired characteristics, are individually isolated from the sample stream by mechanical or electrical removal. A common flow sorting technique utilizes drop sorting in which a fluid stream containing linearly segregated particles is broken into drops. The drops containing particles of interest are electrically charged and deflected into a collection tube by passage through an electric field. Typically, the linearly segregated particles in the stream are characterized as they pass through an observation point situated just below the nozzle tip. Once a particle is identified as meeting one or more desired criteria, the time at which it will reach the drop break-off point and break from the stream in a drop can be predicted. Ideally, a brief charge is applied to the fluid stream just before the drop containing the selected particle breaks from the stream and then grounded immediately after the drop breaks off. The drop to be sorted maintains an electrical charge as it breaks off from the fluid stream, and all other drops are left un-charged.

Many flow cytometers move cells through a number of lasers and measure the light resulting from the cell-laser interaction. To minimize laser crosstalk and to limit baseline noise, most modern cytometers only make electronic measurements when a cell is interacting, or about to interact, with a given laser. To make this technique possible, one most know and control for the transit time of the cell between lasers. For fluid flow in a channel, temperature variation causes changes in the fluid viscosity. In general, one can measure the temperature of the fluid to predict changes in particle flow rate, but these measurements are secondhand indicators at best.

**SUMMARY**

The inventors realized that when particles in a flow stream in a flow cytometer move through lasers, the cell-laser interactions generate laser crosstalk as well as baseline noise. In addition, flow cytometers are only able to make electronic measurements when a cell is interacting or about to interact with a laser beam. To accurately irradiate a passing particle, the transit time of the particle in the flow stream between lasers must be precisely determined. Temperature fluctuations of the flow stream can cause variations in the velocity due to changing fluid viscosity. Embodiments of the present disclosure address the above, among other problems. The inventors have determined that light emitted from particles in the flow stream can be accurately measured by precise irradiation of the passing particles. The inventors have determined that the position of the particles can be predicted based on the positional velocity of the particle in the flow stream. In certain embodiments, the subject methods account for positional variations of the particle flow and do not rely on second-hand indicators (e.g., temperature of the flow stream) to precisely measure the position of a particle in the flow stream. Embodiments of the present disclosure minimize laser crosstalk, baseline noise generation and can provide information about laser drift (e.g., whether one laser is drifting relative to another laser). In addition, using positional velocity to adaptively adjust laser delays reduces the need for long window extensions which further reduces baseline noise in data signals. Having individual measurements for all of the lasers of the system allows for determining the average velocity of the flow stream which can be used for stabilization so that velocity changes to the flow stream (e.g., due to fluctuating temperature) are minimized.

Aspects of the present disclosure include methods for determining positional velocity of a particle in a flow stream of a particle analyzer. Methods according to certain embodiments include irradiating a sample having a particle in a flow stream of a particle analyzer with a first laser in a first interrogation region and a second laser in a second interrogation region, detecting light from the irradiated particle by a first photodetector channel in the first interrogation region and by a second photodetector channel in the second interrogation region, calculating a velocity of the particle in the flow stream based on the light detected by the first photodetector and by the second photodetector, determining a parameter of the particle in the flow stream and calculating a positional velocity of the particle in the flow stream based on the calculated velocity and the parameter of the particle. Systems and non-transitory computer-readable storage media configured to carry out the subject methods are also provided.

In some embodiments, the positional velocity of a particle is calculated based on the distance of the particle from the center of the flow stream. In some instances, the parameter is a center of mass (COM) parameter of the particle in the flow stream. In some instances, the center of mass parameter is calculated from a generated image of the particle in the flow stream. In some embodiments, the second interrogation region is at a position downstream from the first interrogation region, such as at a position that is 200 $\mu$m or less downstream from the first interrogation region, such as 150 $\mu$m or less and including at a position that is 100 $\mu$m or less downstream from the first interrogation region.

In some embodiments, methods include detecting light from the particle by the first photodetector and generating a first photodetector signal pulse in response to the light emitted by the particle in the first interrogation region and detecting light from the particle by the second photodetector and generating a second photodetector signal pulse in response to the light emitted by the particle in the second interrogation region. In some embodiments, each of the signal pulses are voltage pulses outputted in each photodetector channel. In some embodiments, the signal pulses in each photodetector channel are generated from scattered light from the irradiated particle. In certain embodiments, the signal pulse in the first photodetector channel is generated in response to scattered light from each particle irradiated by the first laser and the signal pulse in the second photodetector channel is generated in response to scattered light from each particle irradiated by the second laser. In some instances, the particle is irradiated with a trigger laser and a trigger signal is generated in response to irradiation of the particle by the trigger laser. In certain instances, the first laser is the trigger laser and a trigger signal is generated by the first photodetector (e.g., in the first photodetector channel).

To calculate the velocity of the particle in the flow stream in some instances, an amount of time between the photodetector signal pulses is determined. In other instances, a time-to-peak between the photodetector signal pulses is determined. In some instances, the velocity of each particle in the flow stream is calculated based on the amount of time between the first photodetector signal pulse and the second photodetector signal pulse and the distance between the interrogation region of the first laser and the interrogation region of the second laser. In other instances, the velocity of each particle in the flow stream is calculated based on the time-to-peak between the first photodetector signal pulse and the second photodetector signal pulse and the distance between the interrogation region of the first laser and the interrogation region of the second laser.

In embodiments, the positional velocity of the particle in the flow stream is determined. In some instances, the position of the particle in the flow stream is determined. In some instances, the position of the particle with respect to the center of the flow stream is determined. In some instances, the velocity of the particle depends on the distance of the particle from the center of the flow stream. In some instances, the particle has a greater velocity when the particle is closer to the center of the flow stream. In some instances, the particle has a lower velocity when the particle is farther from the center of the flow stream. In some instances, a center of mass parameter of the particle is calculated for each particle. In some instances, the position of the particle with respect to the center of the flow stream is determined based on the calculated center of mass parameter. In some instances, the positional velocity of the particle is determined based on the calculated velocity of the particle and the center of mass parameter.

In some embodiments, methods include irradiating a particle in the flow stream with a plurality of lasers in a plurality of different interrogation regions, detecting light from the irradiated particle by a plurality of photodetector channels, generating a photodetector signal pulse in response to the light detected by each of the photodetector channels, calculating a velocity of the particle in the flow stream based on photodetector signal pulses in two or more of the photodetector channels, determining a parameter of the particle in the flow stream (e.g., a center of mass parameter) and calculating a positional velocity of the particle in the flow stream based on the calculated velocity and parameter of the particle. In some instances, each of the lasers is configured to irradiate the flow stream at interrogation regions that are spaced apart from each other by 200 $\mu$m or less, such as by 150 $\mu$m or less and including by 100 $\mu$m or less. In some instances, the plurality of lasers include a second laser configured to irradiate the flow stream at a position downstream from the first laser, a third laser configured to irradiate the flow stream at a position downstream from the second laser, a fourth laser configured to irradiate the flow stream at a position downstream from the third laser and a fifth laser configured to irradiate the flow stream at a position downstream from the fourth laser.

In some embodiments, an average velocity of the particle is calculated between two or more of the plurality of interrogation regions. In some instances, methods include calculating an average velocity between three or more interrogation regions, such as 4 or more and including between 5 or more interrogation regions. In some instances, methods include assessing the velocity between each of the interrogation regions to determine if there are outlier velocities between one or more of the interrogation regions. In some instances, methods include comparing the average velocity between the interrogation regions and assessing whether the velocity between any two different interrogation regions is an outlier velocity.

In some embodiments, the timing of irradiation by each of the lasers is calculated. In some instances, methods include adjusting the timing of irradiation by one or more of the lasers based on the calculated velocity of the particle in the flow stream. In some instances, the timing of irradiation by one or more of the lasers is adjusted based on the average velocity calculated for the particle in the flow stream. In some instances, the timing of irradiation by one or more of the lasers is adjusted based the calculated positional velocity of particles in the flow stream.

In some embodiments, the particle analyzer includes a flow cell having a flow cell nozzle for generating a droplet containing each particle in the sample, such as for sorting particles of the sample. In some embodiments, methods include determining a laser delay of one or more of the lasers based on the calculated positional velocity of the particle. In some instances, methods include adjusting the laser delay for one or more of the lasers based on one or more of the calculated velocity of each particle in the flow stream, the center of mass parameter, the calculated positional velocity and the laser delay. In certain instances, methods include adjusting the laser delay for one or more of the lasers based on the positional velocity of the particle.

In some embodiments, a drop delay is determined for each particle based on the calculated a positional velocity of the particle. In some instances, methods include adjusting the drop delay for each particle based on one or more of the calculated velocity of each particle in the flow stream, the center of mass parameter, the calculated positional velocity and the calculated drop delay.

In some embodiments, one or more parameters of the particle analyzer is adjusted based on one or more of the calculated velocity of each particle in the flow stream, the center of mass parameter, the calculated positional velocity and the calculated drop delay. In some embodiments, the parameter of the particle analyzer is a timing of one or more of the lasers (e.g., the second laser). In some instances, methods include adjusting the timing of irradiation by one or more of the lasers based on one or more of the calculated velocity of each particle in the flow stream, the center of mass parameter, the calculated positional velocity. In certain instances, methods include adjusting the timing of irradiation by one or more of the lasers based on the positional velocity. In some instances, the flow rate of the flow stream is increased. In some instances, the flow rate of the flow stream is decreased. In some instances, the flow stream includes a sheath fluid flow and a sample core stream flow and one or more of the sheath fluid flow and the sample core stream flow is adjusted based on one or more of the calculated velocity of each particle in the flow stream, the center of mass parameter and the calculated positional velocity. In some embodiments, methods include adjusting the timing of droplet charging based on one or more of the calculated velocity of each particle in the flow stream, the center of mass parameter, the calculated positional velocity and the calculated drop delay.

Aspects of the present disclosure also include systems (e.g., particle analyzers) for practicing the subject methods. Systems according to certain embodiments include a light source having at least a first laser and a second laser, wherein the light source is configured to irradiate a sample having a plurality of particles in a flow stream with the first laser in a first interrogation region and the second laser in a second interrogation region, a light detection system comprising a photodetector configured to detect light from each particle in the sample by a first photodetector and by a second photodetector and a processor having memory operably coupled to the processor where the memory includes instructions stored thereon, which when executed by the processor, cause the processor to calculate a velocity of the particle in the flow stream based on the light detected in the first photodetector channel and the second photodetector channel, determine a parameter of the particle in the flow stream and calculate positional velocity of the particle in the flow stream based on the calculated velocity and parameter of the particle.

In some embodiments, the light detection system includes a plurality of photodetectors. In some instances, the photodetectors include one or more photomultiplier tubes. In some instances, the light detection system includes a photodetector array. In certain instances, one or more of the photodetectors in the array is a photodiode. In certain instances, one or more of the photodetectors in the array are charged coupled devices. In some instances, the photodetector is configured to detect fluorescence from the particle. In some instances, the photodetector is configured to detect scattered light from the particle. In certain instances, the scattered light is forward scattered light. In certain instances, the scattered light is side-scattered light. In some instances, the photodetector is a brightfield photodetector. In some instances, the photodetector is a darkfield photodetector.

In some instances, the light detection system is configured to generate at least a first photodetector signal pulse in response to the light detected in the first photodetector channel and generate a second photodetector signal pulse in response to the light detected in the second photodetector channel. In some embodiments, each of the signal pulses are voltage pulses outputted in each photodetector channel. In some embodiments, the signal pulses in each photodetector channel are generated from scattered light from the irradiated particle. In certain embodiments, the signal pulse in the first photodetector channel is generated in response to scattered light from each particle irradiated by the first laser and the signal pulse in the second photodetector channel is generated in response to scattered light from each particle irradiated by the second laser.

In some embodiments, the memory includes instructions to calculate the velocity of the particle in the flow stream by determining an amount of time between the photodetector signal pulses. In other instances, the memory includes instructions to determine a time-to-peak between the photodetector signal pulses. In some instances, the memory includes instructions to calculate the velocity of each particle in the flow stream based on the amount of time between the first photodetector signal pulse and the second photodetector signal pulse and the distance between the interrogation region of the first laser and the interrogation region of the second laser. In other instances, the memory includes instructions to calculate the velocity of each particle in the flow stream based on the time-to-peak between the first photodetector signal pulse and the second photodetector signal pulse and the distance between the interrogation region of the first laser and the interrogation region of the second laser.

In embodiments, the memory includes instructions for determining the positional velocity of the particle in the flow stream. In some instances, the memory includes instructions for determining the position of the particle in the flow stream. In some instances, the memory includes instructions for determining the position of the particle with respect to the center of the flow stream. In some instances, the memory includes instructions for calculating the velocity of the particle with respect to the distance of the particle from the center of the flow stream. In some instances, the particle has a greater velocity when the particle is closer to the center of the flow stream. In some instances, the particle has a lower velocity when the particle is farther from the center of the flow stream. In some instances, the memory includes instructions for calculating a center of mass parameter (COM) of the particle for each particle. In some instances, the memory includes instructions for generating an image of the particle in the flow stream. In some instances, the memory includes instructions for calculating the center of mass parameter from the generated image of the particle. In some instances, the memory includes instructions for determining the position of the particle with respect to the center of the flow stream based on the calculated center of mass parameter. In some instances, the memory includes instructions for determining the positional velocity of the particle based on the calculated velocity of the particle and the center of mass parameter.

In some embodiments, the memory includes instructions for irradiating a particle in the flow stream with a plurality of lasers in a plurality of different interrogation regions, instructions for detecting light from the irradiated particle by a plurality of photodetector channels, generating a photodetector signal pulse in response to the light detected by each of the photodetector channels, instructions for calculating a velocity of the particle in the flow stream based on photodetector signal pulses in two or more of the photodetector channels, instructions for determining a parameter of the particle in the flow stream (e.g., a center of mass parameter) and instructions for calculating a positional velocity of the particle in the flow stream based on the calculated velocity and parameter of the particle. In some instances, each of the lasers is configured to irradiate the flow stream at interrogation regions that are spaced apart from each other by 200 $\mu$m or less, such as by 150 $\mu$m or less and including by 100 $\mu$m or less. In some instances, the light source includes a plurality of lasers, such as 3 or more, such as 4 or more and including 5 or more lasers. In some instances, the light source includes a trigger laser configured to generate a trigger signal by the light detection system when the particle in the flow stream is irradiated with the trigger laser. In some instances, the plurality of lasers include a second laser configured to irradiate the flow stream at a position downstream from the first laser, a third laser configured to irradiate the flow stream at a position downstream from the second laser, a fourth laser configured to irradiate the flow stream at a position downstream from the third laser and a fifth laser configured to irradiate the flow stream at a position downstream from the fourth laser.

In some embodiments, the memory includes instructions for calculating an average velocity of the particle between two or more of the plurality of interrogation regions. In some instances, the memory includes instructions for calculating an average velocity between three or more interrogation regions, such as 4 or more and including between 5 or more interrogation regions. In some instances, the memory includes instructions for assessing the velocity between each of the interrogation regions to determine if there are outlier velocities between one or more of the interrogation regions. In some instances, the memory includes instructions for comparing the average velocity between the interrogation regions and instructions for assessing whether the velocity between any two different interrogation regions is an outlier velocity.

In some embodiments, the memory includes instructions for determining a laser delay of one or more of the lasers based on the calculated positional velocity of the particle. In some instances, the memory includes instructions for adjusting the laser delay for one or more of the lasers based on one or more of the calculated velocity of each particle in the flow stream, the center of mass parameter, the calculated positional velocity and the laser delay. In certain instances, the memory includes instructions for adjusting the laser delay for one or more of the lasers based on the positional velocity of the particle.

In some embodiments, the memory includes instructions for calculating timing of irradiation by each of the lasers. In some instances, the memory includes instructions for adjusting the timing of irradiation by one or more of the lasers based on the calculated velocity of the particle in the flow stream. In some instances, the memory includes instructions for adjusting timing of irradiation by one or more of the lasers based on the average velocity calculated for the particle in the flow stream. In some instances, the memory includes instructions for adjusting the timing of irradiation by one or more of the lasers based the calculated positional velocity of particles in the flow stream.

In some embodiments, the particle analyzer includes a flow cell having a flow cell nozzle for generating a droplet containing each particle in the sample, such as for sorting particles of the sample. In some embodiments, the memory includes instructions for determining drop delay for each particle based on the calculated a positional velocity of the particle. In some instances, the memory includes instructions for adjusting the drop delay for each particle based on one or more of the calculated velocity of each particle in the flow stream, the center of mass parameter, the calculated positional velocity and the calculated drop delay.

In some embodiments, the memory includes instructions for adjusting one or more parameters of the particle analyzer based on one or more of the calculated velocity of each particle in the flow stream, the center of mass parameter, the calculated positional velocity and the calculated drop delay. In some instances, the parameter is a timing of one or more of the lasers (e.g., the second laser) In some instances, the memory includes instructions to increase the flow rate of the flow stream. In some instances, the memory includes instructions to decrease the flow rate of the flow stream. In some instances, the flow stream includes a sheath fluid flow and a sample core stream flow and the memory includes instructions for adjusting one or more of the sheath fluid flow and the sample core stream flow based on one or more of the calculated velocity of each particle in the flow stream, the center of mass parameter and the calculated positional velocity. In some embodiments, the memory includes instructions to adjust the timing of droplet charging based on one or more of the calculated velocity of each particle in the flow stream, the center of mass parameter, the calculated positional velocity and the calculated drop delay. In some instances, the memory includes instructions to adjust the timing of irradiation by one or more of the lasers based on one or more of the calculated velocity of each particle in the flow stream, the center of mass parameter, the calculated positional velocity.

Aspects of the present disclosure also include non-transitory computer readable storage medium, such as to practice one or more computer implemented methods described herein. In some embodiments, the non-transitory computer readable storage medium includes algorithm for irradiating a sample comprising a particle in a flow stream of a particle analyzer with a first laser in a first interrogation region and a second laser in a second interrogation region, algorithm for detecting light from the irradiated particle by a first photodetector in the first interrogation region and in a second photodetector in the second interrogation region, algorithm for calculating a velocity of the particle in the flow stream based on the light detected in the first photodetector channel and the second photodetector channel, algorithm for determining a parameter of the particle in the flow stream and algorithm for calculating a positional velocity of the particle in the flow stream based on the calculated velocity and parameter of the particle.

In some embodiments, the non-transitory computer readable storage medium includes algorithm to calculate the velocity of the particle in the flow stream by determining an amount of time between the photodetector signal pulses. In other instances, the non-transitory computer readable storage medium includes algorithm to determine a time-to-peak between the photodetector signal pulses. In some instances, the non-transitory computer readable storage medium includes algorithm to calculate the velocity of each particle in the flow stream based on the amount of time between the first photodetector signal pulse and the second photodetector signal pulse and the distance between the interrogation region of the first laser and the interrogation region of the second laser. In other instances, the non-transitory computer readable storage medium includes algorithm to calculate the velocity of each particle in the flow stream based on the time-to-peak between the first photodetector signal pulse and the second photodetector signal pulse and the distance between the interrogation region of the first laser and the interrogation region of the second laser.

In embodiments, the non-transitory computer readable storage medium includes algorithm for determining the positional velocity of the particle in the flow stream. In some instances, the non-transitory computer readable storage medium includes algorithm for determining the position of the particle in the flow stream. In some instances, the non-transitory computer readable storage medium includes algorithm for determining the position of the particle with respect to the center of the flow stream. In some instances, the non-transitory computer readable storage medium includes algorithm for calculating the velocity of the particle with respect to the distance of the particle from the center of the flow stream. In some instances, the particle has a greater velocity when the particle is closer to the center of the flow stream. In some instances, the particle has a lower velocity when the particle is farther from the center of the flow stream. In some instances, the non-transitory computer readable storage medium includes algorithm for calculating a center of mass parameter (COM) of the particle for each particle. In some instances, the non-transitory computer readable storage medium includes algorithm for generating an image of the particle in the flow stream. In some instances, the non-transitory computer readable storage medium includes algorithm for calculating the center of mass parameter from the generated image of the particle. In some instances, the non-transitory computer readable storage medium includes algorithm for determining the position of the particle with respect to the center of the flow stream based on the calculated center of mass parameter. In some instances, the non-transitory computer readable storage medium includes algorithm for determining the positional velocity of the particle based on the calculated velocity of the particle and the center of mass parameter.

In some embodiments, the non-transitory computer readable storage medium includes algorithm for irradiating a particle in the flow stream with a plurality of lasers in a plurality of different interrogation regions, algorithm for detecting light from the irradiated particle by a plurality of photodetector channels, generating a photodetector signal pulse in response to the light detected by each of the photodetector channels, algorithm for calculating a velocity of the particle in the flow stream based on photodetector signal pulses in two or more of the photodetector channels, instructions for determining a parameter of the particle in the flow stream (e.g., a center of mass parameter) and algorithm for calculating a positional velocity of the particle in the flow stream based on the calculated velocity and parameter of the particle.

In some embodiments, the non-transitory computer readable storage medium includes algorithm for calculating an average velocity of the particle between two or more of the plurality of interrogation regions. In some instances, the non-transitory computer readable storage medium includes algorithm for calculating an average velocity between three or more interrogation regions, such as 4 or more and including between 5 or more interrogation regions. In some instances, the non-transitory computer readable storage medium includes algorithm for assessing the velocity between each of the interrogation regions to determine if there are outlier velocities between one or more of the interrogation regions. In some instances, the non-transitory computer readable storage medium includes algorithm for comparing the average velocity between the interrogation regions and instructions for assessing whether the velocity between any two different interrogation regions is an outlier velocity.

In some embodiments, the non-transitory computer readable storage medium includes algorithm for determining a laser delay of one or more of the lasers based on the calculated positional velocity of the particle. In some instances, the non-transitory computer readable storage medium includes algorithm for adjusting the laser delay for one or more of the lasers based on one or more of the calculated velocity of each particle in the flow stream, the center of mass parameter, the calculated positional velocity and the laser delay. In certain instances, the non-transitory computer readable storage medium includes algorithm for adjusting the laser delay for one or more of the lasers based on the positional velocity of the particle.

In some embodiments, the non-transitory computer readable storage medium includes algorithm for calculating timing of irradiation by each of the lasers. In some instances, the non-transitory computer readable storage medium includes algorithm for adjusting the timing of irradiation by one or more of the lasers based on the calculated velocity of the particle in the flow stream. In some instances, the non-transitory computer readable storage medium includes algorithm for adjusting timing of irradiation by one or more of the lasers based on the average velocity calculated for the particle in the flow stream. In some instances, the non-transitory computer readable storage medium includes algorithm for adjusting the timing of irradiation by one or more of the lasers based on the calculated positional velocity of particles in the flow stream.

In some embodiments, the non-transitory computer readable storage medium includes algorithm for determining drop delay for each particle based on the calculated positional velocity of the particle. In some instances, the non-transitory computer readable storage medium includes algorithm for adjusting the drop delay for each particle based on one or more of the calculated velocity of each particle in the flow stream, the center of mass parameter, the calculated positional velocity and the calculated drop delay. In some embodiments, the non-transitory computer readable storage medium includes algorithm for adjusting one or more parameters of the particle analyzer based on one or more of the calculated velocity of each particle in the flow stream, the center of mass parameter, the calculated positional velocity and the calculated drop delay. In some instances, the non-transitory computer readable storage medium includes algorithm to increase the flow rate of the flow stream. In some instances, the non-transitory computer readable storage medium includes algorithm to decrease the flow rate of the flow stream. In some instances, the flow stream includes a sheath fluid flow and a sample core stream flow and the non-transitory computer readable storage medium includes algorithm for adjusting one or more of the sheath fluid flow and the sample core stream flow based on one or more of the calculated velocity of each particle in the flow stream, the center of mass parameter and the calculated positional velocity. In some embodiments, the non-transitory computer readable storage medium includes algorithm to adjust the timing of droplet charging based on one or more of the calculated velocity of each particle in the flow stream, the center of mass parameter, the calculated positional velocity and the calculated drop delay. In some instances, the non-transitory computer readable storage medium includes algorithm to adjust the timing of irradiation by one or more of the lasers based on one or more of the calculated velocity of each particle in the flow stream, the center of mass parameter, the calculated positional velocity.

## BRIEF DESCRIPTION OF THE FIGURES

The disclosure may be best understood from the following detailed description when read in conjunction with the accompanying drawings. Included in the drawings are the following figures:

FIG. 1A depicts a flow chart for calculating position velocity of a particle in a flow stream according to certain embodiments. FIG. 1B depicts the generation of signal pulses in response to irradiation of a particle using five spatially separated lasers according to certain embodiments. FIG. 1C depicts a measure of positional dependence of the velocity of a particle in a flow stream according to certain embodiments.

FIG. 2 presents a flow cytometric system according to certain embodiments.

FIG. 3 depicts an image-enabled particle sorter according to certain embodiments.

**FIG.** 4 depicts a functional block diagram of a particle analysis system according to certain embodiments.

**FIG.** 5 depicts a depicts a functional block diagram for one example of a control system according to certain embodiments.

**FIG. 6A-6B** depict schematic drawings of a particle sorter system according to certain embodiments.

**FIG.** 7 depicts aspects of a computer-controlled system according to certain embodiments.

## DETAILED DESCRIPTION

Aspects of the present disclosure include methods for determining positional velocity of a particle in a flow stream of a particle analyzer. Methods according to certain embodiments include irradiating a sample having a particle in a flow stream of a particle analyzer with a first laser in a first interrogation region and a second laser in a second interrogation region, detecting light from the irradiated particle by a first photodetector channel in the first interrogation region and by a second photodetector channel in the second interrogation region, calculating a velocity of the particle in the flow stream based on the light detected by the first photodetector and by the second photodetector, determining a parameter of the particle in the flow stream and calculating a positional velocity of the particle in the flow stream based on the calculated velocity and the parameter of the particle. Systems and non-transitory computer-readable storage media configured to carry out the subject methods are also provided.

Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order which is logically possible.

While the system and method has or will be described for the sake of grammatical fluidity with functional explanations, it is to be expressly understood that the claims, unless expressly formulated under 35 U.S.C. §112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. §112 are to be accorded full statutory equivalents under 35 U.S.C. §112.

# METHODS FOR DETERMINING POSITIONAL VELOCITY OF A PARTICLE IN A FLOW STREAM

Aspects of the present disclosure include methods for determining positional velocity of a particle in a flow stream of a particle analyzer (e.g., a flow cytometer). In some embodiments, the subject methods provide for minimizing crosstalk between lasers in a particle analyzer, such as where laser irradiation by a plurality of successive lasers exhibits little-to-no interference (e.g., crosstalk) or electronic noise between each other. In some instances, interference between lasers is reduced by 90% or more, such as by 95% or more, such as by 97% or more, such as by 99% or more, such as by 99.5% or more and including by 99.9% or more. In some embodiments, the methods described herein provide for increased accuracy in laser timing (i.e., timing of irradiation of the particle in the flow stream). In some embodiments, methods provide for dynamic particle velocity determination for each individual particle in the flow stream. In certain instances, the subject methods provide for individually determining the positional velocity of every particle of interest in the irradiated sample. In some instances, the improved accuracy of laser timing and measurement of positional velocity in the flow stream provides for more precise drop delays calculated for each particle. In some instances, the sorting accuracy of particles is increased such as where the particle sorting in accordance with the subject disclosure exhibits greater overall particle sort yield by 10% or more, such as by 25% or more, such as by 50% or more, such as by 75% or more, such as by 90% or more and including where the purity of the collected sample is increased by 99% or more. Methods described herein also provide for dynamic particle drop delay determination in real time and for determining a unique drop delay for each particle of interest in the sample. In certain instances, the subject methods provide for individually determining drop delay of every particle of interest in the irradiated sample. In some embodiments, particle sorting parameters can be determined and adjusted, such as in real time, without any further user intervention.

In practicing methods according to certain embodiments, a sample having a plurality of particles in the flow stream is irradiated with two or more spatially separated lasers. In some instances, particles in the flow stream are irradiated for one or more predetermined time intervals with a continuous wave light source. The term "continuous wave light source" is used herein in its conventional sense to refer to a source of light which provides uninterrupted light flux and maintains irradiation of particles in the flow stream with little to no undesired changes in light intensity. In some embodiments, the continuous light source emits non-pulsed or non-stroboscopic irradiation. In certain embodiments, the continuous light source provides for substantially constant emitted light intensity. For instance, the continuous light source may provide for emitted light intensity during a time interval of irradiation that varies by 10% or less, such as by 9% or less, such as by 8% or less, such as by 7% or less, such as by 6% or less, such as by 5% or less, such as by 4% or less, such as by 3% or less, such as by 2% or less, such as by 1% or less, such as by 0.5% or less, such as by 0.1% or less, such as by 0.01% or less, such as by 0.001% or less, such as by 0.0001% or less, such as by 0.00001% or less and including where the emitted light intensity during a time interval of irradiation varies by 0.000001% or less. The intensity of light output can be measured with any convenient protocol, including but not limited to, a scanning slit profiler, a charge coupled device (CCD, such as an intensified charge coupled device, ICCD), a positioning sensor, power sensor (e.g., a thermopile power sensor), optical power sensor, energy meter, digital laser photometer, a laser diode detector, among other types of photodetectors.

In certain embodiments, the light source is a laser, such as a pulsed or continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, $CO_2$ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject systems include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject systems include a solid-state laser, such as a ruby laser, an Nd:YAG laser, NdCrYAG laser, Er:YAG laser, Nd:YLF laser, Nd:YVO$_4$ laser, Nd:YCa$_4$O(BO$_3$)$_3$ laser, Nd:YCOB laser, titanium sapphire laser, thulim YAG laser, ytterbium YAG laser, ytterbium-m$_2$O$_3$ laser or cerium doped lasers and combinations thereof.

In some embodiments, the light source is a continuous wave laser. In some embodiments, the particles in the flow stream are irradiated for one or more predetermined time intervals with a pulsed light source. The term "pulsed light source" is used herein in its conventional sense to refer to a source of light which emits light at predetermined time intervals, each time interval having a predetermined irradiation duration (i.e., pulse width). In certain embodiments, the pulsed light source is configured to irradiate the photodetector with periodic flashes of light. For example, the frequency of each light pulse may be 0.0001 kHz or greater, such as 0.0005 kHz or greater, such as 0.001 kHz or greater, such as 0.005 kHz or greater, such as 0.01 kHz or greater, such as 0.05 kHz or greater, such as 0.1 kHz or greater, such as 0.5 kHz or greater, such as 1 kHz or greater, such as 2.5 kHz or greater, such as 5 kHz or greater, such as 10 kHz or greater, such as 25 kHz or greater, such as 50 kHz or greater and including 100 kHz or greater. In certain instances, the frequency of pulsed irradiation by the light source ranges from 0.00001 kHz to 1000 kHz, such as from 0.00005 kHz to 900 kHz, such as from 0.0001 kHz to 800 kHz, such as from 0.0005 kHz to 700 kHz, such as from 0.001 kHz to 600 kHz, such as from 0.005 kHz to 500 kHz, such as from 0.01 kHz to 400 kHz, such as from 0.05 kHz to 300 kHz, such as from 0.1 kHz to 200 kHz and including from 1 kHz to 100 kHz. The duration of light irradiation for each light pulse (i.e., pulse width) may vary and may be 0.000001 ms or more, such as 0.000005 ms or more, such as 0.00001 ms or more, such as 0.00005 ms or more, such as 0.0001 ms or more, such as 0.0005 ms or more, such as 0.001 ms or more, such as 0.005 ms or more, such as 0.01 ms or more, such as 0.05 ms or more, such as 0.1 ms or more, such as 0.5 ms or more, such as 1 ms or more, such as 2 ms or more, such as 3 ms or more, such as 4 ms or more, such as 5 ms or more, such as 10 ms or more, such as 25 ms or more, such as 50 ms or more, such as 100 ms or more and including 500 ms or more. For example, the duration of light irradiation may range from 0.000001 ms to 1000 ms, such as from 0.000005 ms to 950 ms, such as from 0.00001 ms to 900 ms, such as from 0.00005 ms to 850 ms, such as from 0.0001 ms to 800 ms, such as from 0.0005 ms to 750 ms, such as from 0.001 ms to 700 ms, such as from 0.005 ms to 650 ms, such as from 0.01 ms to 600 ms, such as from 0.05 ms to 550 ms, such as from 0.1 ms to 500 ms, such as from 0.5 ms to 450 ms, such as from 1 ms to 400 ms, such as from 5 ms to 350 ms and including from 10 ms to 300 ms.

In embodiments, the light source may be any convenient light source and may include laser and non-laser light sources. In certain embodiments, the light source is a non-laser light source, such as a narrow band light source emitting a particular wavelength or a narrow range of wavelengths. In some instances, the narrow band light sources emit light having a narrow range of wavelengths, such as for example, 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Any convenient narrow band light source protocol may be employed, such as a narrow wavelength LED.

In other embodiments, the light source is a broadband light source, such as a broadband light source coupled to one or more optical bandpass filters, diffraction gratings, monochromators or any combination thereof. In some instances, the broadband light source emits light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Any convenient broadband light source protocol may be employed, such as a halogen lamp, deuterium arc lamp, xenon arc lamp, stabilized fiber-coupled broadband light source, a broadband LED with continuous spectrum, superluminescent emitting diode, semiconductor light emitting diode, wide spectrum LED white light source, an multi-LED integrated white light source, among other broadband light sources or any combination thereof. In certain embodiments, light sources include an array of LEDs. In certain instances, the light source includes a plurality of monochromatic light emitting diodes where each monochromatic light emitting diode outputs light having a different wavelength. In some instances, the light source includes a plurality of polychromatic light emitting diodes outputting light having a predetermined spectral width, such as where the plurality of polychromatic light emitting diodes collectively output light having a spectral width that ranges from 200 nm to 1500 nm, such as from 225 nm to 1475 nm, such as from 250 nm to 1450 nm, such as from 275 nm to 1425 nm, such as from 300 nm to 1400 nm, such as from 325 nm to 1375 nm, such as from 350 nm to 1350 nm, such as from 375 nm to 1325 nm, such as from 400 nm to 1300 nm, such as from 425 nm to 1275 nm, such as from 450 nm to 1250 nm, such as from 475 nm to 1225 nm and including from 500 nm to 1200 nm.

In some embodiments, the light source is a narrow bandwidth light source. In some instance, the light source is a light source that outputs a specific wavelength from 200 nm to 1500 nm, such as from 250 nm to 1250 nm, such as from 300 nm to 1000 nm, such as from 350 nm to 900 nm and including from 400 nm to 800 nm. In certain embodiments, the continuous wave light source emits light having a wavelength of 365 nm, 385 nm, 405 nm, 460 nm, 490 nm, 525 nm, 550 nm, 580 nm, 635 nm, 660 nm, 740 nm, 770 nm or 850 nm.

In some embodiments, the light source emits light having wavelengths that overlap, such as where the output spectrum of one or more components of the lights source overlap by 1 nm or more, such as by 2 nm or more, such as by 3 nm or more, such as by 4 nm or more, such as by 5 nm or more, such as by 6 nm or more, such as by 7 nm or more, such as by 8 nm or more, such as by 9 nm or more, such as by 10 nm or more and including by 20 nm or more. In some embodiments, the wavelengths of light emitted by the light sources exhibit no overlap. For example, the output spectrum of the light sources may be separated by 1 nm or more, such as by 2 nm or more, such as by 3 nm or more, such as by 4 nm or more, such as by 5 nm or more, such as by 6 nm or more, such as by 7 nm or more, such as by 8 nm or more, such as by 9 nm or more, such as by 10 nm or more and including by 20 nm or more.

In embodiments, particles in the flow stream are irradiated with 2 or more spatially separated light sources, such as 3 or more, such as 4 or more, such as 5 or more, such as 6 or more and including 7 or more spatially separated light sources. In some embodiments, one or more light sources are lasers and particles in the flow stream are irradiated with one or more spatially separated lasers, such as 2 or more, such as 3 or more, such as 4 or more, such as 5 or more, such as 6 or more and including 7 or more spatially separate laser. As described in greater detail below, each light source is configured to irradiate distinct positions on the flow stream. In some instances, each of the light sources is configured to independently irradiate positions on the flow stream that are spaced apart from each other by 0.01 $\mu$m or more, such as by 0.05 $\mu$m or

more, such as by 0.1 μm or more, such as by 0.5 μm or more, such as by 1 μm or more, such as by 2 μm or more, such as by 3 μm or more, such as by 4 μm or more, such as by 5 μm or more, such as by 10 μm or more, such as by 15 μm or more, such as by 25 μm or more, such as by 50 μm or more, such as by 100 μm or more, such as by 150 μm or more, such as by 200 μm or more, such as by 250 μm or more, such as by 500 μm or more, such as by 750 μm or more and including by 1000 μm or more. For example, each of the light sources is configured to independently irradiate positions on the flow stream that are spaced apart from each other by a distance of from 0.01 μm to 2500 μm, such as from 0.05 μm to 2000 μm, such as from 0.1 μm to 1500 μm, such as from 0.5 μm to 1000 μm, such as from 1 μm to 500 μm, such as from 5 μm to 400 μm and including from 10 μm to 100 μm. In certain instances, each of the light sources is configured to independently irradiate positions on the flow stream that are spaced apart from each other by 10 μm or less, such as 9 μm or less, such as 8 μm or less, such as 7 μm or less, such as 6 μm or less and including positions on the flow stream that are spaced apart by 5 μm or less.

In some embodiments, methods include irradiating particles in the flow stream with a first laser in a first interrogation region and a second laser in a second interrogation region. The size of each interrogation region may vary depending on the properties of the flow nozzle used to generate the flow stream, such as the size of the nozzle orifice and sample injection port size (as described in greater detail below). In embodiments, the interrogation region may have a width that is 0.01 mm or more, such as 0.05 mm or more, such as 0.1 mm or more, such as 0.5 mm or more, such as 1 mm or more, such as 2 mm or more, such as 3 mm or more, such as 5 mm or more and including 10 mm or more. The length of the interrogation region may also vary, ranging in some instances along 0.01 mm or more, such as 0.1 mm or more, such as 0.5 mm or more, such as 1 mm or more, such as 1.5 mm or more, such as 2 mm or more, such as 3 mm or more, such as 5 mm or more, such as 10 or more, such as 15 mm or more, such as 20 mm or more, such as 25 mm or more and including 50 mm or more.

The flow stream may be irradiated by each light source from any suitable distance, such as at a distance of 0.001 mm or more, such as 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, irradiation of the flow stream may be at any suitable angle such as at an angle ranging from 10° to 90°, such as from 15° to 85°, such as from 20° to 80°, such as from 25° to 75° and including from 30° to 60°, for example at a 90° angle.

In practicing the subject methods, light from each particle is detected by a light detection system. In embodiments, light detection systems include one or more photodetectors, such as 2 or more, such as 3 or more, such as 4 or more, such as 5 or more, such as 6 or more, such as 7 or more, such as 8 or more, such as 9 or more and including 10 or more photodetectors. Photodetectors for practicing the subject methods may be any convenient light detecting protocol, including but not limited to photosensors or photodetectors, such as active-pixel sensors (APSs), quadrant photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other photodetectors. In certain embodiments, the photodetector is a photomultiplier tube, such as a photomultiplier tube having an active detecting surface area of each region that ranges from 0.01 cm$^2$ to 10 cm$^2$, such as from 0.05 cm$^2$ to 9 cm$^2$, such as from, such as from 0.1 cm$^2$ to 8 cm$^2$, such as from 0.5 cm$^2$ to 7 cm$^2$ and including from 1 cm$^2$ to 5 cm$^2$.

Light may be measured by the photodetector at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light from particles in the flow stream at 400 or more different wavelengths. Light may be measured continuously or in discrete intervals. In some instances, detectors of interest are configured to take measurements of the light continuously. In other instances, detectors of interest are configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

Measurements of the light from the light source may be taken one or more times during each discrete time interval, such as 2 or more times, such as 3 or more times, such as 5 or more times and including 10 or more times. In certain embodiments, the light from the light source is measured by the photodetector 2 or more times, with the data in certain instances being averaged.

In certain embodiments, light detected from the sample is scattered light. The term "scattered light" is used herein in its conventional sense to refer to the propagation of light energy from particles in the sample (e.g., flowing in a flow stream) that are deflected from the incident beam path, such as by reflection, refraction or deflection of the beam of light. In certain instances, scattered light detected from the particles in the flow stream is forward scattered light (FSC). In other instances, scattered light detected from the particles in the flow stream is side scattered light. In yet other instances, scattered light detected from the particles in the flow stream is back-scattered light.

In some embodiments, light detected from each particle in the sample is transmitted light, such as light detected with a brightfield light detector. In other embodiments, light detected from each particle in the sample is emitted light, such as particle luminescence (i.e., fluorescence or phosphorescence). In these embodiments, each particle may include one or more fluorophores which emits fluorescence in response to irradiation by the two or more light sources. For example, each particle may include 2 or more fluorophores, such as 3 or more, such as 4 or more, such as 5 or more, such as 6 or more, such as 7 or more, such as 8 or more, such as 9 or more and including 10 or more fluorophores. In some instances, each particle includes a first fluorophore which emits fluorescence in response to irradiation by a first laser and a second fluorophore which emits fluorescence in response to irradiation by a second laser. In some embodiments, fluorophores of interest may include but are not limited to dyes suitable for use in analytical applications (e.g., flow cytometry, imaging, etc.), such as an acridine dye, anthraquinone dyes, arylmethane dyes, diarylmethane dyes (e.g., diphenyl methane dyes), chlorophyll containing dyes, triarylmethane dyes (e.g., triphenylmethane dyes), azo dyes, diazonium dyes, nitro dyes, nitroso dyes, phthalocyanine dyes, cyanine dyes, asymmetric cyanine dyes, quinon-imine dyes, azine dyes, eurhodin dyes, safranin dyes, indamins, indophenol dyes, fluorine dyes, oxazine dye, oxazone dyes, thiazine dyes, thiazole dyes, xanthene dyes, fluorene dyes, pyronin dyes, fluorine dyes, rhodamine dyes, phenanthridine dyes, as well as dyes combining two or more of the aforementioned dyes (e.g., in tandem), polymeric dyes having one or more monomeric dye units and mixtures of two or more of the aforementioned dyes thereof. A large number of dyes are commercially available from a variety of sources, such as, for example, Molecular Probes (Eugene, OR), Dyomics GmbH (Jena, Germany), Sigma-Aldrich (St. Louis, MO), Sirigen, Inc. (Santa Barbara, CA) and Exciton (Dayton, OH). For example, the fluorophore may include 4-acetamido-4'-isothiocyanatostilbene-2,2'disulfonic acid; acridine and derivatives such as acridine, acridine orange, acridine yellow, acridine red, and acridine isothiocyanate; allophycocyanin, phycoerythrin, peridinin-chlorophyll protein, 5-(2'-aminoethyl)aminonaphthalene-1-sulfonic acid (EDANS); 4-amino-N-[3-vinylsulfonyl)phenyl]naphthalimide-3,5 disulfonate (Lucifer Yellow VS); N-(4-anilino-1-naphthyl)maleimide; anthranilamide; Brilliant Yellow; coumarin and derivatives such as coumarin, 7-amino-4-methylcoumarin (AMC, Coumarin 120), 7-amino-4-trifluoromethylcouluarin (Coumaran 151); cyanine and derivatives such as cyanosine, Cy3, Cy3.5, Cy5, Cy5.5, and Cy7; 4',6-diaminidino-2-phenylindole (DAPI); 5', 5"-dibromopyrogallol-sulfonephthalein (Bromopyrogallol Red); 7-diethylamino-3-(4'-isothiocyanatophenyl)-4-methylcoumarin; diethylaminocoumarin; diethylenetriamine pentaacetate; 4,4'-diisothiocyanatodihydro-stilbene-2,2'-disulfonic acid; 4,4'-diisothiocyanatostilbene-2,2'-disulfonic acid; 5-[dimethylamino]naphthalene-1-sulfonyl chloride (DNS, dansyl chloride); 4-(4'-dimethylaminophenylazo)benzoic acid (DABCYL); 4-dimethylaminophenylazophenyl-4'-isothiocyanate (DABITC); eosin and derivatives such as eosin and eosin isothiocyanate; erythrosin and derivatives such as erythrosin B and erythrosin isothiocyanate; ethidium; fluorescein and derivatives such as 5-carboxyfluorescein (FAM), 5-(4,6-dichlorotriazin-2-yl)aminofluorescein (DTAF), 2'7'-dimethoxy-4'5'-dichloro-6-carboxyfluorescein (JOE), fluorescein isothiocyanate (FITC), fluorescein chlorotriazinyl, naphthofluorescein, and QFITC (XRITC); fluorescamine; IR144; IR1446; Green Fluorescent Protein (GFP); Reef Coral Fluorescent Protein (RCFP); Lissamine™; Lissamine rhodamine, Lucifer yellow; Malachite Green isothiocyanate; 4-methylumbelliferone; ortho cresolphthalein; nitrotyrosine; pararosaniline; Nile Red; Oregon Green; Phenol Red; B-phycoerythrin; o-phthaldialdehyde; pyrene and derivatives such as pyrene, pyrene butyrate and succinimidyl 1-pyrene butyrate; Reactive Red 4 (Cibacron™ Brilliant Red 3B-A); rhodamine and derivatives such as 6-carboxy-X-rhodamine (ROX), 6-carboxyrhodamine (R6G), 4,7-dichlororhodamine lissamine, rhodamine B sulfonyl chloride, rhodamine (Rhod), rhodamine B, rhodamine 123, rhodamine X isothiocyanate, sulforhodamine B, sulforhodamine 101, sulfonyl chloride derivative of sulforhodamine 101 (Texas Red), N,N,N',N'-tetramethyl-6-carboxyrhodamine (TAMRA), tetramethyl rhodamine, and tetramethyl rhodamine isothiocyanate (TRITC); riboflavin; rosolic acid and terbium chelate derivatives; xanthene; dye-conjugated polymers (i.e., polymer-attached dyes) such as fluorescein isothiocyanate-dextran as well as dyes combining two or more dyes (e.g., in tandem), polymeric dyes having one or more monomeric dye units and mixtures of two or more of the aforementioned dyes or combinations thereof.

In some instances, the fluorophore (i.e., dye) is a fluorescent polymeric dye. Fluorescent polymeric dyes that find use in the subject methods and systems are varied. In some instances of the method, the polymeric dye includes a conjugated polymer. Conjugated polymers (CPs) are characterized by a delocalized electronic structure which includes a backbone of alternating unsaturated bonds (e.g., double and/or triple bonds) and saturated (e.g., single bonds) bonds, where $\pi$-electrons can move from one bond to the other. As such, the conjugated backbone may impart an extended linear structure on the polymeric dye, with limited bond angles between repeat units of the polymer. For example, proteins and nucleic acids, although also polymeric, in some cases do not form extended-rod structures but rather fold into higher-order three-dimensional shapes. In addition, CPs may form "rigid-rod" polymer backbones and experience a limited twist (e.g., torsion) angle between monomer repeat units along the polymer backbone chain. In some instances, the polymeric dye includes a CP that has a rigid rod structure. As summarized above, the structural characteristics of the polymeric dyes can have an effect on the fluorescence properties of the molecules.

Any convenient polymeric dye may be utilized in the subject methods and systems. In some instances, a polymeric dye is a multichromophore that has a structure capable of harvesting light to amplify the fluorescent output of a fluorophore. In some instances, the polymeric dye is capable of harvesting light and efficiently converting it to emitted light at a longer wavelength. In some cases, the polymeric dye has a light-harvesting multichromophore system that can efficiently transfer energy to nearby luminescent species (e.g., a "signaling chromophore"). Mechanisms for energy transfer include, for example, resonant energy transfer (e.g., Forster (or fluorescence) resonance energy transfer, FRET), quantum charge exchange (Dexter energy transfer) and the like. In some instances, these energy transfer mechanisms are relatively short range; that is, close proximity of the light harvesting multichromophore system to the signaling chromophore provides for efficient energy transfer. Under conditions for efficient energy transfer, amplification of the emission from the signaling chromophore occurs when the number of individual chromophores in the light harvesting multichromophore system is large; that is, the emission from the signaling chromophore is more intense when the incident light (the "excitation light") is at a wavelength which is absorbed by the light harvesting multichromophore system than when the signaling chromophore is directly excited by the pump light.

The multichromophore may be a conjugated polymer. Conjugated polymers (CPs) are characterized by a delocalized electronic structure and can be used as highly responsive optical reporters for chemical and biological targets. Because the effective conjugation length is substantially shorter than the length of the polymer chain, the backbone contains a large number of conjugated segments in close proximity. Thus, conjugated polymers are efficient for light harvesting and enable optical amplification via energy transfer.

In some instances, the polymer may be used as a direct fluorescent reporter, for example fluorescent polymers having high extinction coefficients, high brightness, etc. In some instances, the polymer may be used as a strong chromophore where the color or optical density is used as an indicator.

Polymeric dyes of interest include, but are not limited to, those dyes described by Gaylord et al. in US Publication Nos. 20040142344, 20080293164, 20080064042, 20100136702, 20110256549, 20120028828, 20120252986, 20130190193 and 20160025735 the disclosures of which are herein incorporated by reference in their entirety; and Gaylord et al., J. Am. Chem. Soc., 2001, 123 (26), pp 6417-6418; Feng et al., Chem. Soc. Rev., 2010,39, 2411-2419; and Traina et al., J. Am. Chem. Soc., 2011, 133 (32), pp 12600-12607, the disclosures of which are herein incorporated by reference in their entirety.

Light from the flow stream in each irradiation interrogation region is detected in two or more photodetector channels, such as 3 or more, such as 4 or more, such as 5 or more, such as 6 or more, such as 7 or more, such as 8 or more, such as 9 or more, such as 10 or more, such as 12 or more, such as 16 or more, such as 24 or more, such as 24 or more, such as 32 or more, such as 64 or more, such as 128 or more, such as 256 or more and including 512 or more photodetector channels. In some embodiments, light is detected in a different photodetector for each light source (e.g., each laser) used to irradiate the flow stream. For instance, where the particles in the flow stream is irradiated by a first laser and a second laser, light each particle in the flow stream irradiated by the first laser may be detected by a first photodetector channel and light from each particle in the flow stream irradiated by the second laser may be detected by a second photodetector channel. In certain embodiments, scattered light from each particle in the flow stream irradiated by the first laser is detected by a first photodetector channel and scattered light from each particle in the flow stream irradiated by the second laser is detected by a second photodetector channel.

In embodiments, one or more signal pulses are generated in each photodetector channel in response to detected light. In some embodiments, a plurality of signal pulses are generated in each photodetector channel in response to the detected light, such as 2 or more signal pulses, such as 3 or more signal pulses, such as 4 or more signal pulses, such as 5 or more signal pulses, such as 6 or more signal pulses, such as 7 or more signal pulses, such as 8 or more signal pulses, such as 9 or more signal pulses and including generating 10 or more signal pulses in each photodetector channel in response to detected light. In some embodiments, one or more signal pulses is generated in a different photodetector channel in response to light detected from particles irradiated by each light source (e.g., each laser). For instance, where the particles in the flow stream is irradiated by a first laser and a second laser, a signal pulse may be generated in a first photodetector channel in response to light detected from each particle that is irradiated by the first laser and a signal pulse may be generated in a second photodetector channel in response to light detected from each particle that is irradiated by the second laser.

In some embodiments, the signal pulse is a voltage pulse. The voltage pulse may be a pulse of 0.001 mV or more, such as by 0.005 mV or more, such as by 0.01 mV or more, such as by 0.05 mV or more, such as by 0.1 mV or more, such as by 0.5 mV or more, such as by 1 mV or more, such as by 5 mV or more, such as by 10 mV or more, such as by 25 mV or more, such as by 50 mV or more, such as by 100 mV or more, such as by 250 mV or more, such as by 500 mV or more, such as by 1000 mV or more, such as by 2500 mV or more and including by 5000 mV or more. In some embodiments, a signal pulse is generated in each photodetector channel when the detected light generates a voltage which exceeds a predetermined threshold of 0.00001 mV or more, such as 0.00005 mV or more, such as 0.0001 mV or more, such as 0.0005 mV or more, such as 0.001 mV or more, such as 0.005 mV or more, such as 0.01 mV or more, such as 0.05 mV or more, such as 0.1 mV or more, such as 0.5 mV or more, such as 1 mV or more, such as 5 mV or more, such as 10 mV or more, such as 25 mV or more, such as 50 mV or more, such as 100 mV or more, such as 250 mV or more, such as 500 mV or more, such as 1000 mV or more, such as 2500 mV or more and including a predetermined threshold of 5000 mV or more.

In some embodiments, methods include determining an amount of time between photodetector signal pulses. In some instances, methods include determining the amount of time between signal pulses in two or more different photodetector channels, such as 3 or more, such as 4 or more, such as 5 or more, such as 6 or more, such as 7 or more, such as 8 or more, such as 9 or more, such as 10 or more, such as 12 or more, such as 16 or more, such as 24 or more, such as 24 or more, such as 32 or more, such as 64 or more, such as 128 or more, such as 256 or more and including determining the amount of time between signal pulses in 512 or more different photodetector channels. In some instances, the time between signal pulses in the two or more different photodetector channels may be 0.00001 μs or more, such as 0.00005 μs or more, such as 0.0001 μs or more, such as 0.0005 μs or more, such as 0.001 μs or more, such as 0.005 μs, such as 0.01 μs or more, such as 0.05 μs or more, such as 0.1 μs or more, such as 0.5 μs or more, such as 1 μs or more, such as 5 μs or more, such as 10 μs or more, such as 25 μs or more, such as 50 μs or more, such as 100 μs or more, such as 500 μs or more and including 1000 μs or more. In certain instances, the time between signal pulses in the two or more different photodetector channels ranges from 0.00001 μs to 5000 μs, such as from 0.0001 μs to 4000 μs, such as from 0.001 μs to 3000 μs, such as from 0.01 μs to 2000 μs, such as from 0.1 μs to 1000 μs and including from 1 μs to 500 μs.

In some embodiments, methods include determining a time-to-peak duration between photodetector signal pulses. The term "time-to-peak" is used herein in its conventional sense to refer to the duration between the peak (e.g., value of highest detected voltage in the photodetector channel during a signal pulse) of the generated signal pulse in each photodetector channel. For example, the time-to-peak duration may be determined between signal pulses in two or more different photodetector channels, such as 3 or more, such as 4 or more, such as 5 or more, such as 6 or more, such as 7 or more, such as 8 or more, such as 9 or more, such as 10 or more, such as 12 or more, such as 16 or more, such as 24 or more, such as 24 or more, such as 32 or more, such as 64 or more, such as 128 or more, such as 256 or more and including determining the time-to-peak duration between signal pulses in 512 or more different photodetector channels. In some instances, the time-to-peak duration between signal pulses in the two or more different photodetector channels may be 0.00001 μs or more, such as 0.00005 μs or more, such as 0.0001 μs or more, such as 0.0005 μs or more, such as 0.001 μs or more, such as 0.005 μs, such as 0.01 μs or more, such as 0.05 μs or more, such as 0.1 μs or more, such as 0.5 μs or more, such as 1 μs or more, such as 5 μs or more, such as 10 μs or more, such as 25 μs or more, such as 50 μs or more, such as 100 μs or more, such as 500 μs or more and including 1000 μs or more. In certain instances, the time-to-peak duration between signal pulses in the two or more different photodetector channels ranges from 0.00001 μs to 5000 μs, such as from 0.0001 μs to 4000 μs, such as from 0.001 μs to 3000 μs, such as from 0.01 μs to 2000 μs, such as from 0.1 μs to 1000 μs and including from 1 μs to 500 μs.

In some embodiments, methods include calculating the velocity of each particle of interest in the flow stream. In some instances, the velocity of 1 or more particles in the sample is independently determined, such as the velocities of 2 or more particles in the sample, such as the velocities of 5 or more particles in the sample, such as the velocities of 10 or more particles in the sample, such as the velocities of 25 or more particles in the sample, such as the velocities of 50 or more particles in the sample, such as the velocities of 100 or more particles in the sample, such as the velocities of 250 or more particles in the sample and include independently calculating the velocities of 500 or more particles in the sample. For example, the velocities of 0.0001% or more of the particles in the sample may be independently calculated, such as 0.0005% or more, such as 0.001% or more, such as 0.005% or more, such as 0.01% or more, such as 0.05% or more, such as 0.1% or more, such as 0.5% or more, such as 1% or more, such as 5% or more, such as 10% or more, such as 25% or more, such as 50% or more, such as 75% or more and including independently calculating the velocities of 90% or more of the particles in the sample.

In some embodiments, the velocity of each particle is calculated based on the amount of time between a signal pulse in two or more photodetector channels and the distance between two or more interrogation regions. In one embodiment, the velocity of each particle is calculated based on the amount of time between a signal pulse from a first photodetector channel and a signal pulse from a second photodetector channel and the distance between the interrogation region of the first laser and the interrogation region of the second laser. In some instances, the distance between the first interrogation region and the second interrogation region is determined based on the distance between the position of irradiation by the first laser on the flow stream and the position of irradiation by the second laser on the flow stream. For example, depending on the particle analyzer in certain instances the distance between the first interrogation region and the second interrogation region is 0.01 μm or more, such as by 0.05 μm or more, such as by 0.1 μm or more, such as by 0.5 μm or more, such as by 1 μm or more, such as by 2 μm or more, such as by 3 μm or more, such as by 4 μm or more, such as by 5 μm or more, such as by 10 μm or more, such as by 15 μm or more, such as by 25 μm or more, such as by 50 μm or more and including by 100 μm or more. In other instances, the distance between the first interrogation region and the second interrogation region ranges from 0.01 μm to 500 μm, such as from 0.05 μm to 450 μm, such as from 0.1 μm to 400 μm, such as from 0.5 μm to 350 μm, such as from 1 μm to 200 μm, such as from 5 μm to 150 μm and including from 10 μm to 100 μm.

In some embodiments, particles in a flow stream are characterized by nonuniform velocities where the particles in the flow stream independently have different velocities. In some instances, the velocity of the particle is different between one or more of the interrogation regions of the flow stream, such as where the particle exhibits a greater flow rate between two or more of the interrogation regions. In some instances, the particle exhibits a slower flow rate between two regions of the interrogation regions of the flow stream. In some instances, methods include determining the flow rate between two or more of the interrogation regions, such as between 3 or more, such as between 4 or more and including between 5 or more interrogation regions. In some instances, methods include determining whether there are outlier velocities between interrogation regions. In some embodiments, methods include determining whether there is laser pointing instability based on one or more outlier velocities, such as where a laser is determined to have pointing instability when there are outlier velocities between interrogation regions.

In some instances, the non-uniformity of the velocities of the particles is dependent on the position of the particle in the flow stream. In some instances, the flow stream includes a sheath fluid flow and a sample core stream flow. In a flow stream having a core stream and a surrounding sheath flow, in certain instances, the velocity of particles flowing close to the center of the core stream is higher than the velocity of particles flowing along the periphery of the core stream.

In some embodiments, the positional velocity of the particle in the flow stream is correlated (proportional or inversely proportional) with the distance from the center of the flow stream (e.g., radius $r$ from the center of the flow stream). In certain instances, the positional velocity is proportional (e.g., linearly or exponentially) to the distance to the center of the flow stream. In some instances, the closer the particle is to the center of the flow stream, the higher the velocity the particle will have in the flow stream.

In embodiments, methods include calculating the positional velocity of the particle in the flow stream. In some instances, the velocity of the particle is determined at different positions from the center of the flow stream, such as where the velocity is determined at predetermined increments in distances from the center of the flow stream. In some instances, the velocity of the particle in the flow stream is determined at increments of 0.0001 $\mu$m or more from the center of the flow stream (e.g., at 0.0001 $\mu$m from the center of the flow stream, 0.0002 $\mu$m from the center of the flow stream, 0.0003 $\mu$m from the center of the flow stream, etc.), such as at increments of 0.0005 $\mu$m or more, such as 0.001 $\mu$m or more, such as 0.005 $\mu$m or more, such as 0.01 $\mu$m or more, such as 0.05 $\mu$m or more, such as 0.1 $\mu$m or more, such as 0.5 $\mu$m and including at increments of 1 $\mu$m or more from the center of the flow stream.

In some embodiments, the position of the particle in the flow stream is determined by plotting the flow stream on a Cartesian plot and determining the Cartesian coordinates of the particle. For example, the Cartesian plot may be a plot of the cross-section of the flow stream such that the cross-sectional position on the Cartesian plot (e.g., the position on an x-axis and the position on a y-axis) is determined for the particle. In some instances, the position of the particle in the flow stream is determined based on the polar coordinates of the flow stream. In certain instances, the cross-section of the flow stream is plotted and the polar coordinates of the particle in the flow stream is determined as the position of the particle in the flow stream.

In some embodiments, the position of the particle is measured as the distance from the center of the flow stream, such as where the particle is from 0.0001 $\mu$m or more from the center of the flow stream, such as 0.0005 $\mu$m or more, such as 0.001 $\mu$m or more, such as 0.005 $\mu$m or more, such as 0.01 $\mu$m or more, such as 0.05 $\mu$m or more, such as 0.1 $\mu$m or more, such as 0.5 $\mu$m or more, such as 1 $\mu$m or more, such as 5 $\mu$m or more, such as 10 $\mu$m or more, such as 25 $\mu$m or more, such as 50 $\mu$m or more, such as 100 $\mu$m or more, such as 250 $\mu$m or more, such as 500 $\mu$m or more, such as 1000 $\mu$m or more and including 5000 $\mu$m or more from the center of the flow stream. For example, the position of the particle may be from 0.0001 $\mu$m to 10000 $\mu$m from the center of the flow stream, such as from 0.0005 $\mu$m to 5000 $\mu$m, such as from 0.001 $\mu$m to 1000 $\mu$m, such as from 0.005 $\mu$m to 500 $\mu$m, such as from 0.01 $\mu$m to 100 $\mu$m, such as from 0.05 $\mu$m to 50 $\mu$m and including from 0.1 $\mu$m to 25 $\mu$m from the center of the flow stream.

In some embodiments, the position of the particle is measured as the distance from the wall of the flow channel (e.g., the outer periphery of the flow stream), such as where the particle is from 0.0001 $\mu$m or more from the wall of the flow channel, such as 0.0005 $\mu$m or more, such as 0.001 $\mu$m or more, such as 0.005 $\mu$m or more, such as 0.01 $\mu$m or more, such as 0.05 $\mu$m or more, such as 0.1 $\mu$m or more, such as 0.5 $\mu$m or more, such as 1 $\mu$m or more, such as 5 $\mu$m or more, such as 10 $\mu$m or more, such as 25 $\mu$m or more, such as 50 $\mu$m or more, such as 100 $\mu$m or more, such as 250 $\mu$m or more, such as 500 $\mu$m or more, such as 1000 $\mu$m or more and including 5000 $\mu$m or more from the wall of the flow channel. For example, the position of the particle may be from 0.0001 $\mu$m to 10000 $\mu$m from the wall of the flow channel, such as from 0.0005 $\mu$m to 5000 $\mu$m, such as from 0.001 $\mu$m to 1000 $\mu$m, such as from 0.005 $\mu$m to 500 $\mu$m, such as from 0.01 $\mu$m to 100 $\mu$m, such as from 0.05 $\mu$m to 50 $\mu$m and including from 0.1 $\mu$m to 25 $\mu$m from the wall of the flow channel.

In calculating the positional velocity of a particle in the flow stream according to certain embodiments of the present disclosure, a parameter of the particle is determined. In some instances, the parameter is an image parameter of the particle in the flow stream. In some instances, the image parameter is generated from imaging data for the particle from the measured light. In some instances, the image parameter is generated from an image of the particle from the detected light. One or more images may be generated from the measured light. In some embodiments, a single image is generated for each particle from each form of detected light. In other embodiments, a plurality of images are generated for each particle, such as 2 or more, such as 3 or more, such as 5 or more, such as 10 or more and including 25 or more images of the particle. For example, a first image of the particle is generated from detected light absorption; a second image of the cell is generated from detected light scatter and a third image of the cell is generated from detected light emission. In other embodiments, two or more images are generated from each form of detected light, such as 3 or more, such as 4 or more, such as 5 or more and including 10 or more images or a combination thereof.

In some instances, methods include generating one or more greyscale images of the particle. The term "greyscale" is used herein in its conventional sense to refer to images of the cell in the flow stream that are composed of varying shades of gray that are based on the intensity of light at each pixel. In some embodiments, a pixel intensity threshold is determined from the greyscale image where the pixel intensity threshold value is used to convert each pixel into a binary value that is used to generate the image of the particle. In certain instances, the image of the particle is a binary pixel image of the particle such as where each pixel is assigned a binary pixel value of 1 (e.g., where the intensity of the pixel exceeds a predetermined threshold) or a binary pixel value of 0 (e.g., where the intensity of the pixel falls below a predetermined threshold).

In some embodiments, one or more image parameters are calculated from the generated images of the particles. In some instances, a center of mass image parameter is calculated from the generated image. In some instances, a delta center of mass image parameter is calculated from the generated image. In some instances, a diffusivity image parameter is calculated from the generated image. In some instances, an eccentricity image parameter is calculated from the generated image. In some instances, a long axis moment image parameter is calculated from the generated image. In some instances, a maximum intensity image parameter is calculated from the generated image. In some instances, a radial moment image parameter is calculated from the generated image. In some instances, a short axis moment image parameter is calculated from the generated image. In some instances, a particle size image parameter is calculated from the generated image. In some instances, a total intensity image parameter is calculated from the generated image. In some instances, a particle light loss image parameter is calculated from the generated image. In some instances, a forward scattered light image parameter is calculated from the generated image. In some instances, a side scattered light image parameter is calculated from the generated image. In some instances, an image moment is calculated from the generated image. The term "image moment" is used herein in its conventional sense to refer to a weighted average of pixel intensities in an image. In some instances, the center of mass may be calculated from the image moment of the image. In other instances, the orientation of the cell may be calculated from the image moment of the image. In still other instances, the eccentricity of the cell may be calculated from the image moment of the image.

In certain embodiments, imaging parameters calculated from the generated image for use in generating a gating strategy (as described below) summarized in Table 1.

**Table 1**

| | Imaging parameters |
|---|---|
| 1 | FSC-A :: FSC-A |
| 2 | FSC-H :: FSC-H |
| 3 | FSC-T :: FSC-T |
| 4 | FSC-W :: FSC-W |
| 5 | SSC (Imaging)-A :: SSC (Imaging)-A |
| 6 | SSC (Imaging)-H :: SSC (Imaging)-H |
| 7 | SSC (Imaging)-T :: SSC (Imaging)-T |
| 8 | SSC (Imaging)-W :: SSC (Imaging)-W |
| 9 | SSC (Violet)-A :: SSC (Violet)-A |
| 10 | SSC (Violet)-H :: SSC (Violet)-H |
| 11 | SSC (Violet)-T :: SSC (Violet)-T |
| 12 | SSC (Violet)-W :: SSC (Violet)-W |
| 13 | Center of Mass (X) (FSC) |
| 14 | Center of Mass (X) (LightLoss (Imaging)) |
| 15 | Center of Mass (X) (SSC (Imaging)) |
| 16 | Center of Mass (Y) (FSC) |
| 17 | Center of Mass (Y) (LightLoss (Imaging)) |
| 18 | Center of Mass (Y) (SSC (Imaging)) |
| 19 | Delta CoM (LightLoss (Imaging)_FSC) |
| 20 | Delta CoM (SSC (Imaging)_FSC) |

(continued)

| | Imaging parameters |
|---|---|
| 21 | Delta CoM (SSC (Imaging)_LightLoss (Imaging)) |
| 22 | Diffusivity (FSC) |
| 23 | Diffusivity (LightLoss (Imaging)) |
| 24 | Diffusivity (SSC (Imaging)) |
| 25 | Eccentricity (FSC) |
| 26 | Eccentricity (LightLoss (Imaging)) |
| 27 | Eccentricity (SSC (Imaging)) |
| 28 | LightLoss (Imaging)-A :: LightLoss (Imaging)-A |
| 29 | LightLoss (Imaging)-H :: LightLoss (Imaging)-H |
| 30 | LightLoss (Imaging)-T :: LightLoss (Imaging)-T |
| 31 | LightLoss (Imaging)-W :: LightLoss (Imaging)-W |
| 32 | LightLoss (Violet)-A :: LightLoss (Violet)-A |
| 33 | LightLoss (Violet)-H :: LightLoss (Violet)-H |
| 34 | LightLoss (Violet)-T :: LightLoss (Violet)-T |
| 35 | LightLoss (Violet)-W :: LightLoss (Violet)-W |
| 36 | Long Axis Moment (FSC) |
| 37 | Long Axis Moment (LightLoss (Imaging)) |
| 38 | Long Axis Moment (SSC (Imaging)) |
| 39 | Max Intensity (FSC) |
| 40 | Max Intensity (LightLoss (Imaging)) |
| 41 | Max Intensity (SSC (Imaging)) |
| 42 | Radial Moment (FSC) |
| 43 | Radial Moment (LightLoss (Imaging)) |
| 44 | Radial Moment (SSC (Imaging)) |
| 45 | Short Axis Moment (FSC) |
| 46 | Short Axis Moment (LightLoss (Imaging)) |
| 47 | Short Axis Moment (SSC (Imaging)) |
| 48 | Size (FSC) |
| 49 | Size (LightLoss (Imaging)) |
| 50 | Size (SSC (Imaging)) |
| 51 | Total Intensity (FSC) |
| 52 | Total Intensity (LightLoss (Imaging)) |
| 53 | Total Intensity (SSC (Imaging)) |

In some embodiments, the positional velocity of the particle in the flow stream is calculated based on the velocity of the particle and a center-of-mass (COM) parameter. In some instances, the center-of-mass parameter is calculated from an image moment and the generated image of the particle. For example, the center of mass of the particle may be determined from the calculated image moment and the generated image according to:

$$\text{Center of Mass} = \frac{M_{1,0}}{M_{0,0}}$$

In some embodiments, the center of mass parameter includes the position of the particle in the flow stream. In some instances, the position of the particle in the flow stream is based on the Cartesian coordinates of the particle as plotted on a Cartesian plot. For example, the Cartesian plot may be a plot of the cross-section of the flow stream such that the cross-sectional position on the Cartesian plot (e.g., the position on an x-axis and the position on a y-axis) is determined for the particle. In some instances, the position of the particle in the flow stream is based on the polar coordinates of the particle in the flow stream.

In some embodiments, the position of the particle for determining the center of mass parameter is the distance of the particle from the center of the flow stream, such as where the particle is from 0.0001 $\mu$m or more from the center of the flow stream, such as 0.0005 $\mu$m or more, such as 0.001 $\mu$m or more, such as 0.005 $\mu$m or more, such as 0.01 $\mu$m or more, such as 0.05 $\mu$m or more, such as 0.1 $\mu$m or more, such as 0.5 $\mu$m or more, such as 1 $\mu$m or more, such as 5 $\mu$m or more, such as 10 $\mu$m or more, such as 25 $\mu$m or more, such as 50 $\mu$m or more, such as 100 $\mu$m or more, such as 250 $\mu$m or more, such as 500 $\mu$m or more, such as 1000 $\mu$m or more and including 5000 $\mu$m or more from the center of the flow stream. For example, the position of the particle may be from 0.0001 $\mu$m to 10000 $\mu$m from the center of the flow stream, such as from 0.0005 $\mu$m to 5000 $\mu$m, such as from 0.001 $\mu$m to 1000 $\mu$m, such as from 0.005 $\mu$m to 500 $\mu$m, such as from 0.01 $\mu$m to 100 $\mu$m, such as from 0.05 $\mu$m to 50 $\mu$m and including from 0.1 $\mu$m to 25 $\mu$m from the center of the flow stream.

In some embodiments, the position of the particle for determining the center of mass parameter is the distance of the particle from the wall of the flow channel (e.g., the outer periphery of the flow stream), such as where the particle is from 0.0001 $\mu$m or more from the wall of the flow channel, such as 0.0005 $\mu$m or more, such as 0.001 $\mu$m or more, such as 0.005 $\mu$m or more, such as 0.01 $\mu$m or more, such as 0.05 $\mu$m or more, such as 0.1 $\mu$m or more, such as 0.5 $\mu$m or more, such as 1 $\mu$m or more, such as 5 $\mu$m or more, such as 10 $\mu$m or more, such as 25 $\mu$m or more, such as 50 $\mu$m or more, such as 100 $\mu$m or more, such as 250 $\mu$m or more, such as 500 $\mu$m or more, such as 1000 $\mu$m or more and including 5000 $\mu$m or more from the wall of the flow channel. For example, the position of the particle may be from 0.0001 $\mu$m to 10000 $\mu$m from the wall of the flow channel, such as from 0.0005 $\mu$m to 5000 $\mu$m, such as from 0.001 $\mu$m to 1000 $\mu$m, such as from 0.005 $\mu$m to 500 $\mu$m, such as from 0.01 $\mu$m to 100 $\mu$m, such as from 0.05 $\mu$m to 50 $\mu$m and including from 0.1 $\mu$m to 25 $\mu$m from the wall of the flow channel.

In some embodiments, the particle analyzer includes a flow cell having a flow nozzle for generating droplets containing each particle in the flow stream (as described in greater detail below). In some embodiments, methods include determining a laser delay of one or more of the lasers based on the calculated positional velocity of the particle. In some instances, methods include adjusting the laser delay for one or more of the lasers based on one or more of the calculated velocity of each particle in the flow stream, the center of mass parameter, the calculated positional velocity and the laser delay. In certain instances, methods include adjusting the laser delay for one or more of the lasers based on the positional velocity of the particle.

In some instances, methods include determining the drop delay of each particle based on the calculated positional velocity of the particle and the distance between an interrogation region of one or more of the light sources and the flow cell nozzle orifice. In some embodiments, the drop delay of each particle is independently determined by multiplying the calculated positional velocity of each particle of interest by the distance between an interrogation region of one or more of the light sources and the flow cell nozzle orifice. For example, depending on the particle analyzer in certain instances the distance between each interrogation region and the flow cell nozzle orifice is independently 0.01 $\mu$m or more, such as by 0.05 $\mu$m or more, such as by 0.1 $\mu$m or more, such as by 0.5 $\mu$m or more, such as by 1 $\mu$m or more, such as by 2 $\mu$m or more, such as by 3 $\mu$m or more, such as by 4 $\mu$m or more, such as by 5 $\mu$m or more, such as by 10 $\mu$m or more, such as by 15 $\mu$m or more, such as by 25 $\mu$m or more, such as by 50 $\mu$m or more and including by 100 $\mu$m or more. In other instances, the distance between each interrogation region and the flow cell nozzle orifice ranges from 0.01 $\mu$m to 500 $\mu$m, such as from 0.05 $\mu$m to 450 $\mu$m, such as from 0.1 $\mu$m to 400 $\mu$m, such as from 0.5 $\mu$m to 350 $\mu$m, such as from 1 $\mu$m to 200 $\mu$m, such as from 5 $\mu$m to 150 $\mu$m and including from 10 $\mu$m to 100 $\mu$m.

In some embodiments, methods include adjusting one or more parameters of the particle analyzer based on one or more of the calculated velocity of each particle in the flow stream, the center of mass parameter, the calculated positional velocity and the calculated drop delay. In some instances, the flow rate of the flow stream is increased. In certain instances, the flow rate may be increased by 1% or more, such as by 5% or more, such as by 10% or more, such as by 15% or more, such as by 25% or more, such as by 50% or more, such as by 75% or more, such as by 90% or more, such as by 95% or more, such as by 97% or more, such as by 99% or more and including increasing the flow rate of the flow stream by 99.9% or more. In some embodiments, the flow rate of the flow stream is increased by 1 $\mu$L/sec or more, such as 2 $\mu$L/sec or more, such as 5 $\mu$L/sec or more, such as 10 $\mu$L/sec or more, such as 25 $\mu$L/sec or more, such as 50 $\mu$L/sec or more, such as 100 $\mu$L/sec or more, such as 250 $\mu$L/sec or more, such as 500 $\mu$L/sec or more, such as 750 $\mu$L/sec or more and including 1000

μL/sec or more. In other embodiments, the flow rate of the flow stream is increased by 0.001 mm/sec or more, such as by 0.005 mm/sec or more, such as by 0.01 mm/sec or more, such as by 0.05 mm/sec or more, such as by 0.1 mm/sec or more, such as by 0.5 mm/sec or more, such as by 1 mm/sec or more, such as by 5 mm/sec or more and including where the flow rate of the flow stream is increased by 10 mm/sec or more.

In other instances, the flow rate of the flow stream is decreased. In certain instances, the flow rate may be decreased by 1% or more, such as by 5% or more, such as by 10% or more, such as by 15% or more, such as by 25% or more, such as by 50% or more, such as by 75% or more, such as by 90% or more, such as by 95% or more, such as by 97% or more, such as by 99% or more and including decreasing the flow rate of the flow stream by 99.9% or more. In some embodiments, the flow rate of the flow stream is decreased by 1 μL/sec or more, such as 2 μL/sec or more, such as 5 μL/sec or more, such as 10 μL/sec or more, such as 25 μL/sec or more, such as 50 μL/sec or more, such as 100 μL/sec or more, such as 250 μL/sec or more, such as 500 μL/sec or more, such as 750 μL/sec or more and including 1000 μL/sec or more. In other embodiments, the flow rate of the flow stream is decreased by 0.001 mm/sec or more, such as by 0.005 mm/sec or more, such as by 0.01 mm/sec or more, such as by 0.05 mm/sec or more, such as by 0.1 mm/sec or more, such as by 0.5 mm/sec or more, such as by 1 mm/sec or more, such as by 5 mm/sec or more and including where the flow rate of the flow stream is decreasing by 10 mm/sec or more.

In some instances, the sheath fluid flow is increased based on one or more of the calculated velocity of each particle in the flow stream, the center of mass parameter and the calculated positional velocity. In some instances, the sheath fluid flow is increased by 1% or more, such as by 5% or more, such as by 10% or more, such as by 15% or more, such as by 25% or more, such as by 50% or more, such as by 75% or more, such as by 90% or more, such as by 95% or more, such as by 97% or more, such as by 99% or more and including increasing the rate of sheath fluid flow by 99.9% or more. In some embodiments, the flow of the sheath fluid flow is increased by 1 μL/sec or more, such as 2 μL/sec or more, such as 5 μL/sec or more, such as 10 μL/sec or more, such as 25 μL/sec or more, such as 50 μL/sec or more, such as 100 μL/sec or more, such as 250 μL/sec or more, such as 500 μL/sec or more, such as 750 μL/sec or more and including 1000 μL/sec or more. In other embodiments, the rate of the sheath fluid flow is increased by 0.001 mm/sec or more, such as by 0.005 mm/sec or more, such as by 0.01 mm/sec or more, such as by 0.05 mm/sec or more, such as by 0.1 mm/sec or more, such as by 0.5 mm/sec or more, such as by 1 mm/sec or more, such as by 5 mm/sec or more and including where the rate of the sheath fluid flow is increased by 10 mm/sec or more.

In some instances, the sheath fluid flow fluid flow is decreased based on one or more of the calculated velocity of each particle in the flow stream, the center of mass parameter and the calculated positional velocity. In some instances, the sheath fluid flow is decreased by 1% or more, such as by 5% or more, such as by 10% or more, such as by 15% or more, such as by 25% or more, such as by 50% or more, such as by 75% or more, such as by 90% or more, such as by 95% or more, such as by 97% or more, such as by 99% or more and including decreasing the rate of sheath fluid flow by 99.9% or more. In some embodiments, the flow of the sheath fluid flow is decreased by 1 μL/sec or more, such as 2 μL/sec or more, such as 5 μL/sec or more, such as 10 μL/sec or more, such as 25 μL/sec or more, such as 50 μL/sec or more, such as 100 μL/sec or more, such as 250 μL/sec or more, such as 500 μL/sec or more, such as 750 μL/sec or more and including 1000 μL/sec or more. In other embodiments, the rate of the sheath fluid flow is decreased by 0.001 mm/sec or more, such as by 0.005 mm/sec or more, such as by 0.01 mm/sec or more, such as by 0.05 mm/sec or more, such as by 0.1 mm/sec or more, such as by 0.5 mm/sec or more, such as by 1 mm/sec or more, such as by 5 mm/sec or more and including where the rate of the sheath fluid flow is decreased by 10 mm/sec or more.

In some instances, the sample core fluid flow is increased based on one or more of the calculated velocity of each particle in the flow stream, the center of mass parameter and the calculated positional velocity. In some instances, the sample core fluid flow is increased by 1% or more, such as by 5% or more, such as by 10% or more, such as by 15% or more, such as by 25% or more, such as by 50% or more, such as by 75% or more, such as by 90% or more, such as by 95% or more, such as by 97% or more, such as by 99% or more and including increasing the rate of sample core fluid flow by 99.9% or more. In some embodiments, the flow of the sample core fluid flow is increased by 1 μL/sec or more, such as 2 μL/sec or more, such as 5 μL/sec or more, such as 10 μL/sec or more, such as 25 μL/sec or more, such as 50 μL/sec or more, such as 100 μL/sec or more, such as 250 μL/sec or more, such as 500 μL/sec or more, such as 750 μL/sec or more and including 1000 μL/sec or more. In other embodiments, the sample core fluid flow is increased by 0.001 mm/sec or more, such as by 0.005 mm/sec or more, such as by 0.01 mm/sec or more, such as by 0.05 mm/sec or more, such as by 0.1 mm/sec or more, such as by 0.5 mm/sec or more, such as by 1 mm/sec or more, such as by 5 mm/sec or more and including where the rate of the sample core fluid flow is increased by 10 mm/sec or more.

In some instances, the sample core fluid flow is decreased based on one or more of the calculated velocity of each particle in the flow stream, the center of mass parameter and the calculated positional velocity. In some instances, the sample core fluid flow is decreased by 1% or more, such as by 5% or more, such as by 10% or more, such as by 15% or more, such as by 25% or more, such as by 50% or more, such as by 75% or more, such as by 90% or more, such as by 95% or more, such as by 97% or more, such as by 99% or more and including decreasing the rate of sample core fluid flow by 99.9% or more. In some embodiments, the flow of the sample core fluid flow is decreased by 1 μL/sec or more, such as 2 μL/sec or more, such as 5 μL/sec or more, such as 10 μL/sec or more, such as 25 μL/sec or more, such as 50 μL/sec or

more, such as 100 μL/sec or more, such as 250 μL/sec or more, such as 500 μL/sec or more, such as 750 μL/sec or more and including 1000 μL/sec or more. In other embodiments, the sample core fluid flow is decreased by 0.001 mm/sec or more, such as by 0.005 mm/sec or more, such as by 0.01 mm/sec or more, such as by 0.05 mm/sec or more, such as by 0.1 mm/sec or more, such as by 0.5 mm/sec or more, such as by 1 mm/sec or more, such as by 5 mm/sec or more and including where the rate of the sample core fluid flow is decreased by 10 mm/sec or more.

In some embodiments, methods include adjusting the timing of laser irradiation for one or more of the lasers based on one or more of the calculated velocity of each particle in the flow stream, the center of mass parameter, the calculated positional velocity and the calculated drop delay. In some instances, the timing of laser irradiation by one or more of the lasers is adjusted to be delayed by 0.01% or more, such as by 0.05% or more, such as by 0.1% or more, such as by 0.5% or more, such as by 1% or more, such as by 2% or more, such as by 5% or more, such as by 10% or more, such as by 15% or more, such as by 25% or more and including by 50% or more. For example, the timing of laser irradiation may be delayed by a 0.0001 μs or more in response to one or more of the calculated velocity of each particle in the flow stream, the center of mass parameter, the calculated positional velocity and the calculated drop delay, such as by 0.0005 μs or more, such as by 0.001 μs or more, such as by 0.005 μs or more, such as by 0.01 μs or more, such as by 0.05 μs or more, such as by 0.1 μs or more, such as by 0.5 μs or more, such as by 1 μs or more, such as by 5 μs or more, such as by 10 μs or more, such as by 25 μs or more, such as by 50 μs or more, such as by 100 μs or more and including delaying laser irradiation by one or more of the lasers by 500 μs. In other instances, the timing of laser irradiation by one or more of the lasers is adjusted to be earlier by 0.01% or more, such as by 0.05% or more, such as by 0.1% or more, such as by 0.5% or more, such as by 1% or more, such as by 2% or more, such as by 5% or more, such as by 10% or more, such as by 15% or more, such as by 25% or more and including by 50% or more. For example, the timing of laser irradiation by one or more of the lasers may be adjusted to be earlier by 0.0001 μs or more in response to one or more of the calculated velocity of each particle in the flow stream, the center of mass parameter, the calculated positional velocity and the calculated drop delay, such as by 0.0005 μs or more, such as by 0.001 μs or more, such as by 0.005 μs or more, such as by 0.01 μs or more, such as by 0.05 μs or more, such as by 0.1 μs or more, such as by 0.5 μs or more, such as by 1 μs or more, such as by 5 μs or more, such as by 10 μs or more, such as by 25 μs or more, such as by 50 μs or more, such as by 100 μs or more and including by 500 μs or more.

In some embodiments, methods include adjusting the timing of droplet charging based on one or more of the calculated velocity of each particle in the flow stream, the center of mass parameter, the calculated positional velocity and the calculated drop delay. In some instances, the timing of droplet charging is adjusted to be delayed by 0.01% or more, such as by 0.05% or more, such as by 0.1% or more, such as by 0.5% or more, such as by 1% or more, such as by 2% or more, such as by 5% or more, such as by 10% or more, such as by 15% or more, such as by 25% or more and including by 50% or more. For example, the timing of droplet charging may be delayed by a 0.0001 μs or more in response to one or more of the calculated velocity of each particle in the flow stream, the center of mass parameter, the calculated positional velocity and the calculated drop delay, such as by 0.0005 μs or more, such as by 0.001 μs or more, such as by 0.005 μs or more, such as by 0.01 μs or more, such as by 0.05 μs or more, such as by 0.1 μs or more, such as by 0.5 μs or more, such as by 1 μs or more, such as by 5 μs or more, such as by 10 μs or more, such as by 25 μs or more, such as by 50 μs or more, such as by 100 μs or more and including delaying droplet charging by 500 μs or more in response to one or more of the calculated velocity of each particle in the flow stream, the center of mass parameter, the calculated positional velocity and the calculated drop delay. In other instances, the timing of droplet charging is adjusted to be earlier by 0.01% or more, such as by 0.05% or more, such as by 0.1% or more, such as by 0.5% or more, such as by 1% or more, such as by 2% or more, such as by 5% or more, such as by 10% or more, such as by 15% or more, such as by 25% or more and including by 50% or more. For example, the timing of droplet charging may be adjusted to be earlier by 0.0001 μs or more in response to one or more of the calculated velocity of each particle in the flow stream, the center of mass parameter, the calculated positional velocity and the calculated drop delay, such as by 0.0005 μs or more, such as by 0.001 μs or more, such as by 0.005 μs or more, such as by 0.01 μs or more, such as by 0.05 μs or more, such as by 0.1 μs or more, such as by 0.5 μs or more, such as by 1 μs or more, such as by 5 μs or more, such as by 10 μs or more, such as by 25 μs or more, such as by 50 μs or more, such as by 100 μs or more and including by 500 μs or more.

In other embodiments, methods include adjusting the drop drive frequency based on one or more of the calculated velocity of each particle in the flow stream, the center of mass parameter, the calculated positional velocity and the calculated drop delay. In some instances, the drop drive frequency is increased, such as by 0.01 Hz or more, such as by 0.05 Hz or more, such as by 0.1 Hz or more, such as by 0.25 Hz or more, such as by 0.5 Hz or more, such as by 1 Hz or more, such as by 2.5 Hz or more, such as by 5 Hz or more, such as by 10 Hz or more and including by 25 Hz or more. For example, the drop drive frequency may be increased by 1% or more, such as by 5% or more, such as by 10% or more, such as by 15% or more, such as by 25% or more, such as by 50% or more, such as by 75% or more and including increasing the drop drive frequency by 90% or more. In other instances, the drop drive frequency is reduced, such as by 0.01 Hz or more, such as by 0.05 Hz or more, such as by 0.1 Hz or more, such as by 0.25 Hz or more, such as by 0.5 Hz or more, such as by 1 Hz or more, such as by 2.5 Hz or more, such as by 5 Hz or more, such as by 10 Hz or more and including by 25 Hz or more. For example, the drop drive frequency may be reduced by 1% or more, such as by 5% or more, such as by 10% or more, such as by 15% or more, such as by 25% or more, such as by 50% or more, such as by 75% or more and including reducing the drop frequency by 90% or more.

In still other embodiments, methods include adjusting the drop delay based on one or more of the calculated velocity of each particle in the flow stream, the center of mass parameter, the calculated positional velocity and the calculated drop delay. In some instances, the drop delay is increased, such as by 0.01 $\mu$s or more, such as by 0.05 $\mu$s or more, such as by 0.1 $\mu$s or more, such as by 0.3 $\mu$s or more, such as by 0.5 $\mu$s or more, such as by 1 $\mu$s or more, such as by 2.5 $\mu$s or more, such as by 5 $\mu$s or more, such as by 7.5 $\mu$s or more and including increasing the drop delay by 10 $\mu$s or more. For example, the drop delay may be increased by 1% or more, such as by 5% or more, such as by 10% or more, such as by 15% or more, such as by 25% or more, such as by 50% or more, such as by 75% or more and including increasing the drop delay by 90% or more. In other instances, the drop frequency is reduced, such as by 0.01 $\mu$s or more, such as by 0.05 $\mu$s or more, such as by 0.1 $\mu$s or more, such as by 0.3 $\mu$s or more, such as by 0.5 $\mu$s or more, such as by 1 $\mu$s or more, such as by 2.5 $\mu$s or more, such as by 5 $\mu$s or more, such as by 7.5 $\mu$s or more and including reducing the drop delay by 10 $\mu$s or more. For example, the drop delay may be reduced by 1% or more, such as by 5% or more, such as by 10% or more, such as by 15% or more, such as by 25% or more, such as by 50% or more, such as by 75% or more and including reducing the drop delay by 90% or more.

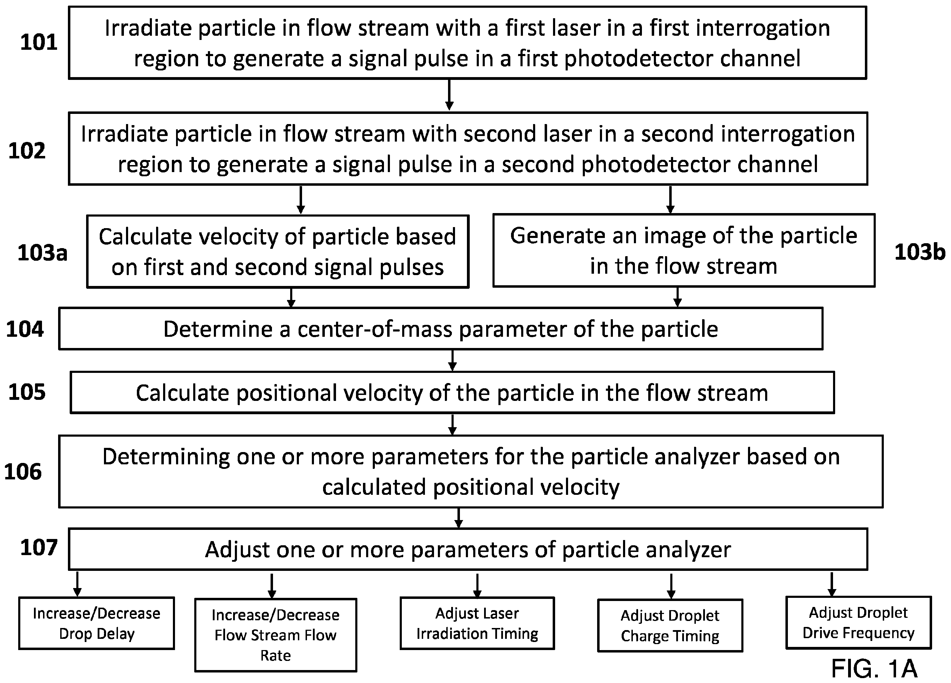

Figure 1A depicts a flow chart for calculating position velocity of a particle in a flow stream according to certain embodiments. At step 101, a particle in a flow stream is irradiated with a first laser in a first interrogation region to generate a signal pulse in a first photodetector channel. At step 102, the particle is irradiated with a second laser in a second interrogation region to generate a signal pulse in a second photodetector channel. The velocity of the particle is calculated at step 103a, where the velocity is calculated based on the time of the pulse peak generated by irradiation by the first laser in the first interrogation region and the time of the pulse peak generated by irradiation by the second laser in the second interrogation region and the distance between the position of irradiation by the first laser on the flow stream and the position of irradiation by the second laser on the flow stream. At step 103b, an image of the particle may be generated in the flow stream. A center of mass parameter for the particle is determined at step 104 for the particle, such as with imaging data or the image generated at step 103b. The positional velocity of the particle in the flow stream is calculated based on the image parameter and the velocity of the particle at step 105. One or more parameters of the particle analyzer may be determined (step 106) using the calculated position velocity of the particle, such as drop delay, timing for irradiation by each of the lasers of the system, timing for droplet charging and droplet drive frequency. In some instances, one or more parameters of the particle analyzer is adjusted at step 107 based on the calculated positional velocity.

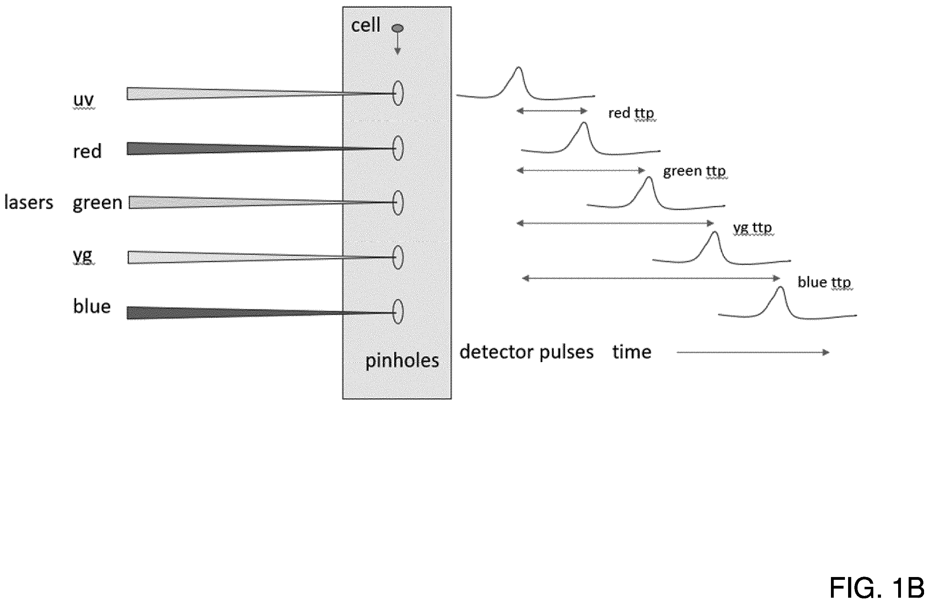

Figure 1B depicts the generation of signal pulses in response to irradiation of a particle using five spatially separated lasers according to certain embodiments. A particle (a cell) in the flow stream is irradiated by five spatially separated lasers having different laser wavelengths (ultraviolet, red, green, yellow-green and blue lasers). A signal pulse is generated in a first photodetector channel in response to light detected from irradiation of the particle by the ultraviolet laser. A second signal pulse is generated in a second photodetector channel in response to light detected from irradiation by the red laser. A third signal pulse is generated in a third photodetector channel in response to light detected from irradiation by the green laser. A fourth signal pulse is generated in a fourth photodetector channel in response to light detected from irradiation by the yellow-green laser. A fifth signal pulse is generated in a fifth photodetector channel in response to light detected from irradiation by the blue laser.

A time-to-peak (ttp) is the duration measured between each peak of the signal pulses generated in response to irradiation by the different lasers. A red time-to-peak (ttp) is a measure of the duration between the peak of the signal pulse generated in the first photodetector channel in response to irradiation by the ultraviolet laser and the peak of the signal pulse generated in the second photodetector channel in response to irradiation by the red laser. A green time-to-peak (ttp) is a measure of the duration between the peak of the signal pulse generated in the second photodetector channel in response to irradiation by the red laser and the peak of the signal pulse generated in the third photodetector channel in response to irradiation by the green laser. A yellow-green time-to-peak (ttp) is a measure of the duration between the peak of the signal pulse generated in the third photodetector channel in response to irradiation by the green laser and the peak of the signal pulse generated in the fourth photodetector channel in response to irradiation by the yellow-green laser. A blue time-to-peak (ttp) is a measure of the duration between the peak of the signal pulse generated in the fourth photodetector channel in response to irradiation by the yellow-green laser and the peak of the signal pulse generated in the fifth photodetector channel in response to irradiation by the blue laser. The velocity of particle is estimated by dividing distance between each irradiation position and the time-to-peak duration.

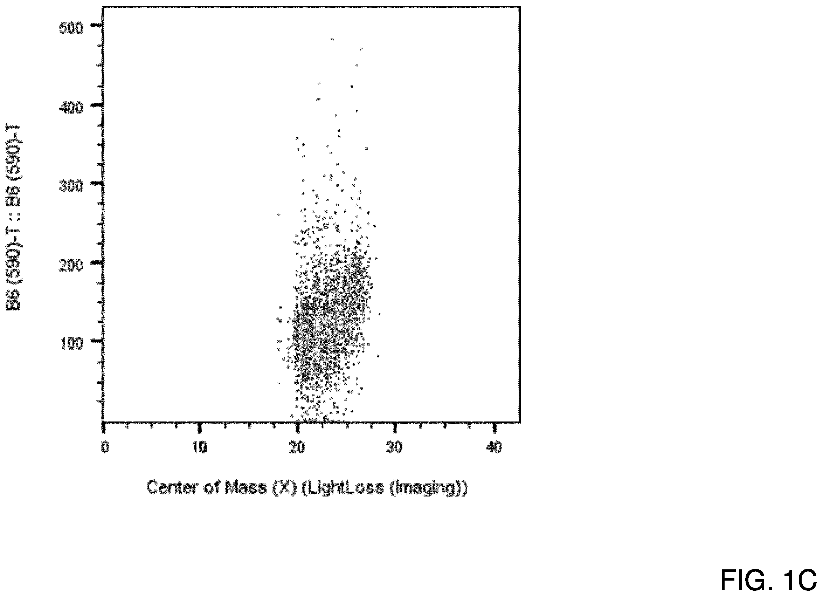

Figure 1C depicts a measure of positional dependence of the velocity of a particle in a flow stream according to certain embodiments. A blue laser is used to irradiate particles in a flow stream where each particle flows through different positions in the flow stream. The velocity of the particles is determined as described above using the time-to-peak of the pulses for the blue laser. The velocities of the particles were plotted as a function of a center-of-mass (COM) parameter calculated for each particle. The positive correlation of the plot show that with increasing COM, the time to peak has a corresponding increase. This correlation demonstrates the positional changes of the velocity and cells that are farther from the central axis move slower and take longer to reach subsequent lasers.

In certain embodiments, methods also include sorting particles of the sample. The term "sorting" is used herein in its conventional sense to refer to separating components (e.g., droplets containing cells, droplets containing non-cellular particles such as biological macromolecules) of a sample and in some instances, delivering the separated components to one or more sample collection containers. For example, methods may include sorting 2 or more components of the sample, such as 3 or more components, such as 4 or more components, such as 5 or more components, such as 10 or more components, such as 15 or more components and including sorting 25 or more components of the sample. In embodiments, methods including sorting cells based on the generated image mask of the cell.

In sorting the cell, methods include data acquisition (e.g., by determining one or more of the velocity of each particle in the flow stream, the center of mass parameter, the positional velocity and the drop delay, etc.), analysis and recording, such as with a computer, where multiple data channels record data from each detector used in generating the image, image mask or masked image of the cell (e.g., scatter detectors, brightfield photodetectors or fluorescence detectors). In these embodiments, analysis includes classifying and counting particles such that each particle is present as a set of digitized parameter values. The subject systems (described below) may be set to trigger on a selected parameter in order to distinguish the particles of interest from background and noise.

A particular subpopulation of interest may then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two-dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

In some embodiments, methods include sorting components of a sample, such as described in U.S. Patent No. U.S. Patent No. 10,006,852; 9,952,076; 9,933,341; 9,784,661; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; the disclosures of which are herein incorporated by reference in their entirety. In some embodiments, methods for sorting components of sample include sorting particles (e.g., cells in a biological sample) with an enclosed particle sorting module, such as those described in U.S. Patent Publication No. 2017/0299493, the disclosure of which is incorporated herein by reference. In certain embodiments, particles (e.g., cells) of the sample are sorted using a sort decision module having a plurality of sort decision units, such as those described in U.S. Patent Publication No. 2020/0256781, the disclosure of which is incorporated herein by reference. In some embodiments, methods for sorting components of sample include sorting particles (e.g., cells in a biological sample) with a particle sorting module having deflector plates, such as described in U.S. Patent Publication No. 2017/0299493, filed on March 28, 2017, the disclosure of which is incorporated herein by reference.

## SYSTEMS FOR DETERMINING POSITIONAL VELOCITY OF A PARTICLE IN A FLOW STREAM

Aspects of the present disclosure also include systems (e.g., particle analyzers) for practicing the subject methods. Systems according to certain embodiments include a light source having at least a first laser and a second laser, wherein the light source is configured to irradiate a sample having a plurality of particles in a flow stream with the first laser in a first interrogation region and the second laser in a second interrogation region, a light detection system comprising a photodetector configured to detect light from each particle in the sample in a first photodetector channel and a second photodetector channel and a processor having memory operably coupled to the processor where the memory includes instructions stored thereon, which when executed by the processor, cause the processor to calculate a velocity of the particle in the flow stream based on the light detected by the first photodetector and by the second photodetector, determine a parameter of the particle in the flow stream and calculate positional velocity of the particle in the flow stream based on the calculated velocity and parameter of the particle.

In embodiments, systems include two or more spatially separated light sources that are configured to irradiate a plurality of particles in a flow stream. In some embodiments, the light source is a continuous wave light source, such as where the light source provides uninterrupted light flux and maintains irradiation of particles in the flow stream with little to no undesired changes in light intensity. In some embodiments, the continuous light source emits non-pulsed or non-stroboscopic irradiation. In certain embodiments, the continuous light source provides for substantially constant emitted light intensity. For instance, the continuous light source may provide for emitted light intensity during a time interval of irradiation that varies by 10% or less, such as by 9% or less, such as by 8% or less, such as by 7% or less, such as by 6% or less, such as by 5% or less, such as by 4% or less, such as by 3% or less, such as by 2% or less, such as by 1% or less, such as by 0.5% or less, such as by 0.1% or less, such as by 0.01% or less, such as by 0.001% or less, such as by 0.0001% or less, such as by 0.00001% or less and including where the emitted light intensity during a time interval of irradiation varies by 0.000001% or less. The intensity of light output can be measured with any convenient protocol, including but not limited to, a scanning slit profiler, a charge coupled device (CCD, such as an intensified charge coupled device, ICCD), a positioning sensor, power sensor (e.g., a thermopile power sensor), optical power sensor, energy meter, digital laser photometer, a laser diode detector, among other types of photodetectors.

In certain embodiments, the light source is a laser, such as a pulsed or continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, $CO_2$ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject systems include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject systems include a solid-state laser, such as a ruby laser, an Nd:YAG laser, NdCrYAG laser, Er:YAG laser, Nd:YLF laser, Nd:$YVO_4$ laser, Nd:$YCa_4O(BO_3)_3$ laser, Nd:YCOB laser, titanium sapphire laser, thulim YAG laser, ytterbium YAG laser, ytterbium$_2O_3$ laser or cerium doped lasers and combinations thereof.

In some embodiments, the light source includes one or more pulsed light sources, such as where light is emitted at predetermined time intervals, each time interval having a predetermined irradiation duration (i.e., pulse width). In certain embodiments, the pulsed light source is configured to irradiate the photodetector with periodic flashes of light. For example, the frequency of each light pulse may be 0.0001 kHz or greater, such as 0.0005 kHz or greater, such as 0.001 kHz or greater, such as 0.005 kHz or greater, such as 0.01 kHz or greater, such as 0.05 kHz or greater, such as 0.1 kHz or greater, such as 0.5 kHz or greater, such as 1 kHz or greater, such as 2.5 kHz or greater, such as 5 kHz or greater, such as 10 kHz or greater, such as 25 kHz or greater, such as 50 kHz or greater and including 100 kHz or greater. In certain instances, the frequency of pulsed irradiation by the light source ranges from 0.00001 kHz to 1000 kHz, such as from 0.00005 kHz to 900 kHz, such as from 0.0001 kHz to 800 kHz, such as from 0.0005 kHz to 700 kHz, such as from 0.001 kHz to 600 kHz, such as from 0.005 kHz to 500 kHz, such as from 0.01 kHz to 400 kHz, such as from 0.05 kHz to 300 kHz, such as from 0.1 kHz to 200 kHz and including from 1 kHz to 100 kHz. The duration of light irradiation for each light pulse (i.e., pulse width) may vary and may be 0.000001 ms or more, such as 0.000005 ms or more, such as 0.00001 ms or more, such as 0.00005 ms or more, such as 0.0001 ms or more, such as 0.0005 ms or more, such as 0.001 ms or more, such as 0.005 ms or more, such as 0.01 ms or more, such as 0.05 ms or more, such as 0.1 ms or more, such as 0.5 ms or more, such as 1 ms or more, such as 2 ms or more, such as 3 ms or more, such as 4 ms or more, such as 5 ms or more, such as 10 ms or more, such as 25 ms or more, such as 50 ms or more, such as 100 ms or more and including 500 ms or more. For example, the duration of light irradiation may range from 0.000001 ms to 1000 ms, such as from 0.000005 ms to 950 ms, such as from 0.00001 ms to 900 ms, such as from 0.00005 ms to 850 ms, such as from 0.0001 ms to 800 ms, such as from 0.0005 ms to 750 ms, such as from 0.001 ms to 700 ms, such as from 0.005 ms to 650 ms, such as from 0.01 ms to 600 ms, such as from 0.05 ms to 550 ms, such as from 0.1 ms to 500 ms, such as from 0.5 ms to 450 ms, such as from 1 ms to 400 ms, such as from 5 ms to 350 ms and including from 10 ms to 300 ms.

In embodiments, systems may include any convenient light source and may include laser and non-laser light sources. In certain embodiments, the light source is a non-laser light source, such as a narrow band light source emitting a particular wavelength or a narrow range of wavelengths. In some instances, the narrow band light sources emit light having a narrow range of wavelengths, such as for example, 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Any convenient narrow band light source protocol may be employed, such as a narrow wavelength LED.

In other embodiments, the light source is a broadband light source, such as a broadband light source coupled to one or more optical bandpass filters, diffraction gratings, monochromators or any combination thereof. In some instances, the broadband light source emits light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Any convenient broadband light source protocol may be employed, such as a halogen lamp, deuterium arc lamp, xenon arc lamp, stabilized fiber-coupled broadband light source, a broadband LED with continuous spectrum, superluminescent emitting diode, semiconductor light emitting diode, wide spectrum LED white light source, an multi-LED integrated white light source, among other broadband light sources or any combination thereof. In certain embodiments, light sources include an array of LEDs. In certain instances, the light source includes a plurality of monochromatic light emitting diodes where each monochromatic light emitting diode outputs light having a different wavelength. In some instances, the light source includes a plurality of polychromatic light emitting diodes outputting light having a predetermined spectral width, such as where the plurality of polychromatic light emitting diodes collectively output light having a spectral width that ranges from 200 nm to 1500 nm, such as from 225 nm to 1475 nm, such as from 250 nm to 1450 nm, such as from 275 nm to 1425 nm, such as from 300 nm to 1400 nm, such as from 325 nm to 1375 nm, such as from 350 nm to 1350 nm, such as from 375 nm to 1325 nm, such as from 400 nm to 1300 nm, such as from 425 nm to 1275 nm, such as from 450 nm to 1250 nm, such as from 475 nm to 1225 nm and including from 500 nm to 1200 nm.

In some embodiments, the light source is a narrow bandwidth light source. In some instance, the light source is a light source that outputs a specific wavelength from 200 nm to 1500 nm, such as from 250 nm to 1250 nm, such as from 300 nm to 1000 nm, such as from 350 nm to 900 nm and including from 400 nm to 800 nm. In certain embodiments, the continuous wave light source emits light having a wavelength of 365 nm, 385 nm, 405 nm, 460 nm, 490 nm, 525 nm, 550 nm, 580 nm, 635 nm, 660 nm, 740 nm, 770 nm or 850 nm.

In some embodiments, the light source emits light having wavelengths that overlap, such as where the output spectrum of one or more components of the lights source overlap by 1 nm or more, such as by 2 nm or more, such as by 3 nm or more, such as by 4 nm or more, such as by 5 nm or more, such as by 6 nm or more, such as by 7 nm or more, such as by 8 nm or more, such as by 9 nm or more, such as by 10 nm or more and including by 20 nm or more. In some embodiments, the wavelengths of light emitted by the light sources exhibit no overlap. For example, the output spectrum of the light sources may be separated by 1 nm or more, such as by 2 nm or more, such as by 3 nm or more, such as by 4 nm or more, such as by 5 nm or more, such as by 6 nm or more, such as by 7 nm or more, such as by 8 nm or more, such as by 9 nm or more, such as by 10 nm or more and including by 20 nm or more.

In embodiments, light sources of the subject systems are spatially separated. In some embodiments, systems include 2 or more spatially separated light sources, such as 3 or more, such as 4 or more, such as 5 or more, such as 6 or more and including 7 or more spatially separated light sources. In some embodiments, one or more light sources are lasers, such as 2 or more spatially separated lasers, such as 3 or more, such as 4 or more, such as 5 or more, such as 6 or more and including 7 or more spatially separate lasers. Each light source is configured to irradiate a distinct position on the flow stream. In some instances, each of the light sources is configured to independently irradiate positions on the flow stream that are spaced apart from each other by 0.01 $\mu$m or more, such as by 0.05 $\mu$m or more, such as by 0.1 $\mu$m or more, such as by 0.5 $\mu$m or more, such as by 1 $\mu$m or more, such as by 2 $\mu$m or more, such as by 3 $\mu$m or more, such as by 4 $\mu$m or more, such as by 5 $\mu$m or more, such as by 10 $\mu$m or more, such as by 15 $\mu$m or more, such as by 25 $\mu$m or more, such as by 50 $\mu$m or more, such as by 100 $\mu$m or more, such as by 150 $\mu$m or more, such as by 200 $\mu$m or more, such as by 250 $\mu$m or more, such as by 500 $\mu$m or more, such as by 750 $\mu$m or more and including by 1000 $\mu$m or more. For example, each of the light sources is configured to independently irradiate positions on the flow stream that are spaced apart from each other by a distance of from 0.01 $\mu$m to 2500 $\mu$m, such as from 0.05 $\mu$m to 2000 $\mu$m, such as from 0.1 $\mu$m to 1500 $\mu$m, such as from 0.5 $\mu$m to 1000 $\mu$m, such as from 1 $\mu$m to 500 $\mu$m, such as from 5 $\mu$m to 400 $\mu$m and including from 10 $\mu$m to 100 $\mu$m. In certain instances, each of the light sources is configured to independently irradiate positions on the flow stream that are spaced apart from each other by 10 $\mu$m or less, such as 9 $\mu$m or less, such as 8 $\mu$m or less, such as 7 $\mu$m or less, such as 6 $\mu$m or less and including positions on the flow stream that are spaced apart by 5 $\mu$m or less.

In some embodiments, systems include a first laser configured to irradiate a flow stream in a first interrogation region and a second laser in a second interrogation region. In some instances, systems include a plurality of lasers and the lasers are configured to irradiate a plurality of interrogation regions along the flow stream. The size of each interrogation region may vary depending on the properties of the flow nozzle used to generate the flow stream, such as the size of the nozzle orifice and sample injection port size. In some embodiments, the interrogation region may have a width that is 0.01 mm or more, such as 0.05 mm or more, such as 0.1 mm or more, such as 0.5 mm or more, such as 1 mm or more, such as 2 mm or more, such as 3 mm or more, such as 5 mm or more and including 10 mm or more. The length of the interrogation region may also vary, ranging in some instances along 0.01 mm or more, such as 0.1 mm or more, such as 0.5 mm or more, such as 1 mm or more, such as 1.5 mm or more, such as 2 mm or more, such as 3 mm or more, such as 5 mm or more, such as 10 or more, such as 15 mm or more, such as 20 mm or more, such as 25 mm or more and including 50 mm or more.

Each interrogation region in certain instances may be configured to facilitate irradiation of a planar cross-section of an emanating flow stream or may be configured to facilitate irradiation of a diffuse field (e.g., with a diffuse laser or lamp) of a predetermined length. In some embodiments, the interrogation region of the flow stream in the subject systems includes a transparent window that facilitates irradiation of a predetermined length of an emanating flow stream, such as 1 mm or more, such as 2 mm or more, such as 3 mm or more, such as 4 mm or more, such as 5 mm or more and including 10 mm or more. Depending on the light source used to irradiate the emanating flow stream (as described below), the interrogation region may be configured to pass light that ranges from 100 nm to 1500 nm, such as from 150 nm to 1400 nm, such as from 200 nm to 1300 nm, such as from 250 nm to 1200 nm, such as from 300 nm to 1100 nm, such as from 350 nm to 1000 nm, such as from 400 nm to 900 nm and including from 500 nm to 800 nm.

Each light source may be positioned by any suitable distance from the flow stream, such as at a distance of 0.001 mm or more, such as 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, each light source may be positioned at any suitable angle relative to the flow stream such as at an angle ranging from 10° to 90°, such as from 15° to 85°, such as from 20° to 80°, such as from 25° to 75° and including from 30° to 60°, for example at a 90° angle.

Light sources according to certain embodiments may also include one or more optical adjustment components. The term "optical adjustment" is used herein in its conventional sense to refer to any device that is capable of changing the spatial width of irradiation or some other characteristic of irradiation from the light source, such as for example, irradiation direction, wavelength, beam width, beam intensity and focal spot. Optical adjustment protocols may be any convenient device which adjusts one or more characteristics of the light source, including but not limited to lenses, mirrors, filters, fiber optics, wavelength separators, pinholes, slits, collimating protocols and combinations thereof. In certain embodiments, systems of interest include one or more focusing lenses. The focusing lens, in one example may be a de-magnifying lens. In another example, the focusing lens is a magnifying lens. In other embodiments, systems of interest include one or more mirrors. In still other embodiments, systems of interest include fiber optics.

Where the optical adjustment component is configured to move, the optical adjustment component may be configured to be moved continuously or in discrete intervals. In some embodiments, movement of the optical adjustment component is continuous. In other embodiments, the optical adjustment component is movable in discrete intervals, such as for example in 0.01 micron or greater increments, such as 0.05 micron or greater, such as 0.1 micron or greater, such as 0.5 micron or greater, such as 1 micron or greater, such as 10 micron or greater, such as 100 microns or greater, such as 500 microns or greater, such as 1 mm or greater, such as 5 mm or greater, such as 10 mm or greater and including 25 mm or greater increments.

Any displacement protocol may be employed to move the optical adjustment component structures, such as coupled to a movable support stage or directly with a motor actuated translation stage, leadscrew translation assembly, geared translation device, such as those employing a stepper motor, servo motor, brushless electric motor, brushed DC motor, micro-step drive motor, high resolution stepper motor, among other types of motors.

Photodetectors of the subject systems may be any convenient light detecting protocol, including but not limited to photosensors or photodetectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from $0.01 \text{ cm}^2$ to $10 \text{ cm}^2$, such as from $0.05 \text{ cm}^2$ to $9 \text{ cm}^2$, such as from $0.1 \text{ cm}^2$ to $8 \text{ cm}^2$, such as from $0.5 \text{ cm}^2$ to $7 \text{ cm}^2$ and including from $1 \text{ cm}^2$ to $5 \text{ cm}^2$.

In embodiments of the present disclosure, the photodetector may be configured to detect light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light at 400 or more different wavelengths.

In embodiments, photodetectors may be configured to measure light continuously or in discrete intervals. In some instances, detectors of interest are configured to take measurements of the light continuously. In other instances, detectors of interest are configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

The photodetectors may be configured to take measurements of the light from the light source one or more times during each discrete time interval, such as 2 or more times, such as 3 or more times, such as 5 or more times and including 10 or more times. In certain embodiments, the light from the light source is measured by the photodetector 2 or more times, with the data in certain instances being averaged.

In some embodiments, light detection systems are configured to detect emitted light from particles in the sample, such as particle luminescence (i.e., fluorescence or phosphorescence). In other embodiments, light detection systems are configured to detect transmitted light, such as where the light detection system includes a brightfield light detector.

In certain embodiments, light detection systems are configured to detect scattered light. In embodiments, scattered light according to the present disclosure is not fluorescence or phosphorescence. In some embodiments, scattered light detected by scatter photodetectors of the subject systems includes Mie scattering by particles in the flow stream. In other embodiments, scattered light detected by scatter photodetectors of the subject systems includes Rayleigh scattering by particles in the flow stream. In still other embodiments, scattered light detected by scatter photodetectors of the subject systems includes Mie scattering and Rayleigh scattering by particles in the flow stream. The scatter photodetectors may be side scatter photodetectors, forward scatter photodetectors, back scatter photodetectors and combinations thereof.

Light detection systems according to certain embodiments include an unfiltered light scatter detector. The term "unfiltered" is used herein to refer to a light scatter detector which receives light from a sample that has not been conveyed through an optical component that is configured to restrict, reduce or otherwise limit the propagation of one or more wavelengths of the light (e.g., the wavelengths of the light of the lasers used to irradiate the sample) from the sample to the active surface of the light scatter detector. For example, in some embodiments, unfiltered light scatter detectors of interest are not in optical communication with the sample through a bandpass filter. In other embodiments, unfiltered light scatter detectors of interest are not in optical communication with the sample through a dichroic mirror. In certain instances, scattered light from the sample is conveyed directly to the active surface of the unfiltered light scatter detector. In other instances, scattered light from the sample is conveyed to the active surface of the unfiltered light scatter detector through one or more light propagating optical components, such as optical components which change the direction or focus of the light beam without reducing, restricting or limiting the propagation of one or more wavelengths of the light. In certain embodiments, scattered light from the sample is conveyed to the active surface of the unfiltered light scatter detector using one or more beam splitters, mirrors, lenses or collimators.

In some embodiments, light detection systems include one or more filtered light scatter detectors. The term "filtered" is used herein to refer to a light scatter detector which receives light from a sample that has been conveyed through an optical component that is configured to restrict, reduce or limit the propagation of at least one or more wavelengths of the light (e.g., one or more of the wavelengths of the light of the lasers used to irradiate the sample) from the sample to the active surface of the light scatter detector. The light conveyed to the light scatter photodetector may include an optical component that limits the propagation of one or more different wavelengths of light, such as 5 or more, such as 10 or more, such as 25 or more, such as 50 or more, such as 100 or more, such as 200 or more, such as 300 or more and including limiting the propagation of 500 or more different wavelengths of light. For example, in some embodiments, scattered light from the sample is conveyed to the active surface of the filtered light scatter detector through a bandpass filter. In other embodiments, scattered light from the sample is conveyed to the active surface of the filtered light scatter detector through a dichroic mirror.

Scattered light may be detected by each photodetector at an angle with respect to the incident beam of light irradiation, such as at an angle of 1° or more, such as 10° or more, such as 15° or more, such as 20° or more, such as 25° or more, such as 30° or more, such as 45° or more, such as 60° or more, such as 75° or more, such as 90° or more, such as 135° or more, such as 150° or more and including where the scattered light detector is configured to detect light from particles in the sample at an angle that is 180° or more with respect to the incident beam of light irradiation. In certain instances, one or more of the filtered and unfiltered light scatter detectors is a side scatter photodetector, such as where the photodetector is positioned to detect scattered light that is propagated from 30° to 120° with respect to the incident beam of light irradiation, such as from 45° to 105° and including from 60° to 90°. In certain instances, one or more of the filtered and unfiltered light scatter detectors is a side scatter photodetector positioned at an angle of 90° with respect to the incident beam of light irradiation. In other instances, one or more of the filtered and unfiltered light scatter detector is a forward scatter detector, such as where the detector is positioned to detect scattered light that is propagated from 120° to 240° with respect to the incident beam of light irradiation, such as from 100° to 220°, such as from 120° to 200° and including from 140° to 180° with respect to the incident beam of light irradiation. In certain instances, one or more of the filtered and unfiltered light scatter detectors is a front scatter photodetector positioned to detect scattered light that is propagated at an angle of 180° with respect to the incident beam of light irradiation. In yet other instances, one or more of the filtered and unfiltered light scatter detectors is a back scatter photodetector positioned to detect scattered light that is propagated from 1° to 30° with respect to the incident beam of light irradiation, such as from 5° to 25° and including from 10° to 20° with respect to the incident beam of light irradiation. In certain instances, one or more of the filtered and unfiltered light scatter detectors is a back scatter photodetector positioned to detect scattered light that is propagated at an angle of 30° with respect to the incident beam of light irradiation.

Light from each interrogation region on the flow stream is detected in two or more photodetector channels, such as 3 or more, such as 4 or more, such as 5 or more, such as 6 or more, such as 7 or more, such as 8 or more, such as 9 or more and including 10 or more photodetector channels. In some embodiments, light is detected in a different photodetector for each light source (e.g., each laser) used to irradiate the flow stream. For instance, where the particles in the flow stream is irradiated by a first laser and a second laser, light each particle in the flow stream irradiated by the first laser may be detected by a first photodetector channel and light from each particle in the flow stream irradiated by the second laser may be detected by a second photodetector channel. In certain embodiments, scattered light from each particle in the flow stream irradiated by the first laser is detected by a first photodetector channel and scattered light from each particle in the flow stream irradiated by the second laser is detected by a second photodetector channel.

In embodiments, the memory includes instructions which cause the processor to generate one or more signal pulses in each photodetector channel in response to detected light. In some embodiments, the memory includes instructions for generating a plurality of signal pulses in each photodetector channel in response to the detected light, such as 2 or more signal pulses, such as 3 or more signal pulses, such as 4 or more signal pulses, such as 5 or more signal pulses, such as 6 or more signal pulses, such as 7 or more signal pulses, such as 8 or more signal pulses, such as 9 or more signal pulses and including generating 10 or more signal pulses in each photodetector channel in response to detected light. In some embodiments, the memory includes instructions to generate one or more signal pulses in a different photodetector channel in response to light detected from particles irradiated by each light source (e.g., each laser). For instance, where the particles in the flow stream is irradiated by a first laser and a second laser, a signal pulse may be generated in a first photodetector channel in response to light detected from each particle that is irradiated by the first laser and a signal pulse may be generated in a second photodetector channel in response to light detected from each particle that is irradiated by the second laser.

In some embodiments, the signal pulse is a voltage pulse. The voltage pulse may be a pulse of 0.001 mV or more, such as by 0.005 mV or more, such as by 0.01 mV or more, such as by 0.05 mV or more, such as by 0.1 mV or more, such as by 0.5 mV or more, such as by 1 mV or more, such as by 5 mV or more, such as by 10 mV or more, such as by 25 mV or more, such as by 50 mV or more, such as by 100 mV or more, such as by 250 mV or more, such as by 500 mV or more, such as by 1000 mV or more, such as by 2500 mV or more and including by 5000 mV or more. In some embodiments, a signal pulse is generated in each photodetector channel when the detected light generates a voltage which exceeds a predetermined threshold of 0.00001 mV or more, such as 0.00005 mV or more, such as 0.0001 mV or more, such as 0.0005 mV or more, such as 0.001 mV or more, such as 0.005 mV or more, such as 0.01 mV or more, such as 0.05 mV or more, such as 0.1 mV or more, such as 0.5 mV or more, such as 1 mV or more, such as 5 mV or more, such as 10 mV or more, such as 25 mV or more, such as 50 mV or more, such as 100 mV or more, such as 250 mV or more, such as 500 mV or more, such as 1000 mV or more, such as 2500 mV or more and including a predetermined threshold of 5000 mV or more.

In some embodiments, the memory includes instructions for determining an amount of time between photodetector signal pulses. In some instances, the memory includes instructions for determining the amount of time between signal pulses in two or more different photodetector channels, such as 3 or more, such as 4 or more, such as 5 or more, such as 6 or more, such as 7 or more, such as 8 or more, such as 9 or more, such as 10 or more, such as 12 or more, such as 16 or more, such as 24 or more, such as 24 or more, such as 32 or more, such as 64 or more, such as 128 or more, such as 256 or more and including determining the amount of time between signal pulses in 512 or more different photodetector channels. In some instances, the time between signal pulses in the two or more different photodetector channels may be 0.00001 $\mu$s or more, such as 0.00005 $\mu$s or more, such as 0.0001 $\mu$s or more, such as 0.0005 $\mu$s or more, such as 0.001 $\mu$s or more, such as 0.005 $\mu$s, such as 0.01 $\mu$s or more, such as 0.05 $\mu$s or more, such as 0.1 $\mu$s or more, such as 0.5 $\mu$s or more, such as 1 $\mu$s or more, such as 5 $\mu$s or more, such as 10 $\mu$s or more, such as 25 $\mu$s or more, such as 50 $\mu$s or more, such as 100 $\mu$s or more, such as 500 $\mu$s or more and including 1000 $\mu$s or more. In certain instances, the time between signal pulses in the two or more different photodetector channels ranges from 0.00001 $\mu$s to 5000 $\mu$s, such as from 0.0001 $\mu$s to 4000 $\mu$s, such as from 0.001 $\mu$s to 3000 $\mu$s, such as from 0.01 $\mu$s to 2000 $\mu$s, such as from 0.1 $\mu$s to 1000 $\mu$s and including from 1 $\mu$s to 500 $\mu$s.

In some embodiments, the memory includes instructions for determining a time-to-peak duration between photodetector signal pulses. The term "time-to-peak" is used herein in its conventional sense to refer to the duration between the peak (e.g., value of highest detected voltage in the photodetector channel during a signal pulse) of the generated signal pulse in each photodetector channel. For example, the time-to-peak duration may be determined between signal pulses in two or more different photodetector channels, such as 3 or more, such as 4 or more, such as 5 or more, such as 6 or more, such as 7 or more, such as 8 or more, such as 9 or more, such as 10 or more, such as 12 or more, such as 16 or more, such as 24 or more, such as 24 or more, such as 32 or more, such as 64 or more, such as 128 or more, such as 256 or more and including determining the time-to-peak duration between signal pulses in 512 or more different photodetector channels. In some instances, the time-to-peak duration between signal pulses in the two or more different photodetector channels may be 0.00001 $\mu$s or more, such as 0.00005 $\mu$s or more, such as 0.0001 $\mu$s or more, such as 0.0005 $\mu$s or more, such as 0.001 $\mu$s or more, such as 0.005 $\mu$s, such as 0.01 $\mu$s or more, such as 0.05 $\mu$s or more, such as 0.1 $\mu$s or more, such as 0.5 $\mu$s or more, such as 1 $\mu$s or more, such as 5 $\mu$s or more, such as 10 $\mu$s or more, such as 25 $\mu$s or more, such as 50 $\mu$s or more, such as 100 $\mu$s or more, such as 500 $\mu$s or more and including 1000 $\mu$s or more. In certain instances, the time-to-peak duration between signal pulses in the two or more different photodetector channels ranges from 0.00001 $\mu$s to 5000 $\mu$s, such as from 0.0001 $\mu$s to 4000 $\mu$s, such as from 0.001 $\mu$s to 3000 $\mu$s, such as from 0.01 $\mu$s to 2000 $\mu$s, such as from 0.1 $\mu$s to 1000 $\mu$s and including from 1 $\mu$s to 500 $\mu$s.

In some embodiments, the memory includes instructions for calculating the velocity of each particle of interest in the flow stream. In some instances, the velocity of 1 or more particles in the sample is independently determined, such as the velocities of 2 or more particles in the sample, such as the velocities of 5 or more particles in the sample, such as the velocities of 10 or more particles in the sample, such as the velocities of 25 or more particles in the sample, such as the velocities of 50 or more particles in the sample, such as the velocities of 100 or more particles in the sample, such as the velocities of 250 or more particles in the sample and include independently calculating the velocities of 500 or more particles in the sample. For example, the velocities of 0.0001% or more of the particles in the sample may be independently calculated, such as 0.0005% or more, such as 0.001% or more, such as 0.005% or more, such as 0.01% or more, such as 0.05% or more, such as 0.1% or more, such as 0.5% or more, such as 1% or more, such as 5% or more, such as 10% or more, such as 25% or more, such as 50% or more, such as 75% or more and including independently calculating the velocities of 90% or more of the particles in the sample.

In some embodiments, the memory includes instructions for calculating the velocity of each particle based on the amount of time between a signal pulse in two or more photodetector channels and the distance between two or more interrogation regions. In one embodiment, the memory includes instructions for calculating the velocity of each particle based on the amount of time between a signal pulse from a first photodetector channel and a signal pulse from a second photodetector channel and the distance between the interrogation region of the first laser and the interrogation region of the second laser. In some instances, the memory includes instructions for determining the distance between the first interrogation region and the second interrogation region based on the distance between the position of irradiation by the first laser on the flow stream and the position of irradiation by the second laser on the flow stream. For example, depending on the particle analyzer in certain instances the distance between the first interrogation region and the second interrogation region is 0.01 $\mu$m or more, such as by 0.05 $\mu$m or more, such as by 0.1 $\mu$m or more, such as by 0.5 $\mu$m or more, such as by 1 $\mu$m or more, such as by 2 $\mu$m or more, such as by 3 $\mu$m or more, such as by 4 $\mu$m or more, such as by 5 $\mu$m or more, such as by 10 $\mu$m or more, such as by 15 $\mu$m or more, such as by 25 $\mu$m or more, such as by 50 $\mu$m or more and including by 100 $\mu$m or more. In other instances, the distance between the first interrogation region and the second interrogation region ranges from 0.01 $\mu$m to 500 $\mu$m, such as from 0.05 $\mu$m to 450 $\mu$m, such as from 0.1 $\mu$m to 400 $\mu$m, such as from 0.5 $\mu$m to 350 $\mu$m, such as from 1 $\mu$m to 200 $\mu$m, such as from 5 $\mu$m to 150 $\mu$m and including from 10 $\mu$m to 100 $\mu$m.

In some embodiments, particles in a flow stream are characterized by nonuniform velocities where the particles in the flow stream independently have different velocities. In some instances, the velocity of the particle is different between one or more of the interrogation regions of the flow stream, such as where the particle exhibits a greater flow rate between two or more of the interrogation regions. In some instances, the particle exhibits a slower flow rate between two regions of the interrogation regions of the flow stream. In some instances, the memory includes instructions for determining the flow rate between two or more of the interrogation regions, such as between 3 or more, such as between 4 or more and including between 5 or more interrogation regions. In some instances, the memory includes instructions for determining whether there are outlier velocities between interrogation regions. In some embodiments, the memory includes instructions for determining whether there is laser pointing instability based on one or more outlier velocities, such as where a laser is determined to have pointing instability when there are outlier velocities between interrogation regions.

In some instances, the non-uniformity of the velocities of the particles is dependent on the position of the particle in the flow stream. In some instances, the flow stream includes a sheath fluid flow and a sample core stream flow. In a flow stream having a core stream and a surrounding sheath flow, in certain instances, the velocity of particles flowing close to the center of the core stream is higher than the velocity of particles flowing along the periphery of the core stream.

In embodiments, the memory includes instructions for calculating the positional velocity of the particle in the flow steram. In some instances, the memory includes instructions for determining the velocity of the particle at different positions from the center of the flow stream, such as where the velocity is determined at predetermined increments in distances from the center of the flow stream. In some instances, the memory includes instructions for determining the velocity of the particle in the flow stream at increments of 0.0001 $\mu$m or more from the center of the flow stream (e.g., at 0.0001 $\mu$m from the center of the flow stream, 0.0002 $\mu$m from the center of the flow stream, 0.0003 $\mu$m from the center of the flow stream, etc.), such as at increments of 0.0005 $\mu$m or more, such as 0.001 $\mu$m or more, such as 0.005 $\mu$m or more, such as 0.01 $\mu$m or more, such as 0.05 $\mu$m or more, such as 0.1 $\mu$m or more, such as 0.5 $\mu$m and including at increments of 1 $\mu$m or more from the center of the flow stream.

In some embodiments, the memory includes instructions for determining the position of the particle in the flow stream by plotting the flow stream on a Cartesian plot and determining the Cartesian coordinates of the particle. For example, the Cartesian plot may be a plot of the cross-section of the flow stream such that the cross-sectional position on the Cartesian plot (e.g., the position on an x-axis and the position on a y-axis) is determined for the particle. In some instances, the position of the particle in the flow stream is determined based on the polar coordinates of the flow stream. In certain instances, the cross-section of the flow stream is plotted and the polar coordinates of the particle in the flow stream is determined as the position of the particle in the flow stream.

In some embodiments, the position of the particle is measured as the distance from the center of the flow stream, such as where the particle is from 0.0001 $\mu$m or more from the center of the flow stream, such as 0.0005 $\mu$m or more, such as 0.001 $\mu$m or more, such as 0.005 $\mu$m or more, such as 0.01 $\mu$m or more, such as 0.05 $\mu$m or more, such as 0.1 $\mu$m or more, such as 0.5 $\mu$m or more, such as 1 $\mu$m or more, such as 5 $\mu$m or more, such as 10 $\mu$m or more, such as 25 $\mu$m or more, such as 50 $\mu$m or more, such as 100 $\mu$m or more, such as 250 $\mu$m or more, such as 500 $\mu$m or more, such as 1000 $\mu$m or more and including 5000 $\mu$m or more from the center of the flow stream. For example, the position of the particle may be from 0.0001 $\mu$m to 10000 $\mu$m from the center of the flow stream, such as from 0.0005 $\mu$m to 5000 $\mu$m, such as from 0.001 $\mu$m to 1000 $\mu$m, such as from 0.005 $\mu$m to 500 $\mu$m, such as from 0.01 $\mu$m to 100 $\mu$m, such as from 0.05 $\mu$m to 50 $\mu$m and including from 0.1 $\mu$m to 25 $\mu$m from the center of the flow stream.

In some embodiments, the position of the particle is measured as the distance from the wall of the flow channel (e.g., the outer periphery of the flow stream), such as where the particle is from 0.0001 $\mu$m or more from the wall of the flow channel, such as 0.0005 $\mu$m or more, such as 0.001 $\mu$m or more, such as 0.005 $\mu$m or more, such as 0.01 $\mu$m or more, such as 0.05 $\mu$m or more, such as 0.1 $\mu$m or more, such as 0.5 $\mu$m or more, such as 1 $\mu$m or more, such as 5 $\mu$m or more, such as 10 $\mu$m or more, such as 25 $\mu$m or more, such as 50 $\mu$m or more, such as 100 $\mu$m or more, such as 250 $\mu$m or more, such as 500 $\mu$m or more, such as 1000 $\mu$m or more and including 5000 $\mu$m or more from the wall of the flow channel. For example, the position of the particle may be from 0.0001 µm to 10000 µm from the wall of the flow channel, such as from 0.0005 µm to 5000 µm, such as from 0.001 µm to 1000 µm, such as from 0.005 µm to 500 µm, such as from 0.01 µm to 100 µm, such as from 0.05 µm to 50 µm and including from 0.1 µm to 25 µm from the wall of the flow channel.

In some instances, the memory includes instructions for calculating the positional velocity of a particle in the flow stream according using a determined parameter of the particle. In some instances, the memory includes instructions for determining an image parameter of the particle in the flow stream. In some instances, the memory includes instructions for generating the image parameter from imaging data for the particle from the measured light. In some instances, the memory include instructions for generating the image parameter from an image of the particle from the detected light. One or more images may be generated from the measured light. In some embodiments, the memory includes instructions for generating a single image for each particle from each form of detected light. In other embodiments, the memory includes instructions for generating a plurality of images for each particle, such as 2 or more, such as 3 or more, such as 5 or more, such as 10 or more and including 25 or more images of the particle. For example, the memory includes instructions for generating a first image of the particle from detected light absorption; instructions for generating a second image of the cell from detected light scatter and instructions for generating a third image of the cell from detected light emission. In other embodiments, the memory includes instructions for generating two or more images from each form of detected light, such as 3 or more, such as 4 or more, such as 5 or more and including 10 or more images or a combination thereof.

In some instances, the memory includes instructions for generating one or more greyscale images of the particle. In some embodiments, the memory includes instructions for determining a pixel intensity threshold from the greyscale image where the pixel intensity threshold value is used to convert each pixel into a binary value that is used to generate the image of the particle. In certain instances, the image of the particle is a binary pixel image of the particle such as where each pixel is assigned a binary pixel value of 1 (e.g., where the intensity of the pixel exceeds a predetermined threshold) or a binary pixel value of 0 (e.g., where the intensity of the pixel falls below a predetermined threshold).

In some embodiments, the memory includes calculating one or more image parameters from the generated images of the particles. In some instances, the memory includes instructions for calculating a center of mass image parameter from the generated image. In some instances, the memory includes instructions for calculating a delta center of mass image parameter from the generated image. In some instances, the memory includes instructions for calculating a diffusivity image parameter from the generated image. In some instances, the memory includes instructions for calculating an eccentricity image parameter from the generated image. In some instances, the memory includes instructions for calculating a long axis moment image parameter from the generated image. In some instances, the memory includes instructions for calculating a maximum intensity image parameter from the generated image. In some instances, the memory includes instructions for calculating a radial moment image parameter from the generated image. In some instances, the memory includes instructions for calculating a short axis moment image parameter from the generated image. In some instances, the memory includes instructions for calculating a particle size image parameter from the generated image. In some instances, the memory includes instructions for calculating a total intensity image parameter from the generated image. In some instances, the memory includes instructions for calculating a particle light loss image parameter from the generated image. In some instances, the memory includes instructions for calculating a forward scattered light image parameter from the generated image. In some instances, the memory includes instructions for calculating a side scattered light image parameter from the generated image. In some instances, the memory includes instructions for calculating an image moment from the generated image. In some instances, the memory includes instructions for calculating the center of mass parameter from the image moment of the image. In other instances, the memory includes instructions for calculating the orientation of the cell from the image moment of the image. In still other instances, the memory includes instructions for calculating the eccentricity of the cell from the image moment of the image.

In some embodiments, the memory includes instructions for calculating the positional velocity of the particle in the flow stream based on the velocity of the particle and a center-of-mass (COM) parameter. In some instances, the memory includes instructions for calculating the center-of-mass parameter from an image moment and the generated image of the particle. For example, the center of mass of the particle may be determined from the calculated image moment and the generated image according to:

$$\text{Center of Mass} = \frac{M_{1,0}}{M_{0,0}}$$

In some embodiments, the center of mass parameter includes the position of the particle in the flow stream. In some instances, the position of the particle in the flow stream is based on the Cartesian coordinates of the particle as plotted on a Cartesian plot. For example, the Cartesian plot may be a plot of the cross-section of the flow stream such that the cross-sectional position on the Cartesian plot (e.g., the position on an x-axis and the position on a y-axis) is determined for the particle. In some instances, the position of the particle in the flow stream is based on the polar coordinates of the particle in the flow stream.

In some embodiments, the position of the particle for determining the center of mass parameter is the distance of the particle from the center of the flow stream, such as where the particle is from 0.0001 $\mu$m or more from the center of the flow stream, such as 0.0005 $\mu$m or more, such as 0.001 $\mu$m or more, such as 0.005 $\mu$m or more, such as 0.01 $\mu$m or more, such as 0.05 $\mu$m or more, such as 0.1 $\mu$m or more, such as 0.5 $\mu$m or more, such as 1 $\mu$m or more, such as 5 $\mu$m or more, such as 10 $\mu$m or more, such as 25 $\mu$m or more, such as 50 $\mu$m or more, such as 100 $\mu$m or more, such as 250 $\mu$m or more, such as 500 $\mu$m or more, such as 1000 $\mu$m or more and including 5000 $\mu$m or more from the center of the flow stream. For example, the position of the particle may be from 0.0001 $\mu$m to 10000 $\mu$m from the center of the flow stream, such as from 0.0005 $\mu$m to 5000 $\mu$m, such as from 0.001 $\mu$m to 1000 $\mu$m, such as from 0.005 $\mu$m to 500 $\mu$m, such as from 0.01 $\mu$m to 100 $\mu$m, such as from 0.05 $\mu$m to 50 $\mu$m and including from 0.1 $\mu$m to 25 $\mu$m from the center of the flow stream.

In some embodiments, the position of the particle for determining the center of mass parameter is the distance of the particle from the wall of the flow channel (e.g., the outer periphery of the flow stream), such as where the particle is from 0.0001 $\mu$m or more from the wall of the flow channel, such as 0.0005 $\mu$m or more, such as 0.001 $\mu$m or more, such as 0.005 $\mu$m or more, such as 0.01 $\mu$m or more, such as 0.05 $\mu$m or more, such as 0.1 $\mu$m or more, such as 0.5 $\mu$m or more, such as 1 $\mu$m or more, such as 5 $\mu$m or more, such as 10 $\mu$m or more, such as 25 $\mu$m or more, such as 50 $\mu$m or more, such as 100 $\mu$m or more, such as 250 $\mu$m or more, such as 500 $\mu$m or more, such as 1000 $\mu$m or more and including 5000 $\mu$m or more from the wall of the flow channel. For example, the position of the particle may be from 0.0001 $\mu$m to 10000 $\mu$m from the wall of the flow channel, such as from 0.0005 $\mu$m to 5000 $\mu$m, such as from 0.001 $\mu$m to 1000 $\mu$m, such as from 0.005 $\mu$m to 500 $\mu$m, such as from 0.01 $\mu$m to 100 $\mu$m, such as from 0.05 $\mu$m to 50 $\mu$m and including from 0.1 $\mu$m to 25 $\mu$m from the wall of the flow channel.

In some embodiments, the memory includes instructions for determining a laser delay of one or more of the lasers based on the calculated positional velocity of the particle. In some instances, the memory includes instructions for adjusting the laser delay for one or more of the lasers based on one or more of the calculated velocity of each particle in the flow stream, the center of mass parameter, the calculated positional velocity and the laser delay. In certain instances, the memory includes instructions for adjusting the laser delay for one or more of the lasers based on the positional velocity of the particle.

In some embodiments, the memory includes instructions for determining the drop delay of each particle based on the calculated positional velocity of the particle and the distance between an interrogation region of one or more of the light sources and the flow cell nozzle orifice. In some embodiments, the memory includes instructions for independently determining the drop delay of each particle by multiplying the calculated positional velocity of each particle of interest by the distance between an interrogation region of one or more of the light sources and the flow cell nozzle orifice. For example, depending on the particle analyzer in certain instances the distance between each interrogation region and the flow cell nozzle orifice is independently 0.01 $\mu$m or more, such as by 0.05 $\mu$m or more, such as by 0.1 $\mu$m or more, such as by 0.5 $\mu$m or more, such as by 1 $\mu$m or more, such as by 2 $\mu$m or more, such as by 3 $\mu$m or more, such as by 4 $\mu$m or more, such as by 5 $\mu$m or more, such as by 10 $\mu$m or more, such as by 15 $\mu$m or more, such as by 25 $\mu$m or more, such as by 50 $\mu$m or more and including by 100 $\mu$m or more. In other instances, the distance between each interrogation region and the flow cell nozzle orifice ranges from 0.01 $\mu$m to 500 $\mu$m, such as from 0.05 $\mu$m to 450 $\mu$m, such as from 0.1 $\mu$m to 400 $\mu$m, such as from 0.5 $\mu$m to 350 $\mu$m, such as from 1 $\mu$m to 200 $\mu$m, such as from 5 $\mu$m to 150 $\mu$m and including from 10 $\mu$m to 100 $\mu$m.

In some embodiments, the memory includes instructions for adjusting one or more parameters of the particle analyzer based on one or more of the calculated velocity of each particle in the flow stream, the center of mass parameter, the calculated positional velocity and the calculated drop delay. In some instances, the memory includes instructions for increasing the flow rate of the flow stream. In certain instances, the flow rate may be increased by 1% or more, such as by 5% or more, such as by 10% or more, such as by 15% or more, such as by 25% or more, such as by 50% or more, such as by 75% or more, such as by 90% or more, such as by 95% or more, such as by 97% or more, such as by 99% or more and including increasing the flow rate of the flow stream by 99.9% or more. In some embodiments, the memory includes instructions for increasing the flow rate of the flow stream by 1 $\mu$L/sec or more, such as 2 $\mu$L/sec or more, such as 5 $\mu$L/sec or more, such as 10 $\mu$L/sec or more, such as 25 $\mu$L/sec or more, such as 50 $\mu$L/sec or more, such as 100 $\mu$L/sec or more, such as 250 $\mu$L/sec or more, such as 500 $\mu$L/sec or more, such as 750 $\mu$L/sec or more and including 1000 $\mu$L/sec or more. In other embodiments, the memory includes instructions for increasing the flow rate of the flow stream by 0.001 mm/sec or more, such as by 0.005 mm/sec or more, such as by 0.01 mm/sec or more, such as by 0.05 mm/sec or more, such as by 0.1 mm/sec or more, such as by 0.5 mm/sec or more, such as by 1 mm/sec or more, such as by 5 mm/sec or more and including where the flow rate of the flow stream is increased by 10 mm/sec or more.

In other instances, the memory includes instructions for decreasing the flow rate of the flow stream. In certain instances, the memory includes instructions for decreasing the flow rate by 1% or more, such as by 5% or more, such as by 10% or more, such as by 15% or more, such as by 25% or more, such as by 50% or more, such as by 75% or more, such as by 90% or more, such as by 95% or more, such as by 97% or more, such as by 99% or more and including decreasing the flow rate of the flow stream by 99.9% or more. In some embodiments, the memory includes instructions for decreasing the flow rate of the flow stream by 1 $\mu$L/sec or more, such as 2 $\mu$L/sec or more, such as 5 $\mu$L/sec or more, such as 10 $\mu$L/sec or more, such as 25 $\mu$L/sec or more, such as 50 $\mu$L/sec or more, such as 100 $\mu$L/sec or more, such as 250 $\mu$L/sec or more,

such as 500 µL/sec or more, such as 750 µL/sec or more and including 1000 µL/sec or more. In other embodiments, the memory includes instructions for decreasing the flow rate of the flow stream by 0.001 mm/sec or more, such as by 0.005 mm/sec or more, such as by 0.01 mm/sec or more, such as by 0.05 mm/sec or more, such as by 0.1 mm/sec or more, such as by 0.5 mm/sec or more, such as by 1 mm/sec or more, such as by 5 mm/sec or more and including where the memory includes instructions for decreasing the flow rate of the flow stream by 10 mm/sec or more.

In some instances, the memory includes instructions for increasing the sheath fluid flow based on one or more of the calculated velocity of each particle in the flow stream, the center of mass parameter and the calculated positional velocity. In some instances, the memory includes instructions for increasing the sheath fluid by 1% or more, such as by 5% or more, such as by 10% or more, such as by 15% or more, such as by 25% or more, such as by 50% or more, such as by 75% or more, such as by 90% or more, such as by 95% or more, such as by 97% or more, such as by 99% or more and including increasing the rate of sheath fluid flow by 99.9% or more. In some embodiments, the memory includes instructions for increasing the flow of the sheath fluid flow by 1 µL/sec or more, such as 2 µL/sec or more, such as 5 µL/sec or more, such as 10 µL/sec or more, such as 25 µL/sec or more, such as 50 µL/sec or more, such as 100 µL/sec or more, such as 250 µL/sec or more, such as 500 µL/sec or more, such as 750 µL/sec or more and including 1000 µL/sec or more. In other embodiments, the memory includes instructions for increasing the rate of the sheath fluid flow by 0.001 mm/sec or more, such as by 0.005 mm/sec or more, such as by 0.01 mm/sec or more, such as by 0.05 mm/sec or more, such as by 0.1 mm/sec or more, such as by 0.5 mm/sec or more, such as by 1 mm/sec or more, such as by 5 mm/sec or more and including where the memory includes instructions for increasing the rate of the sheath fluid flow by 10 mm/sec or more.

In some instances, the memory includes instructions for decreasing the sheath fluid flow fluid flow based on one or more of the calculated velocity of each particle in the flow stream, the center of mass parameter and the calculated positional velocity. In some instances, the memory includes instructions for decreasing the sheath fluid flow is decreased by 1% or more, such as by 5% or more, such as by 10% or more, such as by 15% or more, such as by 25% or more, such as by 50% or more, such as by 75% or more, such as by 90% or more, such as by 95% or more, such as by 97% or more, such as by 99% or more and including decreasing the rate of sheath fluid flow by 99.9% or more. In some embodiments, the memory includes instructions for decreasing the flow of the sheath fluid flow by 1 µL/sec or more, such as 2 µL/sec or more, such as 5 µL/sec or more, such as 10 µL/sec or more, such as 25 µL/sec or more, such as 50 µL/sec or more, such as 100 µL/sec or more, such as 250 µL/sec or more, such as 500 µL/sec or more, such as 750 µL/sec or more and including 1000 µL/sec or more. In other embodiments, the memory includes instructions for decreasing the rate of the sheath fluid flow by 0.001 mm/sec or more, such as by 0.005 mm/sec or more, such as by 0.01 mm/sec or more, such as by 0.05 mm/sec or more, such as by 0.1 mm/sec or more, such as by 0.5 mm/sec or more, such as by 1 mm/sec or more, such as by 5 mm/sec or more and including where the memory includes instructions for decreasing the rate of the sheath fluid flow by 10 mm/sec or more.

In some instances, the memory includes instructions for increasing the sample core fluid flow based on one or more of the calculated velocity of each particle in the flow stream, the center of mass parameter and the calculated positional velocity. In some instances, the sample core fluid flow is increased by 1% or more, such as by 5% or more, such as by 10% or more, such as by 15% or more, such as by 25% or more, such as by 50% or more, such as by 75% or more, such as by 90% or more, such as by 95% or more, such as by 97% or more, such as by 99% or more and including increasing the rate of sample core fluid flow by 99.9% or more. In some embodiments, the memory includes instructions for increasing the flow of the sample core fluid flow by 1 µL/sec or more, such as 2 µL/sec or more, such as 5 µL/sec or more, such as 10 µL/sec or more, such as 25 µL/sec or more, such as 50 µL/sec or more, such as 100 µL/sec or more, such as 250 µL/sec or more, such as 500 µL/sec or more, such as 750 µL/sec or more and including 1000 µL/sec or more. In other embodiments, the memory includes instructions for increasing the sample core fluid flow by 0.001 mm/sec or more, such as by 0.005 mm/sec or more, such as by 0.01 mm/sec or more, such as by 0.05 mm/sec or more, such as by 0.1 mm/sec or more, such as by 0.5 mm/sec or more, such as by 1 mm/sec or more, such as by 5 mm/sec or more and including where the memory includes instructions for increasing the rate of the sample core fluid flow by 10 mm/sec or more.

In some instances, the memory includes instructions for decreasing the sample core fluid flow based on one or more of the calculated velocity of each particle in the flow stream, the center of mass parameter and the calculated positional velocity. In some instances, the memory includes instructions for decreasing the sample core fluid flow by 1% or more, such as by 5% or more, such as by 10% or more, such as by 15% or more, such as by 25% or more, such as by 50% or more, such as by 75% or more, such as by 90% or more, such as by 95% or more, such as by 97% or more, such as by 99% or more and including decreasing the rate of sample core fluid flow by 99.9% or more. In some embodiments, the memory includes instructions for decreasing the flow of the sample core fluid flow by 1 µL/sec or more, such as 2 µL/sec or more, such as 5 µL/sec or more, such as 10 µL/sec or more, such as 25 µL/sec or more, such as 50 µL/sec or more, such as 100 µL/sec or more, such as 250 µL/sec or more, such as 500 µL/sec or more, such as 750 µL/sec or more and including 1000 µL/sec or more. In other embodiments, the memory includes instructions for decreasing the sample core fluid flow by 0.001 mm/sec or more, such as by 0.005 mm/sec or more, such as by 0.01 mm/sec or more, such as by 0.05 mm/sec or more, such as by 0.1 mm/sec or more, such as by 0.5 mm/sec or more, such as by 1 mm/sec or more, such as by 5 mm/sec or more and including where the memory includes instructions for decreasing the rate of the sample core fluid flow by 10 mm/sec or more.

In some embodiments, the memory includes instructions for adjusting the timing of laser irradiation for one or more of the lasers based on one or more of the calculated velocity of each particle in the flow stream, the center of mass parameter, the calculated positional velocity and the calculated drop delay. In some instances, the memory includes instructions for adjusting the timing of laser irradiation by one or more of the lasers to be delayed by 0.01% or more, such as by 0.05% or more, such as by 0.1% or more, such as by 0.5% or more, such as by 1% or more, such as by 2% or more, such as by 5% or more, such as by 10% or more, such as by 15% or more, such as by 25% or more and including by 50% or more. For example, the memory includes instructions for delaying the timing of laser irradiation by a 0.0001 $\mu$s or more in response to one or more of the calculated velocity of each particle in the flow stream, the center of mass parameter, the calculated positional velocity and the calculated drop delay, such as by 0.0005 $\mu$s or more, such as by 0.001 $\mu$s or more, such as by 0.005 $\mu$s or more, such as by 0.01 $\mu$s or more, such as by 0.05 $\mu$s or more, such as by 0.1 $\mu$s or more, such as by 0.5 $\mu$s or more, such as by 1 $\mu$s or more, such as by 5 $\mu$s or more, such as by 10 $\mu$s or more, such as by 25 $\mu$s or more, such as by 50 $\mu$s or more, such as by 100 $\mu$s or more and including delaying laser irradiation by one or more of the lasers by 500 $\mu$s. In other instances, the memory includes instructions for adjusting the timing of laser irradiation by one or more of the lasers to be earlier by 0.01% or more, such as by 0.05% or more, such as by 0.1% or more, such as by 0.5% or more, such as by 1% or more, such as by 2% or more, such as by 5% or more, such as by 10% or more, such as by 15% or more, such as by 25% or more and including by 50% or more. For example, the memory includes instructions for adjusting the timing of laser irradiation by one or more of the lasers to be earlier by 0.0001 $\mu$s or more in response to one or more of the calculated velocity of each particle in the flow stream, the center of mass parameter, the calculated positional velocity and the calculated drop delay, such as by 0.0005 $\mu$s or more, such as by 0.001 $\mu$s or more, such as by 0.005 $\mu$s or more, such as by 0.01 $\mu$s or more, such as by 0.05 $\mu$s or more, such as by 0.1 $\mu$s or more, such as by 0.5 $\mu$s or more, such as by 1 $\mu$s or more, such as by 5 $\mu$s or more, such as by 10 $\mu$s or more, such as by 25 $\mu$s or more, such as by 50 $\mu$s or more, such as by 100 $\mu$s or more and including by 500 $\mu$s or more.

In some embodiments, the memory includes instructions for adjusting the timing of droplet charging based on one or more of the calculated velocity of each particle in the flow stream, the center of mass parameter, the calculated positional velocity and the calculated drop delay. In some instances, the memory includes instructions for adjusting the timing of droplet charging to be delayed by 0.01% or more, such as by 0.05% or more, such as by 0.1% or more, such as by 0.5% or more, such as by 1% or more, such as by 2% or more, such as by 5% or more, such as by 10% or more, such as by 15% or more, such as by 25% or more and including by 50% or more. For example, the memory includes instructions for the timing of droplet charging to be delayed by a 0.0001 $\mu$s or more in response to one or more of the calculated velocity of each particle in the flow stream, the center of mass parameter, the calculated positional velocity and the calculated drop delay, such as by 0.0005 $\mu$s or more, such as by 0.001 $\mu$s or more, such as by 0.005 $\mu$s or more, such as by 0.01 $\mu$s or more, such as by 0.05 $\mu$s or more, such as by 0.1 $\mu$s or more, such as by 0.5 $\mu$s or more, such as by 1 $\mu$s or more, such as by 5 $\mu$s or more, such as by 10 $\mu$s or more, such as by 25 $\mu$s or more, such as by 50 $\mu$s or more, such as by 100 $\mu$s or more and including delaying droplet charging by 500 $\mu$s or more in response to one or more of the calculated velocity of each particle in the flow stream, the center of mass parameter, the calculated positional velocity and the calculated drop delay. In other instances, the memory includes instructions for adjusting the timing of droplet charging to be earlier by 0.01% or more, such as by 0.05% or more, such as by 0.1% or more, such as by 0.5% or more, such as by 1% or more, such as by 2% or more, such as by 5% or more, such as by 10% or more, such as by 15% or more, such as by 25% or more and including by 50% or more. For example, the memory includes instructions for adjusting the timing of droplet charging to be earlier by 0.0001 $\mu$s or more in response to one or more of the calculated velocity of each particle in the flow stream, the center of mass parameter, the calculated positional velocity and the calculated drop delay, such as by 0.0005 $\mu$s or more, such as by 0.001 $\mu$s or more, such as by 0.005 $\mu$s or more, such as by 0.01 $\mu$s or more, such as by 0.05 $\mu$s or more, such as by 0.1 $\mu$s or more, such as by 0.5 $\mu$s or more, such as by 1 $\mu$s or more, such as by 5 $\mu$s or more, such as by 10 $\mu$s or more, such as by 25 $\mu$s or more, such as by 50 $\mu$s or more, such as by 100 $\mu$s or more and including by 500 $\mu$s or more.

In other embodiments, the memory includes instructions for adjusting the drop drive frequency based on one or more of the calculated velocity of each particle in the flow stream, the center of mass parameter, the calculated positional velocity and the calculated drop delay. In some instances, the memory includes instructions for increasing the drop drive frequency, such as by 0.01 Hz or more, such as by 0.05 Hz or more, such as by 0.1 Hz or more, such as by 0.25 Hz or more, such as by 0.5 Hz or more, such as by 1 Hz or more, such as by 2.5 Hz or more, such as by 5 Hz or more, such as by 10 Hz or more and including by 25 Hz or more. For example, the drop drive frequency may be increased by 1% or more, such as by 5% or more, such as by 10% or more, such as by 15% or more, such as by 25% or more, such as by 50% or more, such as by 75% or more and including increasing the drop drive frequency by 90% or more. In other instances, the memory includes instructions for reducing the drop drive frequency, such as by 0.01 Hz or more, such as by 0.05 Hz or more, such as by 0.1 Hz or more, such as by 0.25 Hz or more, such as by 0.5 Hz or more, such as by 1 Hz or more, such as by 2.5 Hz or more, such as by 5 Hz or more, such as by 10 Hz or more and including by 25 Hz or more. For example, the drop drive frequency may be reduced by 1% or more, such as by 5% or more, such as by 10% or more, such as by 15% or more, such as by 25% or more, such as by 50% or more, such as by 75% or more and including reducing the drop frequency by 90% or more.

In still other embodiments, the memory includes instructions for adjusting the drop delay based on one or more of the calculated velocity of each particle in the flow stream, the center of mass parameter, the calculated positional velocity and the calculated drop delay. In some instances, the memory includes instructions for increasing the drop delay, such as by 0.01 μs or more, such as by 0.05 μs or more, such as by 0.1 μs or more, such as by 0.3 μs or more, such as by 0.5 μs or more, such as by 1 μs or more, such as by 2.5 μs or more, such as by 5 μs or more, such as by 7.5 μs or more and including increasing the drop delay by 10 μs or more. For example, the memory includes instructions for increasing the drop delay by 1% or more, such as by 5% or more, such as by 10% or more, such as by 15% or more, such as by 25% or more, such as by 50% or more, such as by 75% or more and including increasing the drop delay by 90% or more. In other instances, the memory includes instructions for reducing the drop frequency, such as by 0.01 μs or more, such as by 0.05 μs or more, such as by 0.1 μs or more, such as by 0.3 μs or more, such as by 0.5 μs or more, such as by 1 μs or more, such as by 2.5 μs or more, such as by 5 μs or more, such as by 7.5 μs or more and including reducing the drop delay by 10 μs or more. For example, the memory includes instructions for reducing the drop delay by 1% or more, such as by 5% or more, such as by 10% or more, such as by 15% or more, such as by 25% or more, such as by 50% or more, such as by 75% or more and including reducing the drop delay by 90% or more.

In some embodiments, systems are flow cytometers. In some instances, subject flow cytometers include a flow cell. Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. In certain instances, the flow cell includes a light-accessible flow channel. The cuvette may be comprised of, e.g., quartz, glass, clear plastic, and the like. In some embodiments, cuvettes are formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 μm represents the optical axis of light emitted by the light source, the interrogation point may range from - 50 μm to 50 μm, such as -25 μm to 40 μm, and including -15 μm to 30 μm. Depending on certain considerations (e.g., the number and arrangement of lasers), multiple irradiation points may exist within the flow cells.

In some embodiments, the flow cell includes, or is configured for use with, a sample injection port configured to provide a sample to the flow cell. In embodiments, the sample injection system is configured to provide suitable flow of sample to the flow cell inner chamber (i.e., flow channel). Depending on the desired characteristics of the flow stream, the rate of sample conveyed to the flow cell chamber by the sample injection port may be 1 μL/min or more, such as 2 μL/min or more, such as 3 μL/min or more, such as 5 μL/min or more, such as 10 μL/min or more, such as 15 μL/min or more, such as 25 μL/min or more, such as 50 μL/min or more and including 100 μL/min or more, where in some instances the rate of sample conveyed to the flow cell chamber by the sample injection port is 1 μL/sec or more, such as 2 μL/sec or more, such as 3 μL/sec or more, such as 5 μL/sec or more, such as 10 μL/sec or more, such as 15 μL/sec or more, such as 25 μL/sec or more, such as 50 μL/sec or more and including 100 μL/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In certain embodiments, the sample injection port has a circular orifice. The size of the sample injection port orifice may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In certain instances, the sample injection port is a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

In some embodiments, the flow cell also includes a sheath fluid injection port configured to provide a sheath fluid to the flow cell. In embodiments, the sheath fluid injection system is configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 μL/sec or more, such as 50 μL/sec or more, such as 75 μL/sec or more, such as 100 μL/sec or more, such as 250 μL/sec or more, such as 500 μL/sec or more, such as 750 μL/sec or more, such as 1000 μL/sec or more and including 2500 μL/sec or more.

In some embodiments, the sheath fluid injection port is an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838, the disclosure of which is incorporated by reference herein in its entirety.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; the disclosures of which are incorporated herein by reference. In certain instances, flow cytometry systems of interest include BD Biosciences FACSCanto™ flow cytometer, BD Biosciences FACSCanto™ II flow cytometer, BD Accuri™ flow cytometer, BD Accuri™ C6 Plus flow cytometer, BD Biosciences FACSCelesta™ flow cytometer, BD Biosciences FACSLyric™ flow cytometer, BD Biosciences FACSVerse™ flow cytometer, BD Biosciences FACSymphony™ flow cytometer, BD Biosciences LSRFortessa™ flow cytometer, BD Biosciences LSRFortessa™ X-20 flow cytometer, BD Biosciences FACSPresto™ flow cytometer, BD Biosciences FACSVia™ flow cytometer and BD Biosciences FACSCalibur™ cell sorter, a BD Biosciences FACSCount™ cell sorter, BD Biosciences FACSLyric™ cell sorter, BD Biosciences Via™ cell sorter, BD Biosciences Influx™ cell sorter, BD Biosciences Jazz™ cell sorter, BD Biosciences Aria™ cell sorter, BD Biosciences FACSAria™ II cell sorter, BD Biosciences FACSAria™ III cell sorter, BD Biosciences FACSAria™ Fusion cell sorter and BD Biosciences FACSMelody™ cell sorter, BD Biosciences FACSymphony™ S6 cell sorter, BD Biosciences FACSDiscover™ cell sorter, or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766; the disclosures of which are herein incorporated by reference in their entirety.

In some embodiments, the flow cytometer is configured as an imaging flow cytometer. For example, in certain instances, the subject systems are flow cytometry systems configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661 and 10,006,852 and U.S. Patent Publication Nos. 2017/0133857 and 2017/0350803, the disclosures of which are herein incorporated by reference. In some embodiments where the flow cytometer is a particle sorter, the particle sorter is an image enabled particle sorter. Image enabled particle sorters are described in U.S. Provisional Patent Application Nos. 63/431,803 and 63/465,057; the disclosures of which are herein incorporated by reference in their entirety.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

The subject programmable logic may be implemented in any of a variety of devices such as specifically programmed event processing computers, wireless communication devices, integrated circuit devices, or the like. In some embodiments, the programable logic may be executed by a specifically programmed processor, which may include one or more processors, such as one or more digital signal processors (DSPs), configurable microprocessors, application specific integrated circuits (ASICs), field programmable gate arrays (FPGAs), or other equivalent integrated or discrete logic circuitry. A combination of computing devices, e.g., a combination of a DSP and a microprocessor, a plurality of microprocessors, one or more microprocessors in conjunction with a DSP core, or any other such configuration in at least partial data connectivity may implement one or more of the features described herein.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth® communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth® communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth® RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows® NT®, Windows® XP, Windows® 7, Windows® 8, Windows® 10, iOS®, macOS®, Linux®, Ubuntu®, Fedora®, OS/400®, i5/OS®, IBM i®, Android™, SGI IRIX®, Oracle Solaris® and others.

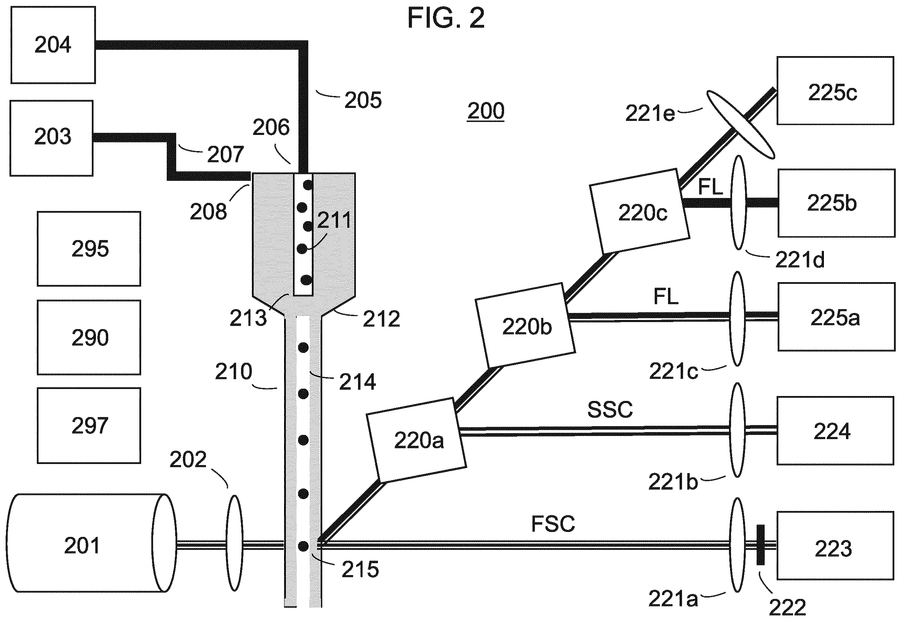

**FIG. 2** shows a system 200 for flow cytometry in accordance with an illustrative embodiment of the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with an embodiment of the present disclosure is not limited to the flow cytometer depicted in **FIG. 2,** but can include any flow cytometer known in the art. For example, a flow cytometer may have any number of lasers, beam splitters, filters, and detectors at various wavelengths and in various different configurations. For example, while the embodiment of **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. In such an embodiment, a display may also form part of the I/O capabilities 297 for presenting experimental data to users of the cytometer 200. Alternatively, some or all of the memory 295 and controller/processor 290 and I/O capabilities may be part of one or more external devices such as a general purpose computer. In some embodiments, some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

In some embodiments, the subject systems are particle sorting systems that are configured to sort particles with an enclosed particle sorting module, such as those described in U.S. Patent Publication No. 2017/0299493, filed on March 28, 2017, the disclosure of which is incorporated herein by reference. In certain embodiments, particles (e.g., cells) of the sample are sorted using a sort decision module having a plurality of sort decision units, such as those described in U.S.

Patent Publication No. 2020/0256781, filed on December 23, 2019, the disclosure of which is incorporated herein by reference. In some embodiments, systems for sorting components of a sample include a particle sorting module having deflection plates, such as described in U.S. Patent Publication No. 2017/0299493, filed on March 28, 2017, the disclosure of which is incorporated herein by reference.

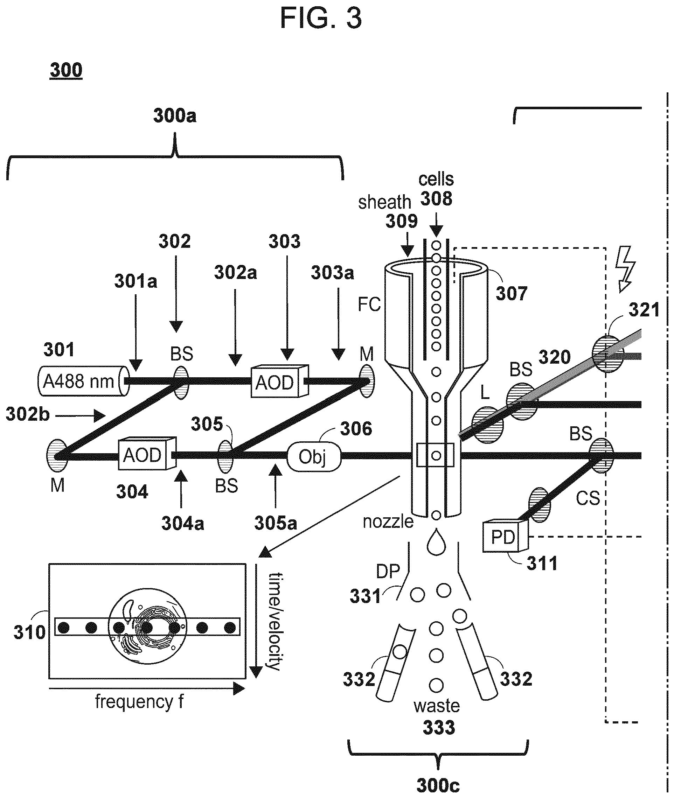

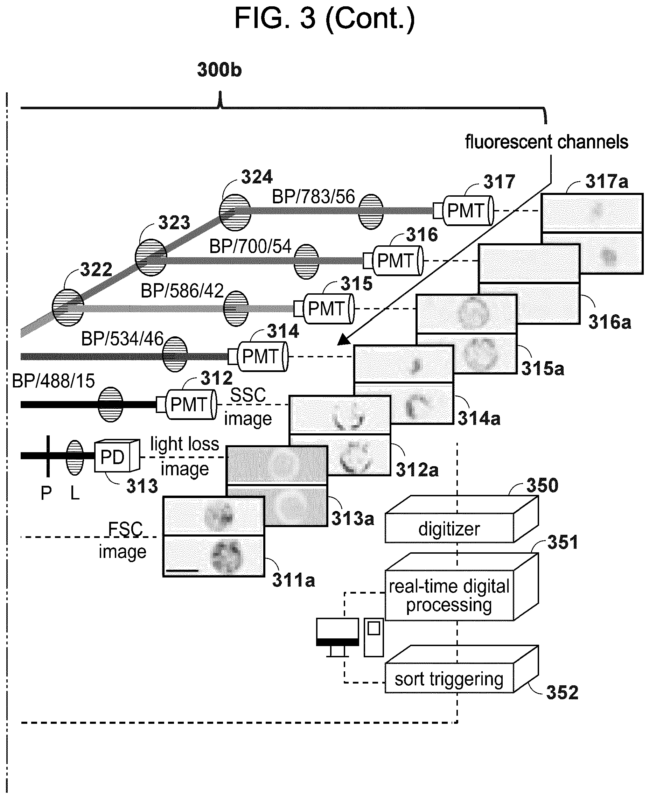

In certain embodiments, systems are a fluorescence imaging using radiofrequency tagged emission image-enabled particle sorter, such as depicted in **FIG. 3.** Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In certain embodiments, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943, the disclosure of which is herein incorporated by reference.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency $f_{1-n}$.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. In some embodiments, forward scatter detector 311 and side scatter detector 312 are photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. In some instances, sort component 300c is configured to sort particles with an enclosed particle sorting module, such as those described in U.S. Patent Publication No. 2017/0299493, filed on March 28, 2017, the disclosure of which is incorporated herein by reference. In certain embodiments, sorting component 300c includes a sort decision module having a plurality of sort decision units, such as those described in U.S. Patent Publication No. 2020/0256781, the disclosure of which is incorporated herein by reference.

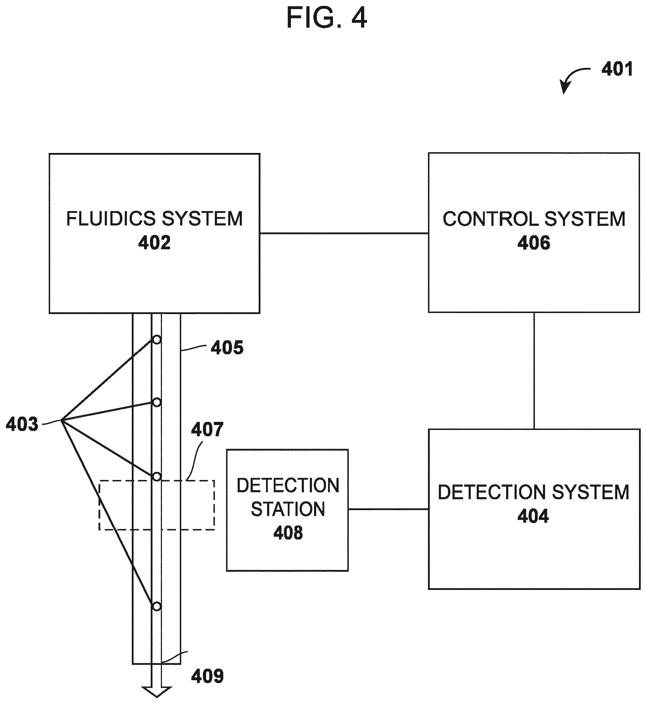

In some embodiments, systems are particle analyzers where the particle analysis system 401 (**FIG. 4**) can be used to analyze and characterize particles, with or without physically sorting the particles into collection vessels. **FIG. 4** shows a functional block diagram of a particle analysis system for computational based sample analysis and particle characterization. In some embodiments, the particle analysis system 401 is a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

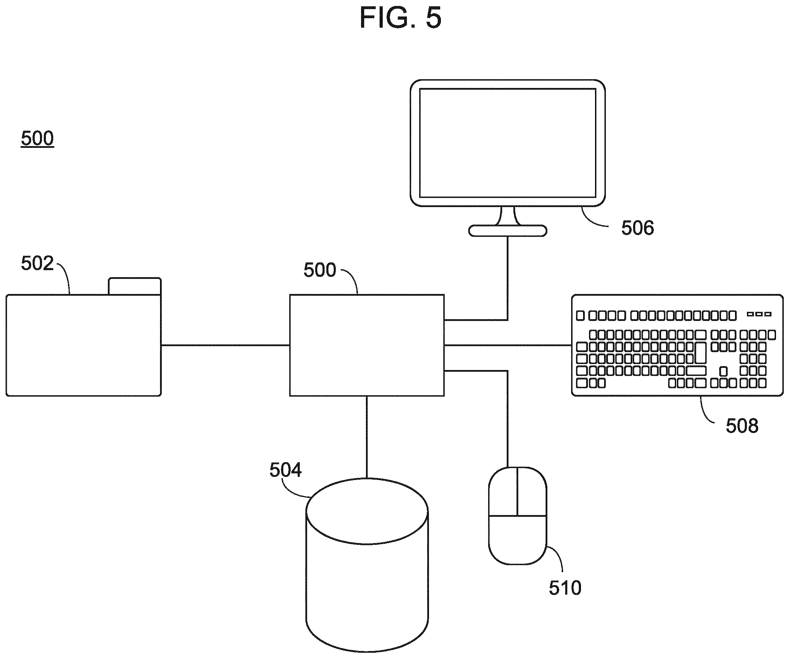

**FIG. 5** shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel. Analytics controller 500 may be a processor configured to carry out methods of the invention, e.g., by applying a distance-based classification model to determine a density distinguishing threshold in a size-based analyte feature space, applying a density-based clustering algorithm to separate the analyte data into a high-density cluster and a low-density cluster based on the density threshold and classifying the analyte data based on the high-density cluster and the low density cluster based on the size-based analyte feature space.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown in **FIG. 5,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

In some embodiments, the analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

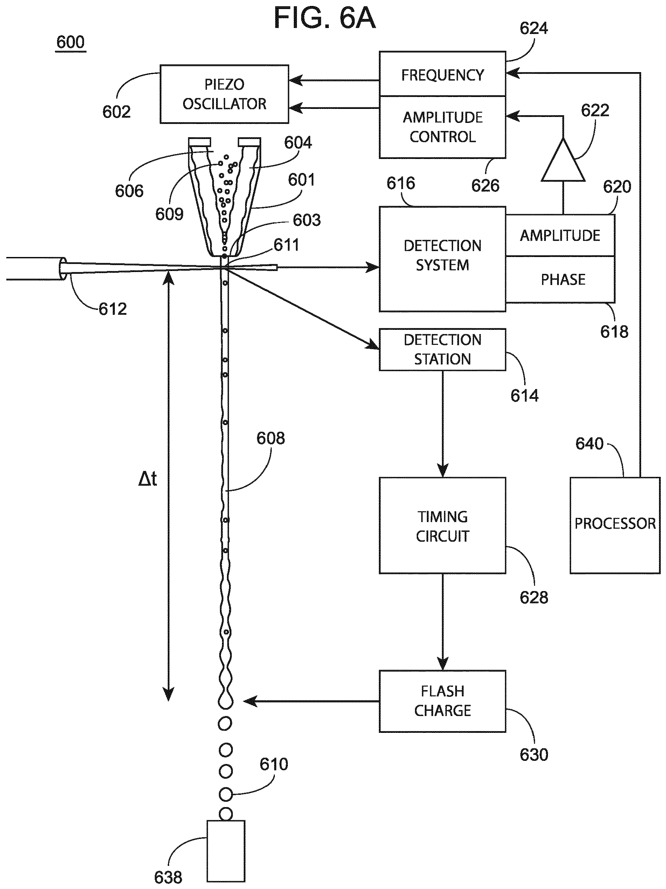

FIG. 6A is a schematic drawing of a particle sorter system 600 (e.g., the particle analyzer or sorting system 502) in accordance with one embodiment presented herein. In some embodiments, the particle sorter system 600 is a cell sorter system. As shown in FIG. 6A, a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay (Δt), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in FIG. 6A, the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039, which is incorporated herein by reference in its entirety. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

In some implementations, sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

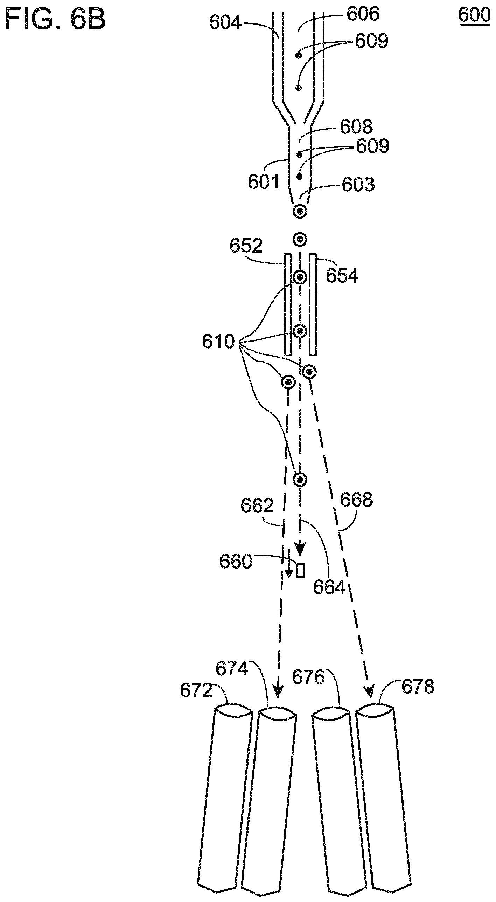

FIG. 6B is a schematic drawing of a particle sorter system, in accordance with one embodiment presented herein. The particle sorter system 600 shown in FIG. 6B, includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in FIG. 6B, the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations of the embodiment shown in FIG. 6B include the BD FACSAria™ line of flow cytometers commercially provided by Becton, Dickinson and Company (Franklin Lakes, NJ).

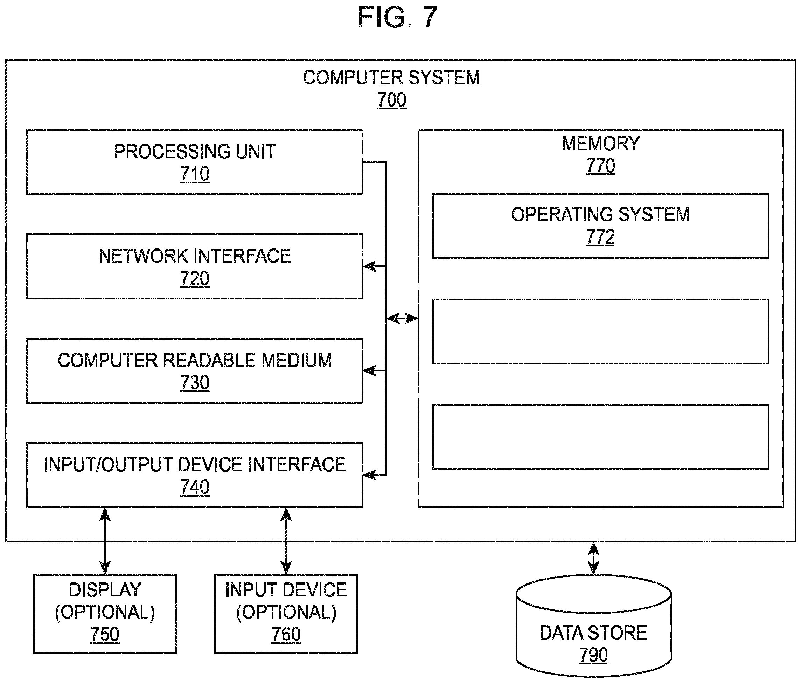

FIG. 7 depicts a general architecture of an example computing device 700 according to certain embodiments.

The general architecture of the computing device 700 depicted in **FIG.** 7 includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo®) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (grouped as modules or components in some embodiments) that the processing unit 710 executes in order to implement one or more embodiments. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

## NON-TRANSITORY COMPUTER-READABLE STORAGE MEDIA

Aspects of the present disclosure further include non-transitory computer readable storage media having instructions for practicing the subject methods, such as to practice one or more computer implemented methods described herein. Computer readable storage media may be employed on one or more computers for complete automation or partial automation of a system for practicing methods described herein. In certain embodiments, instructions in accordance with the method described herein can be coded onto a computer-readable medium in the form of "programming", where the term "computer readable medium" as used herein refers to any non-transitory storage medium that participates in providing instructions and data to a computer for execution and processing. Examples of suitable non-transitory storage media include a floppy disk, hard disk, optical disk, magneto-optical disk, CD-ROM, CD-R, magnetic tape, non-volatile memory card, ROM, DVD-ROM, Blue-ray disk, solid state disk, and network attached storage (NAS), whether or not such devices are internal or external to the computer. A file containing information can be "stored" on computer readable medium, where "storing" means recording information such that it is accessible and retrievable at a later date by a computer. The computer-implemented method described herein can be executed using programming that can be written in one or more of any number of computer programming languages. Such languages include, for example, Python, Java, Java Script, C, C#, C++, Go, R, Swift, PHP, as well as many others.

In some embodiments, the non-transitory computer readable storage medium includes algorithm for irradiating a sample comprising a particle in a flow stream of a particle analyzer with a first laser in a first interrogation region and a second laser in a second interrogation region, algorithm for detecting light from the irradiated particle by a first photodetector in the first interrogation region and by a second photodetector in the second interrogation region, algorithm for calculating a velocity of the particle in the flow stream based on the light detected in the first photodetector channel and the second photodetector channel, algorithm for determining a parameter of the particle in the flow stream and algorithm for calculating a positional velocity of the particle in the flow stream based on the calculated velocity and parameter of the particle.

In some embodiments, the non-transitory computer readable storage medium includes algorithm to calculate the velocity of the particle in the flow stream by determining an amount of time between the photodetector signal pulses. In other instances, the non-transitory computer readable storage medium includes algorithm to determine a time-to-peak between the photodetector signal pulses. In some instances, the non-transitory computer readable storage medium includes algorithm to calculate the velocity of each particle in the flow stream based on the amount of time between the first photodetector signal pulse and the second photodetector signal pulse and the distance between the interrogation region of the first laser and the interrogation region of the second laser. In other instances, the non-transitory computer readable storage medium includes algorithm to calculate the velocity of each particle in the flow stream based on the time-to-peak between the first photodetector signal pulse and the second photodetector signal pulse and the distance between the interrogation region of the first laser and the interrogation region of the second laser.

In embodiments, the non-transitory computer readable storage medium includes algorithm for determining the positional velocity of the particle in the flow stream. In some instances, the non-transitory computer readable storage medium includes algorithm for determining the position of the particle in the flow stream. In some instances, the non-transitory computer readable storage medium includes algorithm for determining the position of the particle with respect to the center of the flow stream. In some instances, the non-transitory computer readable storage medium includes algorithm for calculating the velocity of the particle with respect to the distance of the particle from the center of the flow stream. In some instances, the particle has a greater velocity when the particle is closer to the center of the flow stream. In some instances, the particle has a lower velocity when the particle is farther from the center of the flow stream. In some instances, the non-transitory computer readable storage medium includes algorithm for calculating a center of mass parameter (COM) of the particle for each particle. In some instances, the non-transitory computer readable storage medium includes algorithm for determining the position of the particle with respect to the center of the flow stream based on the calculated center of mass parameter. In some instances, the non-transitory computer readable storage medium includes algorithm for determining the positional velocity of the particle based on the calculated velocity of the particle and the center of mass parameter.

In some embodiments, the non-transitory computer readable storage medium includes algorithm for irradiating a particle in the flow stream with a plurality of lasers in a plurality of different interrogation regions, algorithm for detecting light from the irradiated particle by a plurality of photodetector channels, generating a photodetector signal pulse in response to the light detected by each of the photodetector channels, algorithm for calculating a velocity of the particle in the flow stream based on photodetector signal pulses in two or more of the photodetector channels, instructions for determining a parameter of the particle in the flow stream (e.g., a center of mass parameter) and algorithm for calculating a positional velocity of the particle in the flow stream based on the calculated velocity and parameter of the particle.

In some embodiments, the non-transitory computer readable storage medium includes algorithm for calculating an average velocity of the particle between two or more of the plurality of interrogation regions. In some instances, the non-transitory computer readable storage medium includes algorithm for calculating an average velocity between three or more interrogation regions, such as 4 or more and including between 5 or more interrogation regions. In some instances, the non-transitory computer readable storage medium includes algorithm for assessing the velocity between each of the interrogation regions to determine if there are outlier velocities between one or more of the interrogation regions. In some instances, the non-transitory computer readable storage medium includes algorithm for comparing the average velocity between the interrogation regions and instructions for assessing whether the velocity between any two different interrogation regions is an outlier velocity.

In some embodiments, the non-transitory computer readable storage medium includes algorithm for determining a laser delay of one or more of the lasers based on the calculated positional velocity of the particle. In some instances, the non-transitory computer readable storage medium includes algorithm for adjusting the laser delay for one or more of the lasers based on one or more of the calculated velocity of each particle in the flow stream, the center of mass parameter, the calculated positional velocity and the laser delay. In certain instances, the non-transitory computer readable storage medium includes algorithm for adjusting the laser delay for one or more of the lasers based on the positional velocity of the particle.

In some embodiments, the non-transitory computer readable storage medium includes algorithm for calculating timing of irradiation by each of the lasers. In some instances, the non-transitory computer readable storage medium includes algorithm for adjusting the timing of irradiation by one or more of the lasers based on the calculated velocity of the particle in the flow stream. In some instances, the non-transitory computer readable storage medium includes algorithm for adjusting timing of irradiation by one or more of the lasers based on the average velocity calculated for the particle in the flow stream. In some instances, the non-transitory computer readable storage medium includes algorithm for adjusting the timing of irradiation by one or more of the lasers based on the calculated positional velocity of particles in the flow stream.

In some embodiments, the non-transitory computer readable storage medium includes algorithm for determining drop delay for each particle based on the calculated positional velocity of the particle. In some instances, the non-transitory computer readable storage medium includes algorithm for adjusting the drop delay for each particle based on one or more of the calculated velocity of each particle in the flow stream, the center of mass parameter, the calculated positional velocity and the calculated drop delay. In some embodiments, the non-transitory computer readable storage medium includes algorithm for adjusting one or more parameters of the particle analyzer based on one or more of the calculated velocity of each particle in the flow stream, the center of mass parameter, the calculated positional velocity and the calculated drop delay. In some instances, the non-transitory computer readable storage medium includes algorithm to increase the flow rate of the flow stream. In some instances, the non-transitory computer readable storage medium includes algorithm to decrease the flow rate of the flow stream. In some instances, the flow stream includes a sheath fluid flow and a sample core stream flow and the non-transitory computer readable storage medium includes algorithm for adjusting one or more of the sheath fluid flow and the sample core stream flow based on one or more of the calculated velocity of each particle in the flow stream, the center of mass parameter and the calculated positional velocity. In some embodiments, the non-transitory computer readable storage medium includes algorithm to adjust the timing of droplet charging based on one or more of the calculated velocity of each particle in the flow stream, the center of mass parameter, the calculated positional velocity and the calculated drop delay. In some instances, the non-transitory computer readable storage medium includes algorithm to adjust the timing of irradiation by one or more of the lasers based on one or more of the calculated velocity of each particle in the flow stream, the center of mass parameter, the calculated positional velocity.

The non-transitory computer readable storage medium may be employed on one or more computer systems having a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as those mentioned above, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques.

**KITS**

Kits including one or more components of the subject systems are also provided. Kits according to certain embodiments include two or more light sources, such as two continuous wave lasers and a photodetector (e.g., a photomultiplier tube). Kits may also include a flow cell nozzle as well as a cuvette for irradiating the flow stream. Kits may also include an optical adjustment component, such as lenses, mirrors, filters, fiber optics, wavelength separators, pinholes, slits, collimating protocols and combinations thereof.

In some embodiments, kits include storage media such as a magneto-optical disk, CD-ROM, CD-R, magnetic tape, non-volatile memory card, ROM, DVD-ROM, Blue-ray disk, solid state disk, and network attached storage (NAS). Any of these program storage media, or others now in use or that may later be developed, may be included in the subject kits. In embodiments, the program storage media include instructions for analyzing flow cytometer data as in the methods and for use with the systems described herein. In embodiments, the instructions contained on computer readable media provided in the subject kits, or a portion thereof, can be implemented as software components of a software for analyzing data. In these embodiments, computer-controlled systems according to the instant disclosure may function as a software "plugin" for an existing software package (e.g., FlowJo®).

In addition to the above components, the subject kits may further include (in some embodiments) instructions. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

**UTILITY**

The subject methods, systems and computer systems find use in a variety of applications where it is desirable to optimize particle identification, characterization and sorting. The subject methods and systems provide for dynamic particle velocity and drop delay determination in real time. The present disclosure also finds use in flow cytometry where it is desirable to provide a flow cytometer with improved cell sorting accuracy, enhanced particle collection, reduced energy consumption, particle charging efficiency, more accurate particle charging and enhanced particle deflection during cell sorting. In embodiments, the present disclosure reduces the need for user input or manual adjustment during sample analysis with a flow cytometer. In certain embodiments, the subject methods and systems provide fully automated protocols so that adjustments to a flow cytometer during use require little, if any human input.

Notwithstanding the appended claims, the disclosure is also defined by the following clauses:

1. A method comprising:

irradiating a sample comprising a particle in a flow stream of a particle analyzer with a first laser in a first interrogation region and a second laser in a second interrogation region;
detecting light from the irradiated particle by a first photodetector channel in the first interrogation region and by a second photodetector channel in the second interrogation region;
calculating a velocity of the particle in the flow stream based on the light detected by the first photodetector channel and the second photodetector channel;

determining a parameter of the particle in the flow stream; and

calculating a positional velocity of the particle in the flow stream based on the calculated velocity and the parameter of the particle.

2. The method according to clause 1, wherein the method comprises calculating a positional velocity of the particle based on the distance of the particle from the center of the flow stream.

3. The method according to any one of clauses 1-2, wherein the method comprises calculating a center of mass (COM) parameter of the particle in the flow stream.

4. The method according to any one of clauses 1-3, wherein the second laser is configured to irradiate the flow stream at a position downstream from the first laser.

5. The method according to clause 4, wherein the second laser is configured to irradiate the flow stream at a position that is 200 µm or less downstream from the first laser.

6. The method according to any one of clauses 1-5, wherein the method comprises:

generating a first photodetector signal pulse in response to the light detected by the first photodetector channel; and

generating a second photodetector signal pulse in response to the light detected by the second photodetector channel.

7. The method according to clause 6, wherein the method comprises determining an amount of time between the first photodetector signal pulse and the second photodetector signal pulse.

8. The method according to clause 6, wherein the method further comprises determining a time-to-peak between the first photodetector signal pulse and the second photodetector signal pulse.

9. The method according to any one of clauses 6-8, wherein each photodetector signal pulse is a voltage pulse.

10. The method according to any one of clauses 1-9, wherein light detected from the particle comprises scattered light.

11. The method according to clause 10, wherein light detected by the first photodetector channel comprises scattered light from the particle irradiated by the first laser.

12. The method according to any one of clauses 10-11, wherein light detected by the second photodetector channel comprises scattered light from the particle irradiated by the second laser.

13. The method according to any one of clauses 6-12, wherein velocity of each particle in the flow stream is calculated based on:

the amount of time between the first photodetector signal pulse and the second photodetector signal pulse; and

a distance between the interrogation region of the first laser and the interrogation region of the second laser.

14. The method according to any one of clauses 1-13, wherein the particle analyzer comprises a flow cell having a flow cell nozzle for generating a droplet containing each particle.

15. The method according to clauses 1-14, wherein the first laser comprises a trigger laser and a trigger signal is generated in the first photodetector channel.

16. The method according to any one of clauses 1-15, wherein the method further comprises determining the drop delay of each particle based on the calculated positional velocity of the particle.

17. The method according to clause 16, wherein the method further comprises adjusting the drop delay for each particle based on one or more of the calculated velocity of each particle in the flow stream, the center of mass parameter, the calculated positional velocity and the calculated drop delay.

18. The method according to any one of clauses 1-17, wherein the method further comprises adjusting one or more parameters of the particle analyzer based on one or more of the calculated velocity of each particle in the flow stream, the center of mass parameter, the calculated positional velocity and the calculated drop delay.

19. The method according to clause 18, wherein the method comprises increasing the flow rate of the flow stream.

20. The method according to clause 18, wherein the method comprises decreasing the flow rate of the flow stream.

21. The method according to any one of clauses 18-20, wherein the method comprises adjusting the timing of droplet charging based on one or more of the calculated velocity of each particle in the flow stream, the center of mass parameter, the calculated positional velocity and the calculated drop delay.

22. The method according to any one of clauses 18-20, wherein the method comprises adjusting the timing of irradiation by the second laser in the second interrogation region based on one or more of the calculated velocity of each particle in the flow stream, the center of mass parameter, the calculated positional velocity.

23. The method according to any one of clauses 1-22, wherein the method comprises:

irradiating a particle in the flow stream with a plurality of lasers in a plurality of different interrogation regions;

detecting light from the irradiated particle in a plurality of photodetector channels;

generating a photodetector signal pulse in response to the light detected by each of the photodetector channels; and

calculating a velocity of the particle in the flow stream based on photodetector signal pulses in two or more of the photodetector channels;

determining a parameter of the particle in the flow stream; and

calculating a positional velocity of the particle in the flow stream based on the calculated velocity and the parameter of the particle.

24. The method according to clause 23, wherein the plurality of lasers are configured to irradiate the flow stream at positions that are spaced apart from each other by 200 μm or less.

25. The method according to any one of clauses 23-24, wherein the plurality of lasers comprise:

a second laser configured to irradiate the flow stream at a position downstream from the first laser;

a third laser configured to irradiate the flow stream at a position downstream from the second laser;

a fourth laser configured to irradiate the flow stream at a position downstream from the third laser; and

a fifth laser configured to irradiate the flow stream at a position downstream from the fourth laser.

26. The method according to any one of clauses 23-25, further comprising calculating an average velocity of the particle in the flow stream between each of the plurality of interrogation regions.

27. The method according to any one of clauses 23-26, further comprising calculating timing of irradiation of the flow stream by each of the lasers.

28. The method according to any one of clauses 26-27, further comprising assessing laser drift for one or more of the lasers based the calculated average velocity of the particle in the flow stream between each of the plurality of interrogation regions.

29. The method according to any one of clauses 26-27, further comprising adjusting the timing of irradiation by one or more of the lasers based on the calculated average velocity of the particle between each of the plurality of interrogation regions.

30. The method according to any one of clauses 23-29, wherein the velocity of each particle in the flow stream is calculated based on the photodetector signal pulses in three or more of the photodetector channels.

31. The method according to any one of clauses 1-29, wherein one or more of the lasers are continuous wave lasers.

32. A particle analyzer comprising:

a light source comprising a first laser and a second laser, wherein the light source is configured to irradiate a sample comprising a plurality of particles in a flow stream with the first laser in a first interrogation region and the second laser in a second interrogation region;

a light detection system comprising a photodetector configured to detect light from each irradiated particle in the sample by a first photodetector channel and by a second photodetector channel; and

a processor comprising memory operably coupled to the processor wherein the memory comprises instructions stored thereon, which when executed by the processor, cause the processor to:

calculate a velocity of the particle in the flow stream based on the light detected by the first photodetector channel and by the second photodetector channel;

determine a parameter of the particle in the flow stream; and

calculate a positional velocity of the particle in the flow stream based on the calculated velocity and the parameter of the particle.

33. The particle analyzer according to clause 32, wherein the memory comprises instructions stored thereon, which when executed by the processor, cause the processor to determine the positional velocity of the particle based on the distance of the particle from the center of the flow stream.

34. The particle analyzer according to any one of clauses 32-33, wherein the memory comprises instructions stored thereon, which when executed by the processor, cause the processor to calculate a center of mass (COM) parameter of the particle in the flow stream.

35. The particle analyzer according to any one of clauses 32-34, wherein the second laser is configured to irradiate the flow stream at a position downstream from the first laser.

36. The particle analyzer according to clause 35, wherein the second laser is configured to irradiate the flow stream at a position that is 200 μm or less downstream from the first laser.

37. The particle analyzer according to any one of clauses 32-36, wherein the memory comprises instructions stored thereon, which when executed by the processor, cause the processor to:

generate a first photodetector signal pulse in response to the light detected in the first photodetector channel; and
generate a second photodetector signal pulse in response to the light detected in the second photodetector channel.

38. The particle analyzer according to clause 37, wherein the memory comprises instructions stored thereon, which when executed by the processor, cause the processor to determine an amount of time between the first photodetector signal pulse and the second photodetector signal pulse.

39. The particle analyzer according to clause 37, wherein the memory comprises instructions stored thereon, which when executed by the processor, cause the processor to determine a time-to-peak between the first photodetector signal pulse and the second photodetector signal pulse.

40. The particle analyzer according to any one of clauses 37-39, wherein each photodetector signal pulse is a voltage pulse.

41. The particle analyzer according to any one of clauses 29-36, wherein the photodetector is configured to detect scattered light from the particle.

42. The particle analyzer according to clause 41, wherein light detected by the first photodetector channel comprises scattered light from the particle irradiated by the first laser.

43. The particle analyzer according to any one of clauses 41-42, wherein light detected by the second photodetector channel comprises scattered light from the particle irradiated by the second laser.

44. The particle analyzer according to any one of clauses 32-43, wherein the memory comprises instructions stored thereon, which when executed by the processor, cause the processor to calculate velocity of each particle in the flow stream based on:

the amount of time between the first photodetector signal pulse and the second photodetector signal pulse; and
a distance between the interrogation region of the first laser and the interrogation region of the second laser.

45. The particle analyzer according to clauses 32-44, wherein the light detection system comprises a scattered light detector configured to detect scattered light by the first photodetector channel and scattered light by the second photodetector channel.

46. The particle analyzer according to any one of clauses 37-45, wherein the memory comprises instructions stored thereon, which when executed by the processor, cause the processor to calculate velocity of each particle in the flow stream based on:

the amount of time between the first photodetector signal pulse and the second photodetector signal pulse; and
a distance between the interrogation region of the first laser and the interrogation region of the second laser.

47. The particle analyzer according to any one of clauses 32-46, wherein the particle analyzer comprises a flow cell having a flow cell nozzle for generating a droplet containing each particle.

48. The particle analyzer according to any one of clauses 32-47, wherein the first laser comprises a trigger laser and generates a trigger signal in the first photodetector channel.

49. The particle analyzer according to any one of clauses 32-48, wherein the memory comprises instructions stored thereon, which when executed by the processor, cause the processor to determine the drop delay of each particle based on the calculated positional velocity of the particle.

50. The particle analyzer according to clause 49, wherein the memory comprises instructions stored thereon, which when executed by the processor, cause the processor to adjust the drop delay for each particle based on one or more of the calculated velocity of each particle in the flow stream, the center of mass parameter, the calculated positional velocity and the calculated drop delay.

51. The particle analyzer according to any one of clauses 32-50, wherein the memory comprises instructions stored thereon, which when executed by the processor, cause the processor to adjust one or more parameters of the particle analyzer based on one or more of the calculated velocity of each particle in the flow stream, the center of mass parameter, the calculated positional velocity and the calculated drop delay.

52. The particle analyzer according to clause 51, wherein the memory comprises instructions stored thereon, which when executed by the processor, cause the processor to increase the flow rate of the flow stream.

53. The particle analyzer according to clause 51, wherein the memory comprises instructions stored thereon, which when executed by the processor, cause the processor to decrease the flow rate of the flow stream.

54. The particle analyzer according to any one of clauses 51-53, wherein the memory comprises instructions stored thereon, which when executed by the processor, cause the processor to adjust the timing of droplet charging based on one or more of the calculated velocity of each particle in the flow stream, the center of mass parameter, the calculated positional velocity and the calculated drop delay.

55. The particle analyzer according to any one of clauses 51-53, wherein the memory comprises instructions stored thereon, which when executed by the processor, cause the processor to adjust the timing of irradiation by the second laser in the second interrogation region based on one or more of the calculated velocity of each particle in the flow stream, the center of mass parameter, the calculated positional velocity.

56. The particle analyzer according to any one of clauses 32-55, wherein the system comprises:

a light source comprising a plurality of lasers;
a light detection system comprising a photodetector configured to detect light from the irradiated particle by a plurality of photodetector channels; and
a processor comprising memory operably coupled to the processor wherein the memory comprises instructions stored thereon, which when executed by the processor, cause the processor to:

detect light from the particle by a plurality of photodetector channels;
generate a photodetector signal pulse in response to the light detected by each of the photodetector channels; and
calculate a velocity of the particle in the flow stream based on photodetector signal pulses in two or more of the photodetector channels;
determine a parameter of the particle in the flow stream; and
calculate a positional velocity of the particle in the flow stream based on the calculated velocity and the parameter of the particle.

57. The particle analyzer according to clause 56, wherein the plurality of lasers are configured to irradiate the flow stream at positions that are spaced apart from each other by 200 µm or less.

58. The particle analyzer according to any one of clauses 56-57, wherein the plurality of lasers comprise:

a second laser configured to irradiate the flow stream at a position downstream from the first laser;
a third laser configured to irradiate the flow stream at a position downstream from the second laser;
a fourth laser configured to irradiate the flow stream at a position downstream from the third laser; and
a fifth laser configured to irradiate the flow stream at a position downstream from the fourth laser.

59. The particle analyzer according to any one of clauses 56-58, wherein the memory comprises instructions stored thereon, which when executed by the processor, cause the processor to calculate an average velocity of the particle in the flow stream between each of the plurality of interrogation regions.

60. The particle analyzer according to any one of clauses 56-59, wherein the memory comprises instructions stored thereon, which when executed by the processor, cause the processor to calculate timing of irradiation of the flow stream by each of the lasers.

61. The particle analyzer according to any one of clauses 56-59, wherein the memory comprises instructions stored thereon, which when executed by the processor, cause the processor to assess laser drift for one or more of the lasers based the calculated average velocity of the particle in the flow stream between each of the plurality of interrogation regions.

62. The particle analyzer according to any one of clauses 56-59, wherein the memory comprises instructions stored thereon, which when executed by the processor, cause the processor to adjust the timing of irradiation by one or more of the lasers based on the calculated average velocity of the particle between each of the plurality of interrogation regions.

63. The particle analyzer according to any one of clauses 56-62, wherein the memory comprises instructions stored thereon, which when executed by the processor, cause the processor to calculate the velocity of each particle in the flow stream based on the photodetector signal pulses in three or more of the photodetector channels.

64. The particle analyzer according to any one of clauses 32-63, wherein one or more of the lasers are continuous wave lasers.

65. The particle analyzer according to any one of clauses 32-64, wherein the photodetector comprises a photodiode.

66. The particle analyzer according to any one of clauses 32-64, wherein the photodetector comprises a photomultiplier tube.

67. The particle analyzer according to any one of clauses 32-66, wherein the particle analyzer is part of a flow cytometer.

68. The particle analyzer according to any one of clauses 32-67, wherein the system comprises a flow cell comprising a sheath fluid input and a sample input.

69. The particle analyzer according to clause 68, wherein the memory comprises instructions stored thereon, which when executed by the processor, cause the processor to increase the input flow rate of the sheath fluid based on the calculated positional velocity of each particle in the flow stream.

70. The particle analyzer according to clause 69, wherein the memory comprises instructions stored thereon, which when executed by the processor, cause the processor to increase the input flow rate of the sample based on the calculated positional velocity of each particle in the flow stream.

71. A non-transitory computer readable storage medium comprising instructions stored thereon for determining drop delay of a plurality of particles in a flow stream in a particle analyzer, the instructions comprising:

   algorithm for irradiating a sample comprising a particle in a flow stream of a particle analyzer with a first laser in a first interrogation region and a second laser in a second interrogation region;
   algorithm for detecting light from the irradiated particle by a first photodetector channel in the first interrogation region and by a second photodetector channel in the second interrogation region;
   algorithm for calculating a velocity of the particle in the flow stream based on the light detected by the first photodetector channel and by the second photodetector channel; and
   algorithm for determining a parameter of the particle in the flow stream; and
   algorithm for calculating a positional velocity of the particle in the flow stream based on the calculated velocity and the parameter of the particle.

72. The non-transitory computer readable storage medium according to clause 71, wherein the non-transitory computer readable storage medium comprises algorithm for calculating a positional velocity of the particle based on the distance of the particle from the center of the flow stream.

73. The non-transitory computer readable storage medium according to any one of clauses 71-72, wherein the non-transitory computer readable storage medium comprises algorithm for calculating a center of mass (COM) parameter of the particle in the flow stream.

74. The non-transitory computer readable storage medium according to any one of clauses 71-72, wherein the non-transitory computer readable storage medium comprises algorithm for irradiating the flow stream with the second laser at a position downstream from the first laser.

75. The non-transitory computer readable storage medium according to any one of clauses 71-74, wherein the non-transitory computer readable storage medium comprises:

   algorithm for generating a first photodetector signal pulse in response to the light detected by the first photodetector channel; and
   algorithm for generating a second photodetector signal pulse in response to the light detected by the second photodetector channel.

76. The non-transitory computer readable storage medium according to clause 75, wherein the non-transitory computer readable storage medium comprises algorithm for determining an amount of time between the first photodetector signal pulse and the second photodetector signal pulse.

77. The non-transitory computer readable storage medium according to clause 76, wherein the non-transitory computer readable storage medium comprises algorithm for determining a time-to-peak between the first photodetector signal pulse and the second photodetector signal pulse.

78. The non-transitory computer readable storage medium according to any one of clauses 75-77, wherein the non-transitory computer readable storage medium comprises algorithm for calculating a velocity of each particle in the flow stream based on:

   the amount of time between the first photodetector signal pulse and the second photodetector signal pulse; and
   a distance between the first laser and the second laser.

79. The non-transitory computer readable storage medium according to any one of clauses 71-78, wherein the particle analyzer comprises a flow cell having a flow cell nozzle for generating a droplet containing the particle and the non-transitory computer readable storage medium comprises algorithm for calculating drop delay of each particle in the flow stream based on the calculated positional velocity of the particle.

80. The non-transitory computer readable storage medium according to clause 79, wherein the non-transitory computer readable storage medium comprises algorithm for adjusting the drop delay of each particle based on one or more of the calculated velocity of each particle in the flow stream, the center of mass parameter, the calculated positional velocity and the calculated drop delay.

81. The non-transitory computer readable storage medium according to any one of clauses 71-80, wherein the non-transitory computer readable storage medium comprises algorithm for adjusting one or more parameters of the particle analyzer based on one or more of the calculated velocity of each particle in the flow stream, the center of mass parameter, the calculated positional velocity and the calculated drop delay.

82. The non-transitory computer readable storage medium according to clause 81, wherein the non-transitory computer readable storage medium comprises algorithm for increasing the flow rate of the flow stream.

83. The non-transitory computer readable storage medium according to claim 81, wherein the non-transitory computer readable storage medium comprises algorithm for decreasing the flow rate of the flow stream.

84. The non-transitory computer readable storage medium according to any one of clauses 81-83, wherein the non-transitory computer readable storage medium comprises algorithm for adjusting the timing of droplet charging based on one or more of the calculated velocity of each particle in the flow stream, the center of mass parameter, the calculated positional velocity and the calculated drop delay.

85. The non-transitory computer readable storage medium according to any one of clauses 81-83, wherein the non-transitory computer readable storage medium comprises algorithm for adjusting the timing of irradiation by the second laser in the second interrogation region based on one or more of the calculated velocity of each particle in the flow stream, the center of mass parameter, the calculated positional velocity.

86. The non-transitory computer readable storage medium according to any one of clauses 71-85, wherein the instructions comprise:

algorithm for irradiating a particle in the flow stream with a plurality of lasers in a plurality of different interrogation regions;

algorithm for detecting light from the irradiated particle by a plurality of photodetector channels;

algorithm for generating a photodetector signal pulse in response to the light detected by each of the photodetector channels; and

algorithm for calculating a velocity of the particle in the flow stream based on photodetector signal pulses in two or more of the photodetector channels;

algorithm for determining a parameter of the particle in the flow stream; and

algorithm for calculating a positional velocity of the particle in the flow stream based on the calculated velocity and the parameter of the particle.

87. The non-transitory computer readable storage medium according to clause 86, wherein the non-transitory computer readable storage medium comprises algorithm for calculating an average velocity of the particle in the flow stream between each of the plurality of interrogation regions.

88. The non-transitory computer readable storage medium according to any one of clauses 86-87, wherein the non-transitory computer readable storage medium comprises algorithm for calculating timing of irradiation of the flow stream by each of the lasers.

89. The non-transitory computer readable storage medium according to any one of clauses 86-88, wherein the non-transitory computer readable storage medium comprises algorithm for assessing laser drift for one or more of the lasers based the calculated average velocity of the particle in the flow stream between each of the plurality of interrogation regions.

90. The non-transitory computer readable storage medium according to any one of clauses 86-89, wherein the non-transitory computer readable storage medium comprises algorithm for adjusting the timing of irradiation by one or more of the lasers based on the calculated average velocity of the particle between each of the plurality of interrogation regions.

91. The non-transitory computer readable storage medium according to any one of clauses 85-90, wherein the non-transitory computer readable storage medium comprises algorithm for calculating the velocity of each particle in the flow stream based on the photodetector signal pulses in three or more of the photodetector channels.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the spirit or scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its spirit and scope. Furthermore, all examples and conditional language recited herein are principally intended to aid the reader in understanding the principles of the disclosure and the concepts contributed by the disclosure to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope and spirit of present disclosure is embodied by the appended claims. In the claims, 35 U.S.C. §112(f) or 35 U.S.C. §112(6) is expressly defined as being invoked for a limitation in the claim only when the exact phrase "means for" or the exact phrase "step for" is recited at the beginning of such limitation in the claim; if such exact phrase is not used in a limitation in the claim, then 35 U.S.C. § 112 (f) or 35 U.S.C. §112(6) is not invoked.

**Claims**

1. A method comprising:

   irradiating a sample comprising a particle in a flow stream of a particle analyzer with a first laser in a first interrogation region and a second laser in a second interrogation region;
   detecting light from the irradiated particle by a first photodetector channel in the first interrogation region and by a second photodetector channel in the second interrogation region;
   calculating a velocity of the particle in the flow stream based on the light detected by the first photodetector and the second photodetector;
   determining a parameter of the particle in the flow stream; and
   calculating a positional velocity of the particle in the flow stream based on the calculated velocity and the parameter of the particle.

2. The method according to claim 1, wherein the positional velocity of the particle is calculated based on the distance of the particle from the center of the flow stream.

3. The method according to any one of claims 1-2, wherein the parameter comprises a center of mass (COM) parameter of the particle in the flow stream.

4. The method according to any one of claims 1-3, wherein the second interrogation region is downstream from the first interrogation region.

5. The method according to any one of claims 1-4, wherein:

   detecting light from the particle by the first photodetector comprises generating a first photodetector signal pulse in response to the light emitted by the particle in the first interrogation region; and
   detecting light from the particle by the second photodetector comprises generating a second photodetector signal pulse in response to the light emitted by the particle in the second interrogation region.

6. The method according to claim 5, wherein the velocity of the particle is calculated by determining an amount of time between the first photodetector signal pulse and the second photodetector signal pulse.

7. The method according to claim 6, wherein determining the amount of time between the first photodetector signal pulse and the second photodetector signal pulse comprises determining a time-to-peak between the first photodetector signal pulse and the second photodetector signal pulse.

8. The method according to any one of claims 6-7, wherein the velocity of the particle in the flow stream is calculated based on:

   the amount of time between the first photodetector signal pulse and the second photodetector signal pulse; and
   a distance between the first interrogation region and the second interrogation region.

9. The method according to claims 1-8, wherein the first laser comprises a trigger laser, and wherein a trigger signal is generated by the first photodetector.

10. The method according to any one of claims 1-9, further comprising determining a laser delay of at least the second laser based on the calculated positional velocity of the particle.

11. The method according to any one of claims 1-10, wherein the method further comprises adjusting one or more parameters of the particle analyzer based on the positional velocity.

12. The method according to claim 11, wherein the parameter comprises a timing of the second laser.

13. The method according to claim 17, further comprising measuring a temperature of the sample, and wherein the one or more parameters of the particle analyze are further adjusted based on the measured temperature.

14. A particle analyzer comprising:

a light source comprising a first laser and a second laser, wherein the light source is configured to irradiate a sample comprising a plurality of particles in a flow stream with the first laser in a first interrogation region and the second laser in a second interrogation region;
a light detection system comprising a photodetector configured to detect light from each irradiated particle in the sample by a first photodetector channel in the first interrogation region and by a second photodetector channel in the second interrogation region; and
a processor comprising memory operably coupled to the processor wherein the memory comprises instructions stored thereon, which when executed by the processor, cause the processor to:

calculate a velocity of the particle in the flow stream based on the light detected by the first photodetector and by the second photodetector;
determine a parameter of the particle in the flow stream; and
calculate a positional velocity of the particle in the flow stream based on the calculated velocity and the parameter of the particle.

15. A non-transitory computer readable storage medium comprising instructions stored thereon for determining drop delay of a plurality of particles in a flow stream in a particle analyzer, the instructions comprising:

algorithm for irradiating a sample comprising a particle in a flow stream of a particle analyzer with a first laser in a first interrogation region and a second laser in a second interrogation region;
algorithm for detecting light from the irradiated particle by a first photodetector channel in the first interrogation region and by a second photodetector channel in the second interrogation region;
algorithm for calculating a velocity of the particle in the flow stream based on the light detected by the first photodetector and by the second photodetector; and
algorithm for determining a parameter of the particle in the flow stream; and
algorithm for calculating a positional velocity of the particle in the flow stream based on the calculated velocity and the parameter of the particle.

EP 4 671 732 A1

| 101 | Irradiate particle in flow stream with a first laser in a first interrogation region to generate a signal pulse in a first photodetector channel |

| 102 | Irradiate particle in flow stream with second laser in a second interrogation region to generate a signal pulse in a second photodetector channel |

| 103a | Calculate velocity of particle based on first and second signal pulses |  | Generate an image of the particle in the flow stream | 103b |

| 104 | Determine a center-of-mass parameter of the particle |

| 105 | Calculate positional velocity of the particle in the flow stream |

| 106 | Determining one or more parameters for the particle analyzer based on calculated positional velocity |

| 107 | Adjust one or more parameters of particle analyzer |

| Increase/Decrease Drop Delay | Increase/Decrease Flow Stream Flow Rate | Adjust Laser Irradiation Timing | Adjust Droplet Charge Timing | Adjust Droplet Drive Frequency |

FIG. 1A

FIG. 1B

EP 4 671 732 A1

FIG. 1C

EP 4 671 732 A1

# FIG. 2

# FIG. 3

FIG. 3 (Cont.)

# FIG. 4

**401**

FLUIDICS SYSTEM
**402**

CONTROL SYSTEM
**406**

**405**

**403**

**407**

DETECTION
STATION
**408**

DETECTION SYSTEM
**404**

**409**

FIG. 5

# FIG. 6A

## FIG. 6B

## FIG. 7

COMPUTER SYSTEM
700

PROCESSING UNIT
710

NETWORK INTERFACE
720

COMPUTER READABLE MEDIUM
730

INPUT/OUTPUT DEVICE INTERFACE
740

MEMORY
770

OPERATING SYSTEM
772

DISPLAY
(OPTIONAL)
750

INPUT DEVICE
(OPTIONAL)
760

DATA STORE
790

EP 4 671 732 A1

Europäisches
Patentamt
European
Patent Office
Office européen
des brevets

**EUROPEAN SEARCH REPORT**

Application Number

EP 25 18 5678

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 130 713 A1 (K K CYBO [JP]) 8 February 2023 (2023-02-08) * figure 1 * * paragraph [0052] - paragraph [0055] * ----- | 1-15 | INV. G01N15/1434 |
| X | US 2010/297759 A1 (KANDA MASAHIKO [JP]) 25 November 2010 (2010-11-25) * figure 4 * * paragraph [0053] - paragraph [0055] * ----- | 1-15 | |

TECHNICAL FIELDS
SEARCHED      (IPC)

G01N

The present search report has been drawn up for all claims

| Place of search | Date of completion of the search | Examiner |
|---|---|---|
| The Hague | 21 October 2025 | Rasmusson, Marcus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 5678

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2025

| Patent document cited in search report | | Publication date | Patent family member(s) | | Publication date |
|---|---|---|---|---|---|
| EP 4130713 | A1 | 08-02-2023 | AU | 2021241070 A1 | 18-08-2022 |
| | | | CA | 3170117 A1 | 30-09-2021 |
| | | | CN | 114829901 A | 29-07-2022 |
| | | | EP | 4130713 A1 | 08-02-2023 |
| | | | JP | 6745559 B1 | 26-08-2020 |
| | | | JP | 6970990 B2 | 24-11-2021 |
| | | | JP | 2021152453 A | 30-09-2021 |
| | | | JP | 2021152518 A | 30-09-2021 |
| | | | JP | 2022009451 A | 14-01-2022 |
| | | | US | 2023039539 A1 | 09-02-2023 |
| | | | WO | 2021192786 A1 | 30-09-2021 |
| US 2010297759 | A1 | 25-11-2010 | JP | 4990746 B2 | 01-08-2012 |
| | | | JP | 2009145213 A | 02-07-2009 |
| | | | US | 2010297759 A1 | 25-11-2010 |
| | | | WO | 2009078307 A1 | 25-06-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63665875
- US 20040142344 A, Gaylord
- US 20080293164 A
- US 20080064042 A
- US 20100136702 A
- US 20110256549 A
- US 20120028828 A
- US 20120252986 A
- US 20130190193 A
- US 20160025735 A
- US 10006852 B
- US 9952076 B
- US 9933341 B
- US 9784661 B
- US 9726527 B
- US 9453789 B
- US 9200334 B
- US 9097640 B
- US 9095494 B
- US 9092034 B
- US 8975595 B
- US 8753573 B
- US 8233146 B
- US 8140300 B
- US 7544326 B
- US 7201875 B
- US 7129505 B
- US 6821740 B
- US 6813017 B
- US 6809804 B
- US 6372506 B
- US 5700692 A
- US 5643796 A
- US 5627040 A
- US 5620842 A
- US 5602039 A
- US 20170299493 A
- US 20200256781 A
- US 20220341838
- US 10663476 B
- US 10620111 B
- US 10613017 B
- US 10605713 B
- US 10585031 B
- US 10578542 B
- US 10578469 B
- US 10481074 B
- US 10302545 B
- US 10145793 B
- US 10113967 B
- US 4987086 A
- US 4498766 A
- US 9423353 B
- US 20170133857 A
- US 20170350803 A
- US 63431803
- US 63465057 B
- US 20210404943 A
- US 7679039 B

**Non-patent literature cited in the description**

- **GAYLORD et al.** *J. Am. Chem. Soc.*, 2001, vol. 123 (26), 6417-6418
- **FENG et al.** *Chem. Soc. Rev.*, 2010, vol. 39, 2411-2419
- **TRAINA et al.** *J. Am. Chem. Soc.*, 2011, vol. 133 (32), 12600-12607
- Flow Cytometry: A Practical Approach. Oxford Univ. Press, 1997
- Flow Cytometry Protocols. Methods in Molecular Biology No. 91. Humana Press, 1997
- ; Practical Flow Cytometry. Wiley-Liss, 1995
- **VIRGO et al.** *Ann Clin Biochem.*, January 2012, vol. 49, 17-28
- **LINDEN**. *Semin Throm Hemost.*, October 2004, vol. 30 (5), 502-11
- **ALISON et al.** *J Pathol*, December 2010, vol. 222 (4), 335-344
- **HERBIG et al.** *Crit Rev Ther Drug Carrier Syst.*, 2007, vol. 24 (3), 203-255
- **DIEBOLD et al.** *Nature Photonics*, 2013, vol. 7 (10), 806-810
- **SCHRAIVOGEL et al.** High-speed fluorescence image-enabled cell sorting. *Science*, 2022, vol. 375 (6578), 315-320